(19) Europäisches Patentamt
European Patent Office
Office européen des brevets

(11) Veröffentlichungsnummer: **0 224 024 B1**

(12) # EUROPÄISCHE PATENTSCHRIFT

(45) Veröffentlichungstag der Patentschrift: **20.06.90**

(51) Int. Cl.⁵: **C07F 7/08**, A01N 55/00

(21) Anmeldenummer: **86114578.7**

(22) Anmeldetag: **21.10.86**

(54) **Neue Silanderivate, Verfahren zu ihrer Herstellung, sie enthaltende Mittel und ihre Verwendung als Schädlingsbekämpfungsmittel.**

(30) Priorität: **26.10.85 DE 3538139**
**31.05.86 DE 3618354**

(43) Veröffentlichungstag der Anmeldung: **03.06.87 Patentblatt 87/23**

(45) Bekanntmachung des Hinweises auf die Patenterteilung: **20.06.90 Patentblatt 90/25**

(84) Benannte Vertragsstaaten: **AT BE CH DE ES FR GB GR IT LI NL**

(56) Entgegenhaltungen: **EP-A- 0 077 962**
**EP-A- 0 202 893**

(73) Patentinhaber: **HOECHST AKTIENGESELLSCHAFT, Postfach 80 03 20, D-6230 Frankfurt am Main 80(DE)**

(72) Erfinder: **Schubert, Hans Herbert, Dr., Geisenheimer Strasse 95, D-6000 Frankfurt am Main 71(DE)**
Erfinder: **Salbeck, Gerhard, Dr., Frankfurter Strasse 34, D-6238 Hofheim am Taunus(DE)**
Erfinder: **Lüders, Walter, Dr., Feldbergstrasse 16, D-6056 Heusenstamm(DE)**
Erfinder: **Knauf, Werner, Dr., Im Kirschgarten 24, D-6239 Eppstein/Taunus(DE)**
Erfinder: **Waltersdorfer, Anna, Dr., Rauenthaler Weg 28, D-6000 Frankfurt am Main(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 224 024 B1

ACTORUM AG

**Beschreibung**

Die bisher bekannten Grundstrukturen insektizider, akarizider und nematozider Wirkstoffe umfassen so unterschiedliche Substanzgruppen wie z.B. die Phosphorsäurederivate, die Chlorkohlenwasserstoffe, die N-Methylcarbamate, die Cyclopropancarbonsäureester und die Benzoylharnstoffe, um nur einige der wichtigsten zu nennen. Erstaunlicherweise sind jedoch zur Zeit (mit zwei Ausnahmen, siehe Japanische Offenlegung Nr. 60 123 491 und EP-A 202 893) noch keinerlei insektizide, akarizide und nematozide Verbindungen beschrieben, die ein das Element Silicium enthaltendes Grundgerüst besitzen (C. Worthing, The Pesticide Manual, 7. Ausgabe, Lavenham 1983; S. Pawlenko, Organo-Silicium-Verbindungen, in: Methoden der org. Chemie (Houben-Weyl), Band XIII/5, Georg Thieme Verlag, Stuttgart 1980; R. Wegler, Chemie der Pflanzenschutz- und Schädlingsbekämpfungsmittel, Bde. 1, 6 und 7, Springer-Verlag, Berlin 1970, 1981). Die gleiche Tatsache gilt für den Herbizid-Sektor und auch die Fungizidforschung hat bisher erst in einem Fall zur Entdeckung einer siliciumhaltigen Basisstruktur für Triazolfungizide geführt (EP-A 68 813).

Es wurden nun neue Wirkstoffe mit einer siliciumhaltigen Grundstruktur auf dem Gebiet der Insektizide, Akarizide und Nematozide mit vorteilhaften Anwendungseigenschaften gefunden.

Gegenstand der vorliegenden Erfindung sind daher die Verbindungen der Formel (I), ihre verschiedenen optischen Isomeren und deren möglichen Gemische,

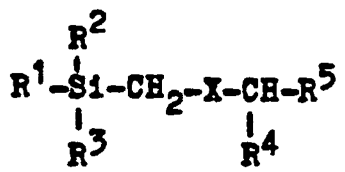

(I),

worin

X = $CH_2$, O, S, $NR^6$,

$R^1$ ($C_2$–$C_{12}$)Alkyl, das durch Halogen oder ($C_1$–$C_4$)Alkoxy substituiert sein kann, Cyclohexyl, das ein- oder zweifach durch ($C_1$–$C_4$)Alkyl, Halogen oder ($C_1$–$C_4$)Alkoxy substituiert sein kann, ($C_4$–$C_8$)-Alkenyl, das ein- oder mehrfach durch Halogen und/oder ein- oder zweifach durch ($C_1$–$C_4$)Alkoxy substituiert sein kann, einen Phenyl- oder Naphthylrest der Formeln (A) oder (B)

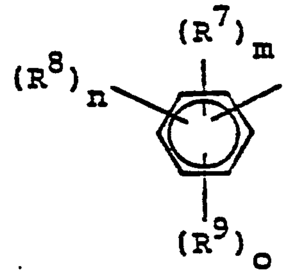

(A)

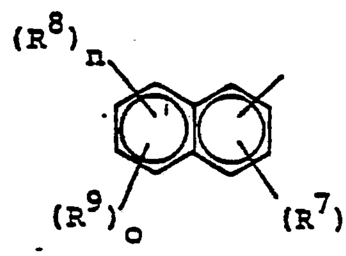

(B)

worin m, n, o die Werte 0 bis 4 in Formel (A) und 0 bis 3 in Formel (B) besitzen mit der Maßgabe, daß $0 \leq m+n+o \leq 4$ ist, und $R^7$, $R^8$, $R^9$ unabhängig voneinander ($C_1$–$C_4$)Alkyl, das durch Hydroxy substituiert sein kann, Tri($C_1$–$C_4$)alkylsilyl, Halogen, Nitro, Cyano, ($C_2$–$C_6$)Alkenyl, ($C_2$–$C_6$)-Alkinyl, Amino, ($C_3$–$C_7$)Cycloalkyl, Phenyl, Phenoxy, ($C_1$–$C_5$)Alkoxy, ($C_2$–$C_4$)-Alkenyloxy, ($C_2$–$C_4$)Alkinyloxy, Hydroxycarbonyl, ($C_1$–$C_4$)-Alklythio, ($C_3$–$C_7$)Cycloalkyloxy, ($C_1$–$C_6$)Alkylcarbonyl, ($C_1$–$C_4$)Alkoxycarbonyl, ($C_2$–$C_4$)Alkenyloxycarbonyl, ($C_3$–$C_5$)Alkinyloxycarbonyl, ($C_1$–$C_4$)-Halogenalkyl, ($C_1$–$C_4$)-Alkoxy($C_1$–$C_4$)-alkyl, ($C_1$–$C_3$)Halogenalkoxy, ($C_1$–$C_3$)Halogenalkylthio, Halogen($C_1$–$C_4$)alkoxy($C_1$–$C_4$)alkyl, ($C_1$–$C_4$)-Alkylthio($C_1$–$C_4$)alkyl, ($C_1$–$C_4$)Alkoxy($C_1$–$C_4$)alkoxy, Halogen($C_1$–$C_4$)alkoxy($C_1$–$C_4$)alkoxy, ($C_2$–$C_4$)Alkenyloxy($C_1$–$C_4$)alkoxy, Halogen($C_2$–$C_4$)alkenyloxy, ($C_1$–$C_4$)Alkoxy($C_1$–$C_4$)alkylthio, ($C_1$–$C_4$)Alkylthio-($C_1$–$C_4$)alkoxy, ($C_1$–$C_4$)Alkylthio($C_1$–$C_4$)alkylthio, Halogen($C_1$–$C_4$)alkoxycarbonyl, Halogen($C_2$–$C_4$)alkenyloxycarbonyl, Di($C_1$–$C_6$alkyl)amino oder zwei der Reste $R^7$, $R^8$, $R^9$ bilden, wenn sie orthoständig zueinanderstehen, einen Methylendioxy-, Ethylendioxy- oder ($C_3$–$C_5$)Alkylenrest,

$R^2$, $R^3$ = unabhängig voneinander ($C_1$–$C_3$)Alkyl, ($C_2$–$C_8$)Alkenyl, Phenyl oder $R^2$ und $R^3$ eine Alkylenkette, die – zusammen mit dem Siliciumatom – einen unsubstituierten oder ($C_1$–$C_4$)alkyl-substituierten Heterocyclus mit vier bis sechs Ringgliedern ergibt,

$R^4$ = –H, –CN, $-CCl_3$, –C≡CH, ($C_1$–$C_4$)Alkyl, F,

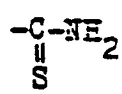

$R^5$ einen Phenylrest der Formel (C)

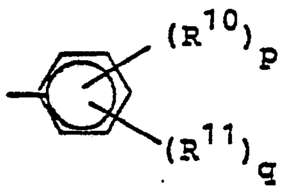

(C)

worin $R^{10}$ und $R^{11}$ – unabhängig voneinander – H, Halogen, $(C_1–C_4)$Alkyl, $(C_1–C_4)$Alkoxy, $(C_1–C_4)$-Halogenalkyl, Phenyl, N-Pyrrolyl oder eine Gruppe der allgemeinen Formel (D)

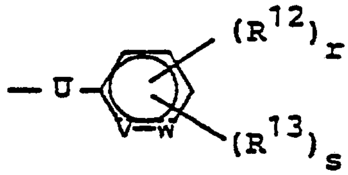

(D)

worin $R^{12}$ und $R^{13}$ – unabhängig voneinander – wiederum H, Halogen, $(C_1–C_4)$Alkyl, $(C_1–C_4)$Alkoxy und $(C_1–C_4)$Halogenalkyl bedeuten können,
U für $CH_2$, CO, O oder S; V, W für CH oder N, wobei nicht beide Reste V, W im selben Molekül N bedeuten dürfen,
p, q = eine ganze Zahl von 0 bis 5 mit der Bedingung,
daß die Summe p + q eine Zahl von 1 bis 5 bedeuten muß,
r, s = 0, 1 oder 2, mit der Bedingung, daß sie Summe von r+s = 0, 1 oder 2 sein muß, und der Bedingung,
daß falls $R^{10}$ oder $R^{11}$ der Gruppierung (D) entspricht,
p, q = 0 oder 1 und p+q = 1 oder 2 bedeuten muß,
einen Pyridylrest der Formel (E)

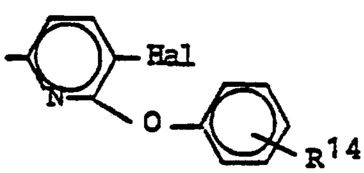

(E)

worin $R^{14}$ = Halogen außer J, $(C_1–C_4)$Alkyl, $(C_1–C_4)$Alkoxy oder $(C_1–C_4)$Halogenalkyl und Hal = Halogen oder H bedeutet,
einen Thienyl- oder Furylrest der Formel (F)

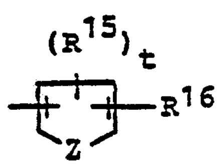

(F)

worin Z = 0, S,
$R^{15}$ = H, Halogen, $(C_1–C_4)$Alkyl, $(C_1–C_4)$Alkoxy, $(C_1–C_4)$Halogenalkyl, CN oder $NO_2$ und
$R^{16}$ = gegebenenfalls substituiertes Benzyl, Propargyl, Allyl bedeutet oder
$R^4$ und $R^5$ – zusammen mit dem sie verbrückenden Kohlenstoffatom – einen Indanyl-, Cyclopentenoyl- oder Cyclopentenyl-Rest und
$R^6$ = H, $(C_1–C_3)$Alkyl oder Phenyl bedeuten, wobei Verbindungen der Formel I, worin
X=O,
$R_1$ = Phenyl, das durch $(C_1–C_5)$Alkyl, $(C_1–C_5)$Alkoxy, $(C_1–C_5)$Alkylthio, $(C_1–C_5)$Alkylendioxy, Halogen, Nitro oder $(C_1–C_5)$Halogenalkoxy substituiert sein kann,
$R^2$, $R^3$ = unabhängig voneinander $(C_1–C_3)$Alkyl,
$R^4$ = H und
$R^5$ = (4-Fluoro-3-phenoxy)phenyl; Pyridyl oder Phenyl, die in 3-Stellung durch einen Phenoxyrest, der durch $(C_1–C_5)$Alkyl, $(C_1–C_5)$Alkoxy, $(C_1–C_5)$Alkylthio, $(C_1–C_5)$Alkylendioxy, Halogen, Nitro oder $(C_1–C_5)$Halogenalkoxy substituiert sein kann, substituiert sind, bedeuten, ausgenommen sind.

Bevorzugte Verbindungen der Formel I sind solche, bei denen

$R^2$, $R^3$ ($C_1$–$C_3$)Alkyl oder zusammen eine Alkylenkette, die mit dem benachbarten Siliciumatom einen vier- bis sechsgliedrigen Ring ergibt, und
$R^4$ H, Cyano oder ($C_1$–$C_4$)Alkyl bedeuten.

Insbesonders bevorzugte Verbindungen I sind dadurch gekennzeichnet, daß $R^1$ = einen Phenylrest der Formel (A) mit $R^7$, $R^8$, $R^9$ = Halogen, ($C_1$–$C_4$)Alkyl, ($C_2$–$C_6$)Alkenyl, ($C_3$–$C_7$)Cycloalkyl, ($C_1$–$C_5$)Alkoxy, ($C_2$–$C_4$)Alkenyloxy, ($C_1$–$C_4$)Halogenalkyl oder ($C_1$–$C_3$)Halogenalkoxy, $R^4$ = Wasserstoff und $R^5$ = einen Rest der Formel C bedeutet, worin $(R^{10})_p$ für H oder 4-Fluor steht und $(R^{11})_q$ in 3-Stellung des Phenylrestes orientiert ist und einen Rest der Formel

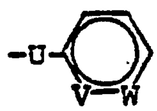

bedeutet.

Auch allgemein bedeuten $R^7$, $R^8$ und $R^9$ bevorzugt Halogen, ($C_1$–$C_4$)Alkyl, ($C_2$–$C_6$)Alkenyl, ($C_3$–$C_7$)-Cycloalkyl, ($C_1$–$C_5$)Alkoxy, ($C_2$–$C_4$)-Alkenyloxy, ($C_1$–$C_4$)Halogenalkyl, ($C_1$–$C_3$)Halogenalkoxy.

Bevorzugt steht der Rest $R^1$ für einen Phenylrest, der 0–3 Substituenten aus der für $R^7$–$R^9$ angegebenen Auswahl besitzt. Besonders bevorzugt sind Phenylreste mit 1–3, insbesondere mit 1–2 Substituenten in m- bzw. p-Stellung, ausgewählt unter den oben beschriebenen Resten $R^7$–$R^9$, wobei Halogen, ($C_1$–$C_4$)Alkyl, ($C_1$–$C_4$)Halogenalkyl, ($C_1$–$C_3$)Halogenalkoxy, ($C_1$–$C_5$)Alkoxy bevorzugt sind.

Spezielle Beispiele für den Rest $R^1$ sind im Anschluß aufgezählt, obgleich die unter die Erfindung fallenden Reste $R^1$ nicht auf die beispielhaft genannten beschränkt sind.

Als spezielle Beispiele für $R^1$ werden genannt:
Ethyl, n-Propyl, i-Propyl, n-Butyl, 3,3-Dimethylbutyl, n-Octyl, N-Decyl, n-Octadecyl, Cyclohexyl, Benzyl, 5-Hexenyl, 7-Octenyl, 1-Naphthyl, Phenyl, 3-Methylphenyl, 4-Methylphenyl, 3,4-Dimethylphenyl, 4-Chlorphenyl, 3-Trifluormethylphenyl, 4-Trifluormethylphenyl, 2-Naphthyl, 3,4-Dichlorphenyl, 4-Nitrophenyl, 4-Methylthiophenyl, 4-Methoxyphenyl, 3,4-Dimethoxyphenyl, 3,4-Methylendioxyphenyl, 4-Difluormethylthiophenyl, 4-Trifluormethylthiophenyl, 3,4-Difluormethylendioxyphenyl, 4-Cyanophenyl, 4-Fluorphenyl, 4-Bromphenyl, 3,4-Difluorphenyl, 3,4-Dibromphenyl, 4-Chlor-3-fluorphenyl, 3-Chlor-4-fluorphenyl, 3-Chlor-4-methylphenyl, 3-Brom-4-chlorphenyl, 4-Difluormethoxyphenyl, 3,4-Bis(difluormethoxy)phenyl, 4-Trifluormethoxyphenyl, 3,4-Bis(trifluormethoxy)phenyl, 4-Methoxy-3,5-dimethylphenyl, 3,4-Trifluorethylendioxyphenyl, 4-tert.-Butylphenyl, 4-Ethylphenyl, 4-Isopropylphenyl, 3,4-Difluorethylendioxyphenyl, 4-Isopropenylphenyl, 4-Vinylphenyl, 4-(2,2-Dichlorvinyl)phenyl, 4-Chlor-3-methylphenyl, 3-Brom-4-fluorphenyl, 3-Fluor-4-bromphenyl, 4-Fluor-3-methylphenyl, 3-Fluor-4-methylphenyl, 3-Brom-4-methylphenyl, 3,4-Diethylphenyl, 3,4-Diisopropylphenyl, 3-Ethyl-4-methylphenyl, 4-Isopropyl-3-methylphenyl, 4-Methylsulfoxyphenyl, 4-Allylphenyl, 4-Acetylphenyl, 4-Carbethoxyphenyl, 4-Ethoxyphenyl, 1,2,3,4-Tetrahydronaphthalin-7-yl, 3,5-Dichlor-4-methylphenyl, Indan-5-yl, 4-Propargylphenyl, 3-Methoxy-4-methylphenyl, 4-Methoxymethylphenyl, 4-(1-Chlorethylen-1-yl)-phenyl, 4-(2-Chlorallyl)phenyl, 4-Isobutyrylphenyl, 4-Methoxycarbonylphenyl, 3-Nitro-4,5-dimethylphenyl, 3-Ethoxy-4-bromphenyl, 3-Chlor-4-methoxyphenyl, 4-Brom-3-chlorphenyl, 3,4-(Di-tert.-butyl)-phenyl, 4-Ethyl-3-methylphenyl, 4-tert.-Butyl-3-methylphenyl, 4-(1,1,2,2-Tetrafluorethoxy)phenyl, 4-(2,2-Dichlorvinyloxy)phenyl, 4-(2,2,2-Trifluorethoxy)phenyl, 4-Pentafluorethoxyphenyl, 4-(Chlordifluormethoxy)phenyl, 4-(Chlorfluormethoxy)phenyl, 4-(Dichlorfluormethoxy)phenyl, 4-(1,1-Difluorethoxy)phenyl, 4-(1,2,2-Trichlor-1,2-difluorethoxy)phenyl, 4-(2-Brom-1,1,2,2-tetrafluorethoxy)phenyl, 4-(2-Propinyloxy)-phenyl, 4-(1-Propinyloxy)phenyl, 4-Allyloxyphenyl, 4-Ethinyloxyphenyl, 4-(2-Chlorethinyl)phenyl, 4-(n-Propoxy)phenyl, 4-Isopropoxyphenyl, 4-Cyclopentyloxyphenyl, 4-(n-Amyloxy)-phenyl, 4-Isobutoxyphenyl, 4-Jodphenyl, 4-Vinyloxyphenyl, 4-Biphenyl, 4-(n-Butoxy)phenyl, 4-(sec.-Butoxy)phenyl, 6-Methyl-2-naphthyl, 4-Phenoxyphenyl, 4-(2-Jod-1,1-difluorethoxy)phenyl, 4-Cyclohexyloxyphenyl, 3-Chlor-4-ethoxyphenyl, 4-Formylphenyl, 4-Ethoxymethylphenyl, 4-Trifluoracetyloxyphenyl, 4-(1-Ethoxyethyl)-phenyl, 4-(1-Methoxyethyl)phenyl, 4-Ethoxy-3-methylphenyl, 4-(2-Methylpropenyl)phenyl, 4-(1,2,2-Trifluorvinyloxy)phenyl, 3,4-Diethoxyphenyl, 4-Ethinylphenyl, 4-Ethoxy-3,5-dimethylphenyl, 4-Ethoxy-3-methoxyphenyl, 4-Ethylthiophenyl, 4-(2,2,2-Trifluorethoxycarbonyl)phenyl, 4(2-Chlorethoxy)phenyl, 4-(1-Buten-2-yl)-phenyl, 4-(2-Buten-2-yl)phenyl, 4-Methoxymethylthiophenyl, 4-(1,2-Dichlorvinyloxy)phenyl, 4-(2,3-Dichlorallyloxy)phenyl, 4-(2-Jod-1-fluorvinyloxy)phenyl, 4-(2-Fluorethoxy)phenyl, 4-(2-Chlor-1,1-difluorethoxy)phenyl, 4-(2-Chlor-1-fluorvinyloxy)phenyl, 4-Isopropylthiophenyl, 4-(2,2-Dichlor-1,1-difluorethoxy)phenyl, 4-(2,2-Dichlor-1-fluorvinyloxy)phenyl, 4-(1,1,2,2-Tetrafluorethoxy)phenyl, 3-Chlor-4-ethoxyphenyl, 4-(Tetrahydro-3-furyloxy)phenyl, 4-Ethylthio, 3-Ethoxyphenyl, 4-Allyloxyphenyl, 4-Methoxymethylthiophenyl, 4-(2,2-Dichlorvinyloxy)phenyl, 4-(1,1,1-trifluorethoxy)phenyl.

$R^2$ und $R^3$ stehen bevorzugt für einen ($C_1$–$C_3$)Alkylrest wie Methyl, Ethyl, i-Propyl und n-Propyl oder $R^2$ und $R^3$ bilden eine Alkylenkette, die – zusammen mit dem Siliciumatom – einen vier- bis sechsgliedrigen Ring wie z.B. Silacylobutan, Sylacyclopentan oder Silacyclohexan ergibt.

$R^4$ steht bevorzugt für Wasserstoff, Cyano oder ($C_1$–$C_4$)Alkyl, besonders bevorzugt für Wasserstoff.

Substituierte Phenylreste für $R^5$ sind für die Erfindung von besonderer Wichtigkeit.

Als typische Beispiele für die Gruppe $R^5$ werden folgende Reste angegeben:

Pentafluorphenyl, 5-Benzyl-3-furyl, 4-Phenoxyphenyl, 3-Phenoxyphenyl, 3-(4-Fluorphenoxy)phenyl, 3-(4-Chlorphenoxy)phenyl, 3-(4-Bromphenoxy)phenyl, 3-(3-Fluorphenoxy)phenyl, 3-(3-Chlorphenoxy)-phenyl, 3-(3-Bromphenoxy)phenyl, 3-(2-Fluorphenoxy)phenyl, 3-(2-Chlorphenoxy)phenyl, 3-(2-Bromphenoxy)phenyl, 3-(4-Methylphenoxy)phenyl, 3-(3-Methylphenoxy)phenyl, 3-(2-Methylphenoxy)-phenyl, 3-(4-Methoxyphenoxy)phenyl, 3-(3-Methoxyphenoxy)phenyl, 3-(2-Methoxyphenoxy)phenyl, 3-(4-Ethoxyphenoxy)phenyl, 3-(Phenylthio)phenyl, 3-(4-Fluorphenylthio)phenyl, 3-(3-Fluorphenylthio)-phenyl, 3-Benzoylphenyl, 3-Benzylphenyl, 3-(4-Fluorbenzyl)phenyl, 3-(4-Chlorbenzyl)phenyl, 3-(3,5-Dichlorphenoxy)phenyl, 3-(3,4-Dichlorphenoxy)phenyl, 3-(4-Chlor-2-methylphenoxy)phenyl, 3-(2-Chlor-5-methylphenoxy)phenyl, 3-(4-Chlor-5-methylphenoxy)phenyl, 3-(4-Ethylphenoxy)phenyl, 3-(3-Chlor-5-methoxyphenoxy)phenyl, 3-(2,5-Dichlorphenoxy)phenyl, 3-(3,5-Dichlorbenzoyl)phenyl, 3-(3,4-Dichlorbenzoyl)phenyl, 3-(4-Methylbenzyl)phenyl, 3-(4-Isopropoxyphenoxy)phenyl, 4-Fluor-3-phenoxyphenyl, 4-Chlor-3-phenoxyphenyl, 4-Brom-3-phenoxyphenyl, 4-Fluor-3-(4-fluorphenoxy)phenyl, 4-Fluor-3-(4-chlorphenoxy)phenyl, 4-Fluor-3-(4-bromphenoxy)phenyl, 4-Fluor-3-(4-methylphenoxy)-phenyl, 4-Fluor-3-(4-methoxyphenoxy)phenyl, 4-Fluor-3-(3-fluorphenoxy)phenyl, 4-Fluor-3-(3-chlorphenoxy)phenyl, 4-Fluor-3-(3-bromphenoxy)phenyl, 4-Fluor-3-(3-methoxyphenoxy)phenyl, 4-Fluor-3-(4-ethoxyphenoxy)phenyl, 4-Fluor-3-(2-fluorphenoxy)phenyl, 3-Methoxy-5-phenoxyphenyl, 2-Fluor-3-phenoxyphenyl, 2-Fluor-3-(4-fluorphenoxy)phenyl, 2-Fluor-3-(3-fluorphenoxy)phenyl, 2-Fluor-3-(2-fluorphenoxy)phenyl, 3-Fluor-5-(4-fluorphenoxy)phenyl, 3-Fluor-5-(3-fluorphenoxy)phenyl, 3-Fluor-5-(2-fluorphenoxy)phenyl, 4-Methyl-3-phenoxyphenyl, 3-Fluor-5-(4-methylphenoxy)phenyl, 3-Fluor-5-(3-methoxyphenoxy)phenyl, 2-Fluor-5-(4-fluorphenoxy)phenyl, 2-Fluor-5-(3-fluorphenoxy)phenyl, 2-Fluor-5-(2-fluorphenoxy)phenyl, 2-Chlor-3-phenoxyphenyl, 3-Fluor-5-phenoxyphenyl, 2-Fluor-5-phenoxyphenyl, 2-Chlor-5-phenoxyphenyl, 2-Brom-5-phenoxyphenyl, 4-Chlor-3-(3-methylphenoxy)phenyl, 4-Chlor-3-(4-fluorphenoxy)phenyl, 3-Chlor-5-phenoxyphenyl, 3-Brom-5-phenoxyphenyl, 4-Brom-3-phenoxyphenyl, 4-Trifluormethyl-3-phenoxyphenyl, 4-Fluor-3-phenylthiophenyl, 4-Fluor-3-benzylphenyl, 3-(2-Pyridyloxy)phenyl, 3-(3-Pyridyloxy)phenyl, 4-Fluor-3-(2-pyridyloxy)phenyl, 4-Chlor-3-(2-pyridyloxy)phenyl, 4-Brom-3-(2-pyridyloxy)phenyl, 4-Methyl-3-(2-pyridyloxy)phenyl, 4-Fluor-3-(3-pyridyloxy)phenyl, 4-Chlor-3-(3-pyridyloxy)phenyl, 4-Brom-3-(3-pyridyloxy)phenyl, 4-Methyl-3-(3-pyridyloxyphenyl), 2-Methyl-3-phenylphenyl, 2-Methyl-3-(N-pyrrolyl)phenyl, 6-Phenoxy-2-pyridyl, 6-(4-Fluorphenoxy)-2-pyridyl, 6-(4-Chlorphenoxy)-2-pyridyl, 6-(4-Bromphenoxy)-2-pyridyl, 6-(4-Methylphenoxy)-2-pyridyl, 6-(4-Methoxyphenoxy)-2-pyridyl, 6-(4-Ethoxyphenoxy)-2-pyridyl, 6-(3-Fluorphenoxy)-2-pyridyl, 6-(3-Chlorphenoxy)-2-pyridyl, 6-(3-Bromphenoxy)-2-pyridyl, 6-(3-Methoxyphenoxy)-2-pyridyl, 6-(2-Fluorphenoxy)-2-pyridyl, 6-(2-Chlorphenoxy)-2-pyridyl, 6-(2-Bromphenoxy)-2-pyridyl, 5-Propargyl-3-furyl, 2-Methyl-5-propargyl-3-furyl, 4-t-Butylphenyl, 4-Methylphenyl, 4-Isopropylphenyl, 4-(2-Chlor-4-trifluormethyl-2-pyridyloxy)phenyl, 4-Cyclohexylphenyl, 4-Difluormethoxyphenyl und 4-Biphenylyl.

Weitere typische Beispiele für die Gruppe

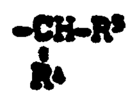

sind:

2-Allyl-3-methylcyclopent-2-en-1-on-4-yl, 4-Phenylindan-2-yl.

Gegenstand der vorliegenden Erfindung sind auch Verfahren zur Herstellung der Verbindungen der allgemeinen Formel (I), dadurch gekennzeichnet, daß man

a) für Verbindungen mit X = $CH_2$ ein Silan der allgemeinen Formel (II),

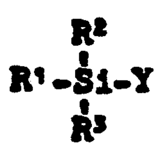

(II)

worin Y eine nucleofuge Abgangsgruppe wie beispielsweise Halogen oder Sulfonat bedeutet, mit einem metallorganischen Reagenz der allgemeinen Formel (III),

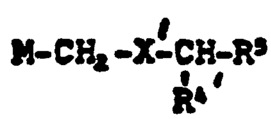

(III)

worin M einem Alkalimetall- oder Erdalkalimetall-Äquivalent, insbesondere Li, Na, K, Mg, X′ einer Methylengruppe und $R^{4\prime}$ H, CN, F oder $(C_1–C_4)$Alkyl entspricht, oder

b) ein Silan der allgemeinen Formel (IV) oder (V)

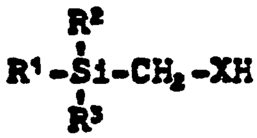 (IV) 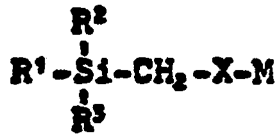 (V)

mit einem Alkylierungsmittel der allgemeinen Formel (VI),

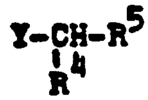 (VI)

gegebenenfalls in Gegenwart einer Base, oder

c) ein Silan der allgemeinen Formel (VII)

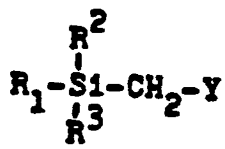 (VII)

mit einer XH-aciden Verbindung des Typs (VIII)

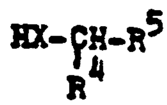 (VIII)

in Gegenwart einer Base oder mit einer metallorganischen Verbindung des Typs (IX)

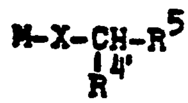 (IX)

oder

d) für Verbindungen mit X = $CH_2$ ein Silan der allgemeinen Formel (X)

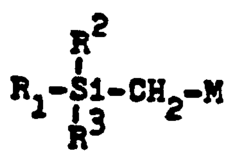 (X)

mit einer Verbindung des Typs (XI)

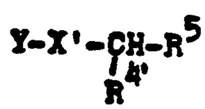 (XI)

oder

e) für Verbindungen mit X = $CH_2$ ein Silan der allgemeinen Formel (XII)

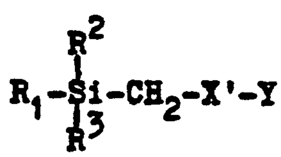 (XII)

mit einer metallorganischen Verbindung der allgemeinen Formel (XIII)

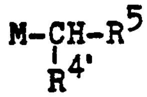 (XIII)

oder

f) ein Silan der allgemeinen Formel (XIV)

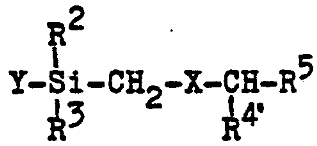 (XIV)

mit einem metallorganischen Reagenz des Typs (XV)

$R^{1\prime}$–M (XV)

wobei $R^{1\prime}$ die Bedeutung von $R^1$ hat mit Ausnahme von Nitro, Cyano, Amino und carbonylhaltigen Resten oder

g) ein Silan der allgemeinen Formel (XVI)

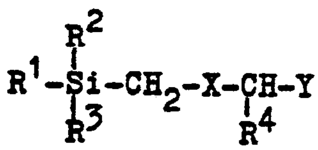 (XVI)

mit einem metallorganischen Reagenz des Typs (XVII)

M–$R^5$ (XVII)

oder

h) für Verbindungen mit X = $CH_2$ ein Silan der allgemeinen Formel (XXX)

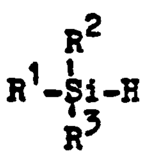 (XXX)

mit einem Olefin der allgemeinen Formel (XXXI)

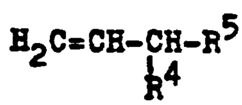

in Gegenwart einer Komplexbindung eines Elementes der VIII. Nebengruppe des Periodensystems als Katalysator oder

i) für Verbindungen mit X ≠ $CH_2$ ein Silan der allgemeinen Formel (XXXII)

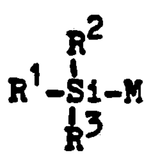 (XXXII)

mit einem Alkylierungsmittel der allgemeinen Formel (XXXIII)

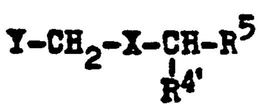 (XXXIII)

umsetzt.

Die als Ausgangsverbindungen beim Herstellungsverfahren a) zu verwendenden Silane der Formel (II) sind zum Teil neu und können nach einem an sich literaturbekannten Verfahren hergestellt werden, indem man von einem Silan der allgemeinen Formel (XVIII), (XIX) oder (XX) ausgeht und die noch fehlenden organischen Reste mit Hilfe geeigneter metallorganischer Reagenzien einführt (siehe Methoden der org. Chemie (Houben-Weyl), Bd. XIII/5, Georg Thieme Verlag, Stuttgart, 1980),

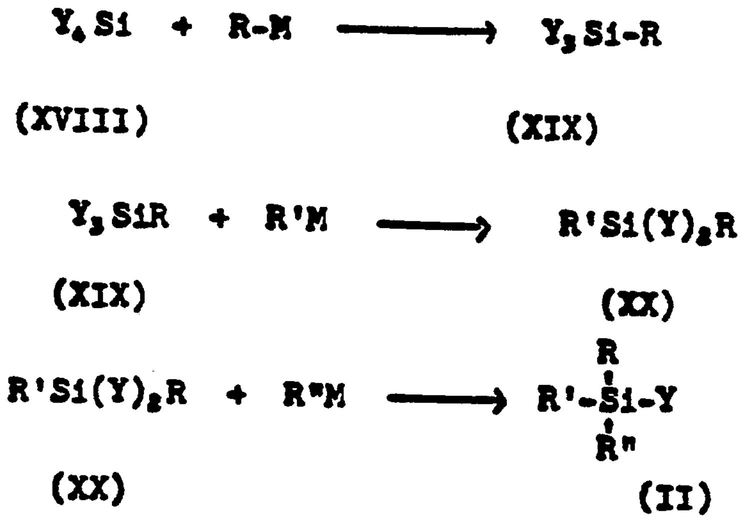
(XVIII) (XIX)
(XIX) (XX)
(XX) (II)

wobei R, R′, R″ den Resten $R^1$, $R^2$, $R^3$ entsprechen und Y und M wie oben definiert sind.

Die als Ausgangsverbindungen beim Herstellungsverfahren a) zu verwendenden metallorganischen Reagenzien der allgemeinen Formel (III) sind zum Teil neu und lassen sich nach an sich literaturbekannten Verfahren herstellen, indem man eine Carbonylverbindung der allgemeinen Formel (XXI),

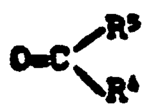 (XXI)

worin $R^4$ und $R^5$ wie oben definiert sind, zunächst nach Reformatskij (s. Methoden der org. Chemie (Houben-Weyl) Bd. XIII/2a, Georg Thieme Verlag, Stuttgart 1973), nach Wittig (s. M. d. org. Chem. (H.-W.), Bd. E1, Georg Thieme Verlag, Stuttgart 1982) oder nach Horner (s. L. Horner, Fortschr. Chem. Forsch. 7/1, 1 (1966/67)) in den entsprechenden α,β-ungesättigten Ester (XXII) überführt,

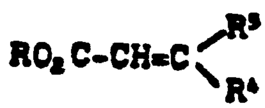 (XXII)

diesen dann nach Standardmethoden (s. Methoden der org. Chemie (Houben-Weyl), Bd. 4/1c und 4/1d, Georg Thieme Verlag, Stuttgart 1980 und 1981) zum Alkohol (XXIII) reduziert,

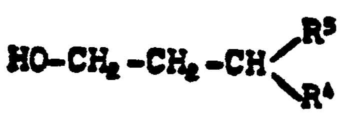 (XXIII)

und diesen dann nach Standardmethoden (s. Methoden der org. Chemie (Houben-Weyl), Bd. 5/3 und 5/4, Georg Thieme Verlag, Stuttgart 1960 und 1962) in ein geeignetes Halogenid (XXIV) umwandelt,

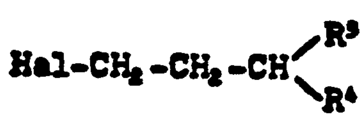 (XXIV)

das schließlich mit einem Alkali- oder Edalkalimetall zu den benötigten metallorganischen Reagenzien vom Typ (III) abreagiert.

Die als Ausgangsverbindungen beim Herstellverfahren b) zu verwendenden Silane der allgemeinen Formel (IV) und (V) sind zum Teil neu und können nach an sich literaturbekannten Verfahren hergestellt werden (s. Methoden der org. Chemie (Houben-Weyl), Bd. XIII/5, Georg Thieme Verlag, Stuttgart 1980), indem man

1) ein Silan der allgemeinen Formel (XXV),

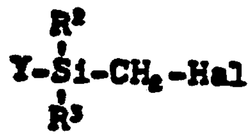

(XXV)

worin $R^2$, $R^3$ und Y wie oben definiert sind und Hal = Br oder Cl sein kann, mit einem metallorg. Reagenz der allgemeinen Formel (XV) umsetzt,

$R^{1'}$–M (XV)

das Zwischenprodukt vom Typ (VII)

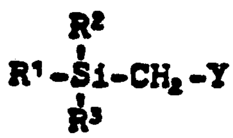

(VII)

Y = Hal

dann nach Standardmethoden (s. Methoden der org. Chemie (Houben-Weyl), Bd. 13/3a, Georg Thieme Verlag, Stuttgart 1982) in das Boran (XXVI) umwandelt,

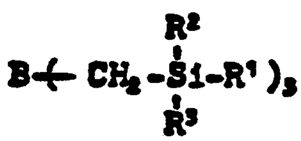

(XXVI)

und dieses schließlich nach literaturbekannten Methoden (s. Methoden der org. Chemie (Houben-Weyl), Bd. 13/3c, Georg Thieme Verlag, Stuttgart 1984) zu den gewünschten Verbindungen (IV) (X = O, S) spaltet.

2) ein Silan der allgemeinen Formel (XXVII),

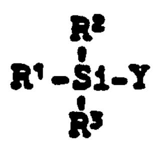

(XXVII)

worin Y = Hal oder

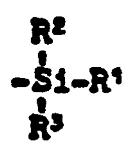

bedeutet, nach literaturbekannten Methoden (s. Methoden der org. Chemie (Houben-Weyl), Bd. XIII/5, Georg Thieme Verlag, Stuttgart 1980) mit einem Alkalimetall in das entsprechende metallierte Silan überführt und dann mit Formaldehyd umsetzt, wobei man Verbindungen des Typs (IV) mit X = O erhält.

3) ein Silan der allgemeinen Formel (XXVIII),

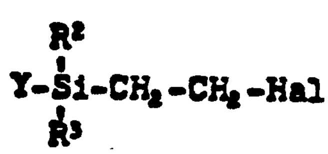

(XXVIII)

worin $R^2$, $R^3$ und Y wie weiter oben definiert sind und Hal = Cl, Br bedeutet, mit einem metallorganischen Reagenz der Formel (XV) umsetzt

$R^{1'}$–M (XV)

und das entstehende Zwischenprodukt (XXIX)

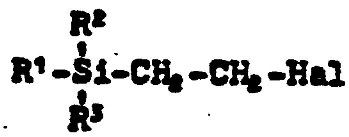 (XXIX)

mit einem Alkalimetall oder Erdalkalimetall zur Reaktion bringt, wobei man Verbindungen des Typs (V) mit X = $CH_2$ erhält.

Die als Ausgangsverbindungen beim Herstellverfahren c) zu verwendenden Silane der allgemeinen Formel (VII)

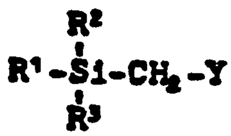 (VII)

lassen sich – für Y = Hal – wie weiter oben bereits beschrieben, durch Umsetzung der Silane (XXV) mit metallorganischen Reagenzien (XV) darstellen.

Die Synthese der Verbindungen (VII) mit Y = Sulfonat erfolgt zweckmäßigerweise durch Veresterung der Alkohole vom Typ (IV).

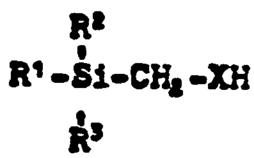 (IV) mit X = O

mit Sulfonsäureresten, die nach den üblichen Methoden (s. Methoden der org. Chemie (Houben-Weyl), Bd. IX, Georg Thieme Verlag, Stuttgart 1955) durchgeführt wird.

Die als Ausgangsverbindungen beim Herstellungsverfahren h) zu verwendenden Silane der allgemeinen Formel XXX sind zum Teil neu und können nach an sich literaturbekannten Methoden hergestellt werden (s. Methoden der org. Chemie (Houben-Weyl), Bd. XIII/5, Georg Thieme Verlag, Stuttgart 1980), indem man

1) ein Silan der allgemeinen Formel XXXIV

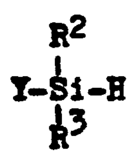 (XXXIV)

mit einem metallorganischen Reagenz der Formel XI

$R^{1'}$–M (XI)

umsetzt, oder

2) ein Silan der allgemeinen Formel II

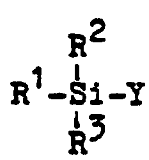 (II)

mit Metallhydriden wie z.B. Natriumhydrid oder Lithiumaluminiumhydrid reduziert.

Die als Ausgangsverbindungen beim Herstellverfahren h) zu verwendenden Olefine der allgemeinen Formel XXXI

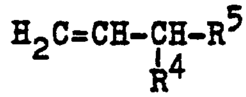 (XXXI)

können nach an sich literaturbekannten Methoden hergestellt werden, indem man ein Olefin der allgemeinen Formel XXXVa bzw. XXXVb

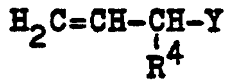 (XXXVa)

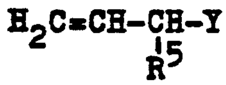 (XXXVb)

mit einem aus der entsprechenden Halogenverbindung erhältlichen metallorganischen Reagenz der allgemeinen Formel XXXVIa bzw. XXXVIb

$M{-}R^5$ (XXXVIa) $M{-}R^{4'}$ (XXXVIb)

umsetzt.

Die Verbindungen der Formel XXXI sind zum Teil neu. Gegenstand der vorliegenden Erfindung sind daher auch Verbindungen der Formel XXXI worin $R^4$ = H und $R^5$ = einen Rest der Formeln

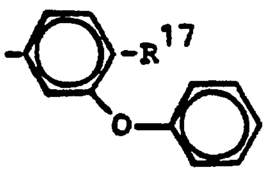

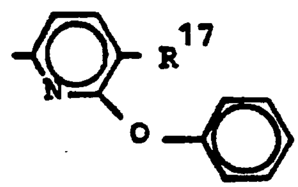

oder 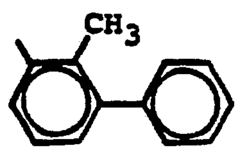

bedeutet.

$R^{17}$ steht für H oder Halogen, wobei Halogen insbesondere Fluor bedeutet.

Die als Ausgangsverbindungen beim Herstellverfahren i) zu verwendenden, metallisierten Silane der allgemeinen Formel XXXII

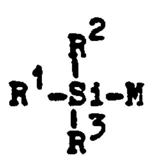 (XXXII)

sind zum Teil neu und lassen sich nach literaturbekannten Methoden aus den Edukten XXVII

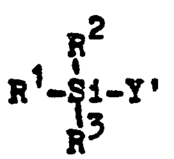 (XXVII),

worin Y' = Hal oder

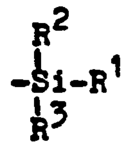

bedeutet, durch Umsetzung mit Alkalimetall erzeugen.

Die als Ausgangsverbindungen beim Herstellverfahren i) zu verwendenden Alkylierungsmittel XXXIII

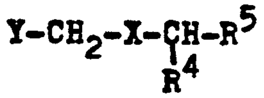 (XXXIII); $X \neq CH_2$

sind zum Teil ebenfalls neu und lassen sich nach literaturbekannten Methoden herstellen (s. z.B. Methoden der org. Chemie (Houben-Weyl), Bd. V/3, Georg Thieme Verlag, Stuttgart 1962), indem man z.B. für X = O einen Alkohol der allgemeinen Formel XXXVII

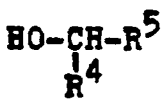 (XXXVII)

in Gegenwart von Paraformaldehyd mit einem Halogenierungsmittel wie z.B. Chlorwasserstoff, Bromwasserstoff oder Thionylchlorid umsetzt.

Die weiteren, als Ausgangsverbindungen zu verwendenden Verbindungen der allgemeinen Formeln (VI), (VIII), (IX), (X), (XI), (XII), (XIII), (XIV), (XV), (XVI) und (XVII) sind ebenfalls zum Teil neu. Ihre Synthese erfolgt nach den im bisherigen Text zitierten Syntheseschritten (s. die bisher zitierte Literatur).

Die genannten Verfahrensvarianten a) und d), e), f), g), i) werden bevorzugt in einem Verdünnungsmittel durchgeführt, dessen Natur von der Art des eingesetzten Metallorganyls abhängt. Als Verdünnungsmittel eignen sich insbesondere aliphatische und aromatische Kohlenwasserstoffe wie z.B. Pentan, Hexan, Heptan, Cyclohexan, Petrolether, Benzin, Ligroin, Benzol, Toluol und Xylol, Ether wie z.B. Diethyl- und Dibutylether, Glykoldimethylether, Diglykoldimethylether, Tetrahydrofuran und Dioxan, und schließlich alle möglichen Gemische aus den zuvor genannten Lösungsmitteln.

Die Reaktionstemperatur liegt bei den obengenannten Verfahrensvarianten zwischen –75°C und +150°C, vorzugsweise zwischen –75°C und +105°C. Die Ausgangsstoffe werden gewöhnlich in äquimolaren Mengen eingesetzt. Ein Überschuß der einen oder andere Reaktionskomponente ist jedoch möglich.

Für die weiter oben genannten Verfahrensvarianten b) und c) gilt im wesentlichen das gleiche wie für die Varianten a) und d)–g). Bei Einsatz der Edukte vom Typ (IV) und (VIII) lassen sich jedoch noch weitere Verdünnungsmittel einsetzen. So eignen sich in diesen Fällen auch Ketone wie Aceton, Methylethyl-, Methylisopropyl-, und Methylisobutylketon, Ester wie Essigsäuremethylester und -ethylester, Nitrile wie z.B. Acetonitril und Propionitril, Amide wie z.B. Dimethylformamid, Dimethylacetamid und N-Methylpyrrolidon, sowie Dimethylsulfoxid, Tetramethylensulfon und Hexamethyl-phosphorsäuretriamid als Verdünnungsmittel. Als Basen finden anorganische Basen wie z.B. Alkali- oder Erdalkalimetall-hydroxide, -hydride, -carbonate oder -hydrogencarbonate, aber auch organische Basen wie z.B. Pyridin, Triethylamin, N,N-Diisopropylethylamin oder Diazabicyclooctan Verwendung.

Die genannte Verfahrensvariante h) wird – im Gegensatz zu allen anderen Syntheseverfahren für Verbindungen der allgemeinen Formel I – bevorzugt ohne Verdünnungsmittel durchgeführt. Jedoch sind auch Lösungsmittel wie Cyclohexan, Petrolether, Benzol, Toluol, Tylol und andere als Reaktionsmedium geeignet. Als Katalysatoren finden Komplexverbindungen der Elemente der VIII. Nebengruppe des Periodensystems Verwendung wie z.B. $H_2PtCl_6$, $Co_2(CO)_8$, $Rh_4(CO)_{12}$, $Ir_4(CO)_{12}$ oder $RhCl(C_6H_5)_3l_3$, (siehe Methoden der org. Chemie (Houben-Weyl), Bd. XIII/5, Georg Thieme Verlag, Stuttgart 1980, S. 51 ff. sowie dort zitierte Literatur). Das Verhältnis von Katalysator zu den umgesetzten Edukten hängt von der Art des Katalysators ab und variiert im Falle von $H_2PtCl_6$ z.B. im Bereich $1:10^7$ bis $1:10^6$.

Die Isolierung und gegebenenfalls Reinigung der Verbindungen der Formel (I) erfolgt nach allgemein üblichen Methoden, z.B. durch Abdampfen des Lösungsmittels (gegebenenfalls unter vermindertem Druck) und anschließendes Destillieren oder Chromatographieren oder durch Verteilen des Rohproduktes zwischen zwei Phasen und die sich daran anschließende übliche Aufarbeitung.

Die Verbindungen der allgemeinen Formel (I) sind in den meisten organischen Lösungsmitteln gut löslich.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:
Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp.
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Naphotettix cincticeps, Lecanium corni, Saissetia oleae, Laodelphax striatellus, Nilaparvata lugens, Aonidiella aurantii, Aspidiotus hederae, Pseudococcus spp., Psylla spp.
Aus der Ordnung der Lepidoptera z.B. Prectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Zarias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia koehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp.
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Weiterhin haben die Verbindungen eine ausgezeichnete Wirkung gegen pflanzenschädigende Nematoden, beispielsweise solche der Gattungen Meloidogyne, Heterodera, Ditylenchus, Aphelenchoides, Radopholus, Globodera, Pratylenchus, Longidorus und Xiphinema.

Gegenstand der Erfindung sind auch Mittel, die die Verbindungen der Formel I neben geeigneten Formulierungshilfsmitteln enthalten.

Die erfindungsgemäßen Mittel enthalten die Wirkstoffe der Formel I, im allgemeinen zu 1–95 Gew.-%. Sie können als Spritzpulver, emulgierbare Konzentrate, versprühbare Lösungen, Stäubemittel oder Granulate in den üblichen Zubereitungen angewendet werden.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium,

2,2'-dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden: Alkylarylsulfonsaure Calzium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxyethylensorbitester.

Stäubemittel erhält man durch Vermahlen des Wirkstoffes mit fein verteilten festen Stoffen, z.B. Talkum, natürlichen Tonen wie Kaolin, Bentonit, Poryphillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen auf die Oberfläche von Trägerstoffen wie Sand, Kaolinite, oder von granuliertem Inertmaterial. Auch können geeignete Wirkstoffe in der für die Herstellung von Düngemittelgranulaten üblichen Weise – gewünschtenfalls in Mischung mit Düngemitteln – hergestellt werden.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, Formamidine, Zinnverbindungen, durch Mikroorganismen hergestellte Stoffe u.a. bevorzugte Mischungspartner sind

1. aus der Gruppe der Phosphorsäureester
Azinphos-ethyl, Azinphos-methyl, 1-(4-Chlorphenyl)-4-(O-ethyl, S-propyl)phosphoryloxypyrazol (TIA-230), Chlorpyrifos, Coumaphos, Demeton, Demeton-S-methyl, Diazinon, Dichlorvos, Dimethoat, Ethoprophos, Etrimfos, Fenitrothion, Fenthion, Heptenophos, Parathion, Parathion-methyl, Phosalon, Pirimiphos-ethyl, Pirimiphos-methyl, Profenofos, Prothiofos, Sulprofos, Triazophos, Trichlorphon.

2. aus der Gruppe der Carbamate
Aldicarb, Bendiocarb, BPMC (2-(1-Methylpropyl)phenyl-methylcarbamat), Butocarboxim, Butoxicarboxim, Carbaryl, Carbofuran, Carbosulfan, Cloethocarb, Isoprocarb, Methomyl, Oxamyl, Primicarb, Promecarb, Propoxur, Thiodicarb.

3. aus der Gruppe der Carbonsäureester
Allethrin, Alphametrin, Bioallethrin, Bioresmethrin, Cycloprothrin, Cyfluthrin, Cyhalothrin, Cypermethrin, Deltamethrin, 2,2-Dimethyl-3-(2-chlor-2-trifluormethylvinyl)cyclopropancarbonsäure-(α-cyano-3-phenyl-2-methylbenzyl)ester (FMC 54800), Fenpropathrin, Fenfluthrin, Fenvalerat, Flucythrinate, Flumethrin, Fluvalinate, Permethrin, Resmethrin, Tralomethrin.

4. aus der Gruppe der Formamidine
Amitraz, Chlordimeform

5. aus der Gruppe der Zinnverbindungen
Azocyclotin, Cyhexatin, Fenbutatinoxid

6. Sonstige
α- und β-Avermectine, Bacillus thuringiensis, Bensultap, Binapacryl, Bisclofentezin, Buprofecin, Cartap, Cyromacin, Dicofol, Endosulfan, Ethoproxyfen, Fenoxycarb, Hexythiazox, 3-[2-(4-Ethoxyphenyl)-2-methyl-propoxymethyl]-1,3-diphenylether (MTI-500), 5-[4-(4-Ethoxyphenyl)-4-methylpentyl]-2-fluoro-1,3-diphenylether (MTI-800), 3-(2-Chlorphenyl)-3-hydroxy-2-(2-phenyl-4-thiazolyl)-propennitril (SN 72129), Thiocyclam, Kernpolyeder- und Granuloseviren.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,00001 und 1 Gew.-% liegen.

Die Anwendung geschieht in einer den Anwendungsformen angepaßten üblichen Weise.

Die erfindungsgemäßen Wirkstoffe eignen sich auch zur Bekämpfung von Ekto- und Endoparasiten vorzugsweise von ektoparasitierenden Insekten auf dem veterinärmedizinischen Gebiet bzw. auf dem Gebiet der Tierhaltung.

Die Anwendung der erfindungsgemäßen Wirkstoffe geschieht hier in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuderns sowie durch parenterale Anwendung in Form beispielsweise der Injektion.

Die erfindungsgemäßen neuen Verbindungen der Formel I können demgemäß auch besonders vorteilhaft in der Viehhaltung (z.B. Rinder, Schafe, Schweine und Geflügel wie Hühner, Gänse usw.) eingesetzt werden. In einer bevorzugten Ausführungsform der Erfindung werden den Tieren die neuen Verbindungen, gegebenenfalls in geeigneten Formulierungen (vgl. oben) und gegebenenfalls mit dem Trinkwasser oder Futter oral verabreicht. Da eine Ausscheidung im Kot in wirksamer Weise erfolgt, läßt sich

auf diese Weise sehr einfach die Entwicklung von Insekten im Kot der Tiere verhindern. Die jeweils geeigneten Dosierungen und Formulierungen sind insbesondere von der Art und dem Entwicklungsstadium der Nutztiere und auch vom Befallsdruck der Insekten abhängig und lassen sich nach den üblichen Methoden leicht ermitteln und festlegen. Die neuen Verbindungen können bei Rindern z.B. in Dosiermengen von 0,1 bis 100 mg/kg Körpergewicht eingesetzt werden.

Nachfolgende Beispiele dienen zur Erläuterung der Erfindung.

A. Formulierungsbeispiele

a) Ein Stäubemittel wird erhalten, indem man 10 Gew.-Teile Wirkstoff und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile Wirkstoff, 65 Gew.-Teile kaolinhaltigen Quarz als Inertstoff, 10 Gew.-Teile ligninsulfonsaures Kalium und 1 Gew.-Teil oleolymethyltaurinsaures Natrium als Netz- und Dispergiermittel mischt und in einer Stiftmühle mahlt.

c) Ein in Wasser leicht dispergierbares Dispersionskonzentrat stellt man her, indem man 20 Gew.-Teile Wirkstoff mit 6 Gew.-Teilen Alkylphenolpolyglykolether (®Triton X 207), 3 Gew.-Teilen Isotridecanolpolyglykolether (8 AeO) und 71 Gew.-Teilen paraffinischem Mineralöl (Siedebereich z.B. ca. 255 bis über 377°C) mischt und in einer Reibkugelmühle auf eine Feinheit von unter 5 Mikron vermahlt.

d) Ein emulgierbares Konzentrat läßt sich herstellen aus 15 Gew.-Teilen Wirkstoff, 75 Gew.-Teilen Cyclohexanon als Lösungsmittel und 10 Gew.-Teilen oxethyliertes Nonylphenol (10 AeO) als Emulgator.

e) Ein Granulat läßt sich herstellen aus 2 bis 15 Gew.-Teilen Wirkstoff und einem inerten Granulatträgermaterial wie Attapulgit, Bimsgranulat und/oder Quarzsand.

B. Chemische Beispiele

Herstellungsvorschriften

a) 12,34 g (50 mMol) 3-(3-Phenoxyphenyl)propylchlorid werden mit 1,22 g (50 mMol) Magnesium in 30 ml wasserfreiem Ether zum entsprechenden Grignardreagenz umgesetzt. Dazu tropft man 11,5 g (≙ 50 mMol) eines Gemisches aus Dimethyl-(4-ethoxyphenyl)silylchlorid (66 Gew.-%) und Dimethyl-(4-ethoxyphenyl)silylbromid (34 Gew.-%) in 10 ml Ether und erhitzt anschließend 40 h unter Rückfluß. Nach Abkühlen auf f 10°C wird das Reaktionsgemisch mit 50 ml Eiswasser und 150 ml Ether versetzt und kräftig verrührt. Nach Abtrennen der wäßrigen Phase wird die org. Schicht nacheinander mit 50 ml Wasser und 50 ml halbgesättigter Kochsalzlösung gewaschen, über $CaCl_2$ getrocknet und eingedampft. Der Rückstand (19,3 g ≙ 99% d.Th.) wird im Kugelrohr destilliert. Man erhält 15,6 g (80% d.Th.) Dimethyl-(4-ethoxyphenyl)-(3-(3-phenoxyphenyl)propyl-silan, das bei einer Ofentemperatur von 220–240°C/0.1 mbar übergeht. $n_D^{23 \cdot 3}$ = 1,5667.

b) Eine Mischung aus 4,16 g (20 mMol) 2,3,4,5,6-Pentafluorallylbenzol und 3,79 g (21 mMol) Dimethyl-(4-ethoxyphenyl)-silan wird mit wenig Hexachlorplatinsäure versetzt und bei Raumtemperatur gerührt. Nach ca. 30 min setzt eine stark exotherme Reaktion ein. Nach Wiedererkalten der Reaktionsmischung wird das Produkt durch Kugelrohrdestillation gereinigt. Man erhält 6,71 g (86%) Dimethyl-(4-ethoxyphenyl)-[3-(2,3,4,5,6-pentafluorphenyl)]-propyl-silan als farbloses Öl, das bei einer Ofentemperatur von 160–165°C/0,2 mbar übergeht. $n_D^{23}$ = 1,4988.

Gemäß diesen Vorschriften lassen sich die nachfolgend aufgeführten Verbindungen der Formel I mit X = $CH_2$ herstellen. Die nachfolgenden Verbindungen mit X = O, S oder $NR^6$ lassen sich beispielsweise nach dem Verfahren b) herstellen.

| Verb. Nr. | $R^1$ | $R^2$ | $R^3$ | X | $R^4$ | $R^5$ | Physikalische Daten |
|---|---|---|---|---|---|---|---|
| 1 | 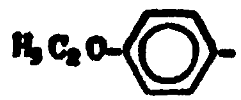 | $CH_3$ | $CH_3$ | $CH_2$ | H | 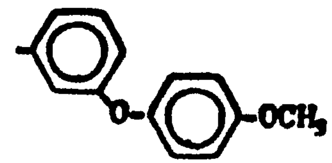 | $n_D^{25} = 1.5670$ |
| 2 | 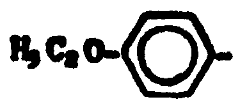 | $CH_3$ | $CH_3$ | O | H | 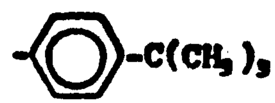 | |
| 3 | 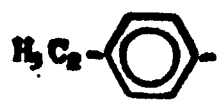 | $CH_3$ | $CH_3$ | $CH_2$ | H | 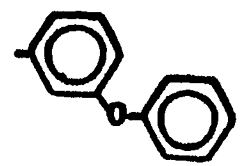 | $n_D^{22} = 1.5621$ |
| 4 | 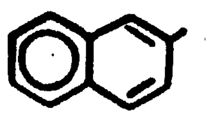 | $CH_3$ | $CH_3$ | $CH_2$ | H | 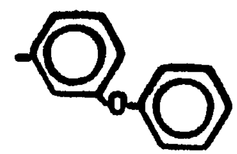 | $n_D^{22} = 1.6042$ |
| 5 | 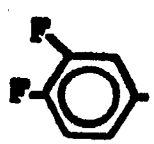 | $CH_3$ | $CH_3$ | $CH_2$ | H | 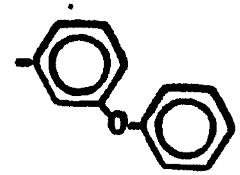 | $n_D^{22} = 1.5480$ |

| Verb. Nr. | $R^1$ | $R^2$ | $R^3$ | X | $R^4$ | $R^5$ | Physikalische Daten |
|---|---|---|---|---|---|---|---|
| 6 | 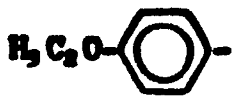 | 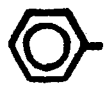 | 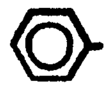 | $CH_2$ | H | 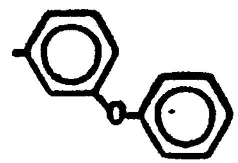 | |
| 7 | 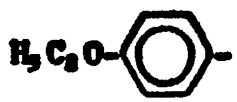 | $CH_3$ | $CH_3$ | O | H | 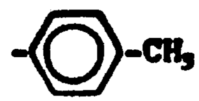 | |
| 8 | 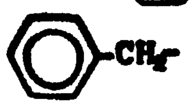 | $CH_3$ | $CH_3$ | $CH_2$ | H | 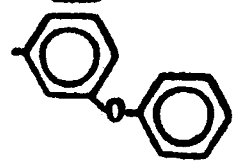 | |
| 9 | 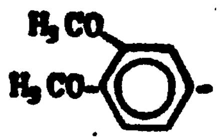 | $CH_3$ | $CH_3$ | $CH_2$ | H | 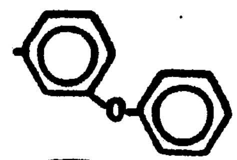 | $n_D^{32} = 1.5691$ |
| 10 | $H_3C-(CH_2)_5-$ | $CH_3$ | $CH_3$ | $CH_2$ | H | 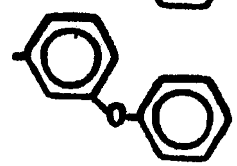 | |

| Verb. Nr. | $R^1$ | $R^2$ | $R^3$ | X | $R^4$ | $R^5$ | Physikalische Daten |
|---|---|---|---|---|---|---|---|
| 11 | 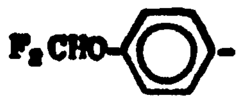 | $CH_3$ | $CH_3$ | O | H | 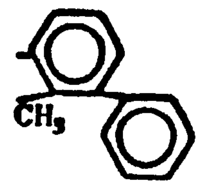 | |
| 12 | 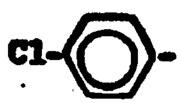 | $CH_3$ | $CH_3$ | $CH_2$ | H | 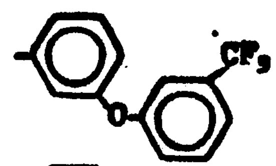 | |
| 13 | 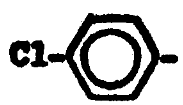 | $CH_3$ | $CH_3$ | O | 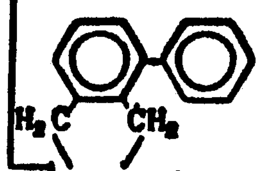 | | |
| 14 | 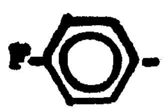 | $CH_3$ | $CH_3$ | $CH_2$ | H | 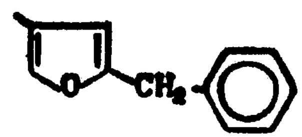 | |

| Verb. Nr. | $R^1$ | $R^2$ | $R^3$ | X | $R^4$ | $R^5$ | Physikalische Daten |
|---|---|---|---|---|---|---|---|
| 15 | 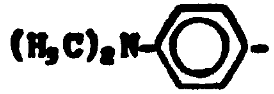 | $CH_3$ | $CH_3$ | O | H | 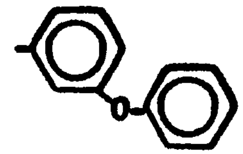 | |
| 16 | 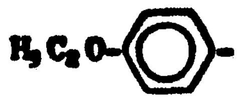 | $CH_3$ | $CH_3$ | O | | 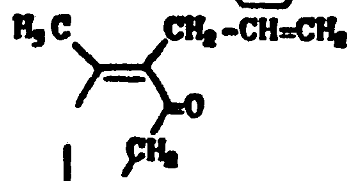 | |
| 17 | 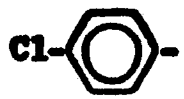 | $CH_3$ | $CH_3$ | O | H | 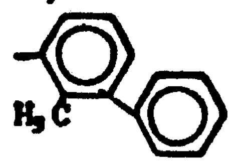 | |
| 18 | 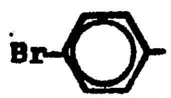 | $CH_3$ | $CH_3$ | $CH_2$ | H | 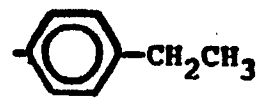 | |
| 19 | 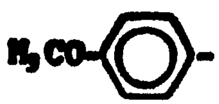 | $CH_3$ | $CH_3$ | O | H | 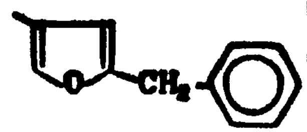 | |
| 20 | 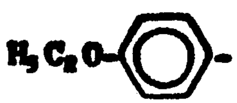 | $CH_3$ | $CH_3$ | $CH_2$ | H | 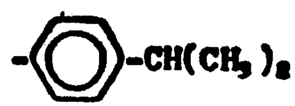 | $n_D^{26} = 1.5302$ |

| Verb. Nr. | $R^1$ | $R^2$ | $R^3$ | X | $R^4$ | $R^5$ | Physikalische Daten |
|---|---|---|---|---|---|---|---|
| 21 | 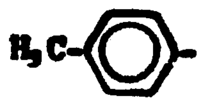 | $CH_3$ | $CH_3$ | O | H | 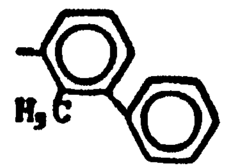 | |
| 22 | 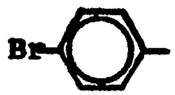 | $CH_3$ | $CH_3$ | $CH_2$ | H | 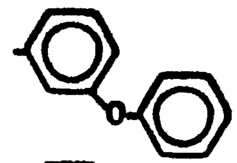 | |
| 23 | 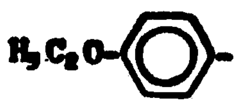 | $CH_3$ | $CH_3$ | O | H | 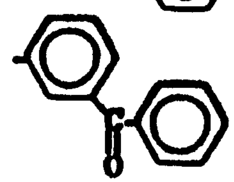 | |
| 24 | 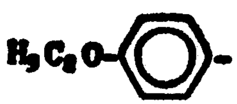 | $CH_3$ | $CH_3$ | $CH_2$ | H | 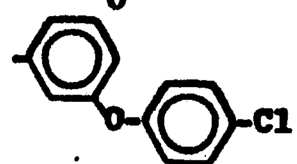 | |
| 25 | 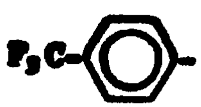 | $CH_3$ | $CH_3$ | $CH_2$ | H | 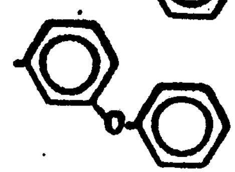 | $n_D^{24}$ = 1.5363 |

| Verb. Nr. | $R^1$ | $R^2$ | $R^3$ | X | $R^4$ | $R^5$ | Physikalische Daten |
|---|---|---|---|---|---|---|---|
| 26 | 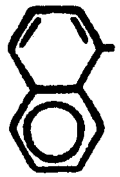 | $CH_3$ | $CH_3$ | $CH_2$ | H | 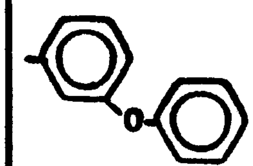 | |
| 27 | 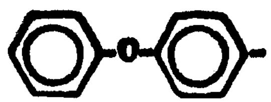 | $CH_3$ | $CH_3$ | $CH_2$ | H | 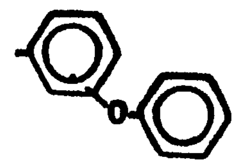 | $n_D^{24}$ = 1.5848 |
| 28 | 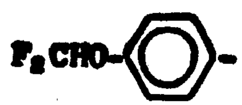 | $CH_3$ | $CH_3$ | $CH_2$ | H | 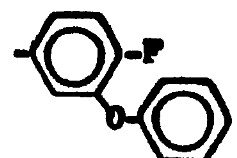 | $n_D^{26}$ = 1.5280 |
| 29 | 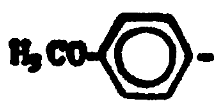 | $CH_3$ | $CH_3$ | $CH_2$ | H | 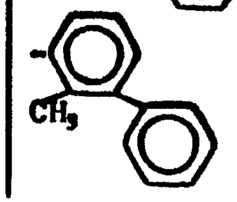 | $n_D^{25}$ = 1.5778 |

| Verb. Nr. | $R^1$ | $R^2$ | $R^3$ | X | $R^4$ | $R^5$ | Physikalische Daten |
|---|---|---|---|---|---|---|---|
| 30 | 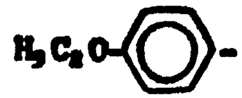 | $CH_3$ | $CH_3$ | $CH_2$ | H | 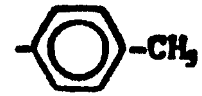 | $n_D^{26}$ = 1.5363 |
| 31 | 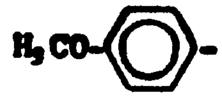 | $CH_3$ | $CH_3$ | O | H | 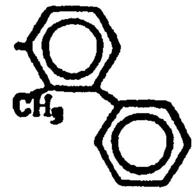 | |
| 32 | 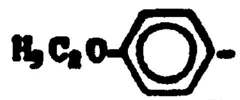 | $CH_3$ | $CH_3$ | O | H | 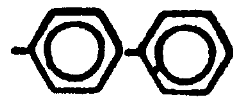 | |
| 33 | 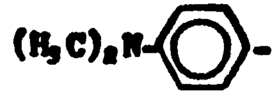 | $CH_3$ | $CH_3$ | $CH_2$ | H | 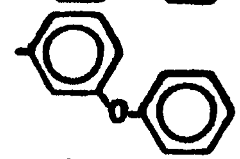 | |
| 34 | 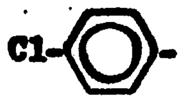 | $CH_3$ | $CH_3$ | O | H | 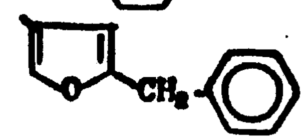 | |
| 35 | 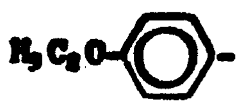 | $C_2H_5$ | $C_2H_5$ | $CH_2$ | H | 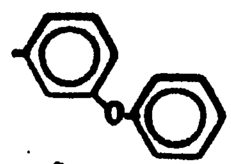 | $n_D^{24}$ = 1.5626 |
| 36 | 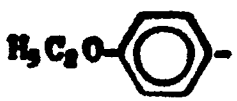 | $CH_3$ | $CH_3$ | O | H | 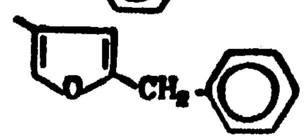 | |

| Verb. Nr. | $R^1$ | $R^2$ | $R^3$ | X | $R^4$ | $R^5$ | Physikalische Daten |
|---|---|---|---|---|---|---|---|
| 37 | 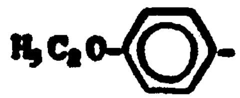 | $CH_3$ | 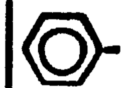 | $CH_2$ | H | 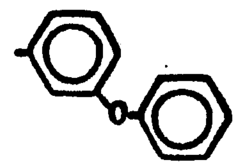 | $n_D^{23}$ = 1.5839 |
| 38 | 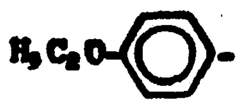 | $CH_2-(CH_2)_3-CH_2$ | | $CH_2$ | H | 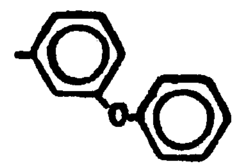 | $n_D^{24}$ = 1.5749 |
| 39 | 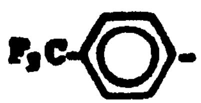 | $CH_3$ | $CH_3$ | O | H | 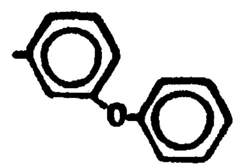 | |

| Verb. Nr. | $R^1$ | $R^2$ | $R^3$ | X | $R^4$ | $R^5$ | Physikalische Daten |
|---|---|---|---|---|---|---|---|
| 40 | 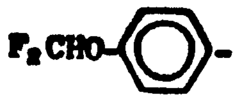 | $CH_3$ | $CH_3$ | $CH_2$ | H | 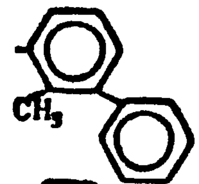 | |
| 41 | 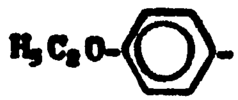 | $CH_2-(CH_2)_2-CH_2$ | | $CH_2$ | H | 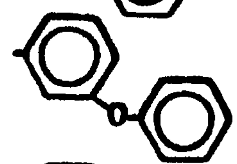 | |
| 42 | 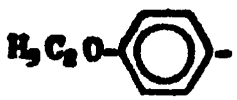 | $CH_3$ | $CH_3$ | $CH_2$ | H | 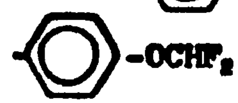 | |
| 43 | 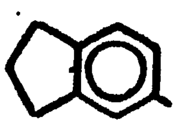 | $CH_3$ | $CH_3$ | $CH_2$ | H | 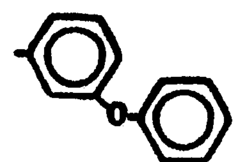 | |
| 44 | 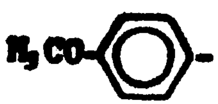 | $CH_3$ | $CH_3$ | $CH_2$ | H | 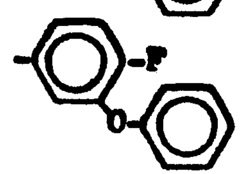 | $n_D^{26} = 1.5608$ |

| Verb. Nr. | $R^1$ | $R^2$ | $R^3$ | X | $R^4$ | $R^5$ | Physikalische Daten |
|---|---|---|---|---|---|---|---|
| 45 | 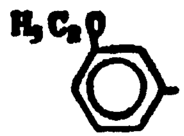 | $CH_3$ | $CH_3$ | $CH_2$ | H | 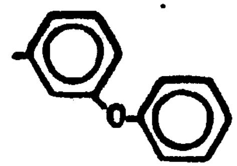 | $n_D^{24,5} = 1.5641$ |
| 46 | 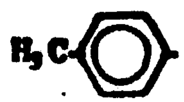 | $CH_3$ | $CH_3$ | $CH_2$ | H | 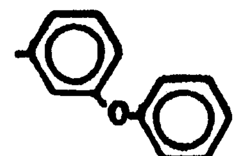 | $n_D^{20} = 1.5692$ |
| 47 | 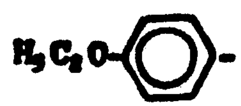 | $CH_3$ | $CH_3$ | $CH_2$ | H | 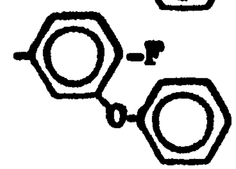 | $n_D^{21} = 1.5550$ |

| Verb. Nr. | $R^1$ | $R^2$ | $R^3$ | X | $R^4$ | $R^5$ | Physikalische Daten |
|---|---|---|---|---|---|---|---|
| <u>48</u> | 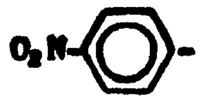 | $CH_3$ | $CH_3$ | $CH_2$ | H | 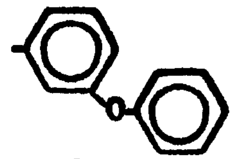 | |
| <u>49</u> | 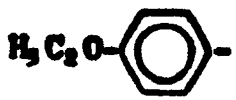 | $CH_3$ | $CH_3$ | S | H | 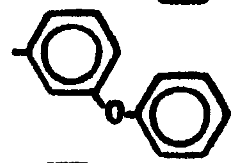 | |
| <u>50</u> | 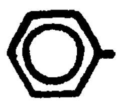 | $CH_3$ | $CH_3$ | $CH_2$ | H | 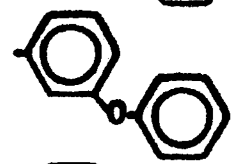 | $n_D^{25}$ = 1.5699 |
| <u>51</u> | 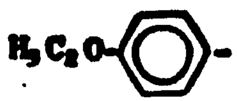 | $CH_3$ | $CH_3$ | $NCH_3$ | H | 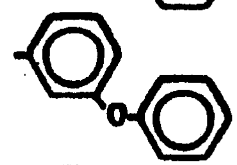 | $n_D^{25}$ = 1.5667 |
| <u>52</u> | 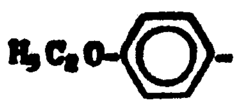 | $CH_3$ | $-CH=CH_2$ | $CH_2$ | H | 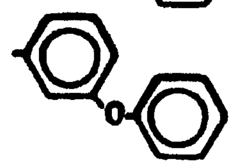 | $n_D^{25}$ = 1.5659 |

| Verb. Nr. | $R^1$ | $R^2$ | $R^3$ | X | $R^4$ | $R^5$ | Physikalische Daten |
|---|---|---|---|---|---|---|---|
| 53 | 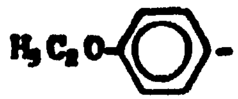 | $CH_3$ | $n-C_3H_7$ | $CH_2$ | H | 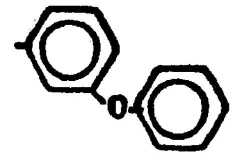 | $n_D^{24} = 1.5603$ |
| 54 | 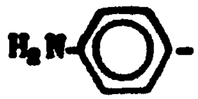 | $CH_3$ | $CH_3$ | $CH_2$ | H | 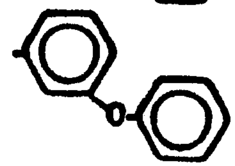 | $n_D^{25} = 1.5891$ |
| 55 | 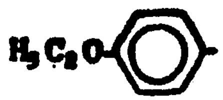 | $CH_2-CH_2-CH_2$ | | $CH_2$ | H | 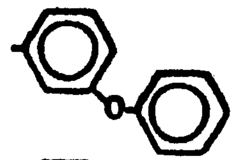 | |
| 56 | 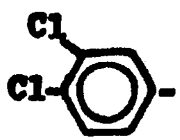 | $CH_3$ | $CH_3$ | $CH_2$ | H | 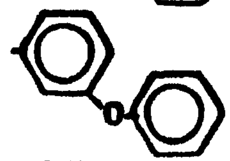 | $n_D^{24} = 1.5796$ |
| 57 | 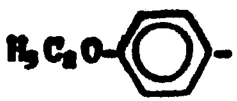 | $CH_3$ | $C_2H_5$ | $CH_2$ | H | 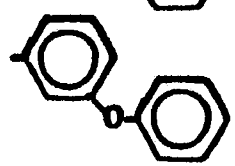 | $n_D^{23} = 1.5614$ |

| Verb. Nr. | $R^1$ | $R^2$ | $R^3$ | X | $R^4$ | $R^5$ | Physikalische Daten |
|---|---|---|---|---|---|---|---|
| 58 | 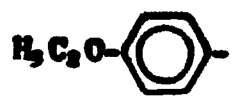 | $CH_3$ | $CH_3$ | $CH_2$ | H | 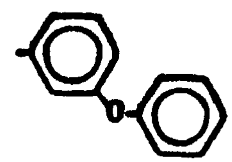 | $n_D^{22,3}$ = 1.5667 |
| 59 | 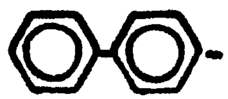 | $CH_3$ | $CH_3$ | $CH_2$ | H | 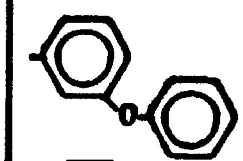 | |
| 60 | 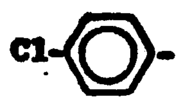 | $CH_3$ | $CH_3$ | $CH_2$ | H | 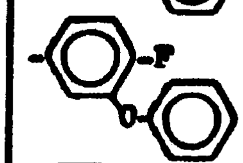 | $n_D^{26}$ = 1.5669 |
| 61 | 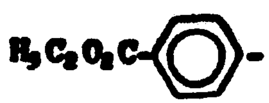 | $CH_3$ | $CH_3$ | $CH_2$ | H | 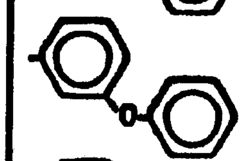 | |
| 62 | 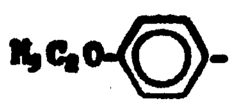 | $CH_3$ | $CH_3$ | $CH_2$ | H | 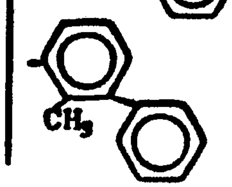 | $n_D^{25}$ = 1.5691 |

| Verb. Nr. | $R^1$ | $R^2$ | $R^3$ | X | $R^4$ | $R^5$ | Physikalische Daten |
|---|---|---|---|---|---|---|---|
| 63 | 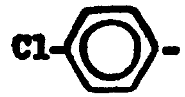 | $CH_3$ | $CH_3$ | O | | 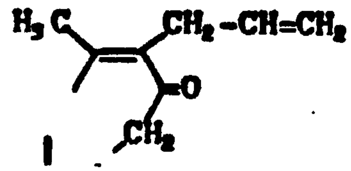 | |
| 64 | 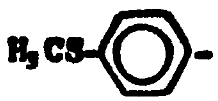 | $CH_3$ | $CH_3$ | $CH_2$ | H | 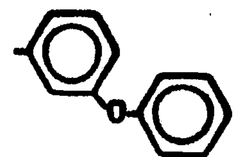 | $n_D^{22} = 1.5940$ |
| 65 | 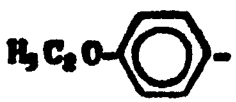 | $CH_3$ | $CH_3$ | O | H | 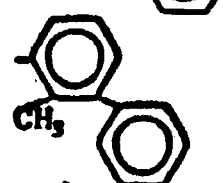 | |
| 66 | 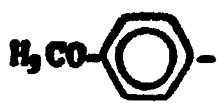 | $CH_3$ | $CH_3$ | $CH_2$ | H | 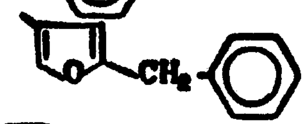 | |
| 67 | 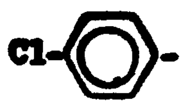 | $CH_3$ | $CH_3$ | $CH_2$ | H | 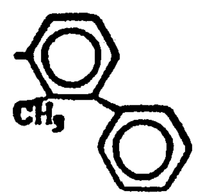 | $n_D^{26} = 1.5838$ |

| Verb. Nr. | $R^1$ | $R^2$ | $R^3$ | X | $R^6$ | $R^5$ | Physikalische Daten |
|---|---|---|---|---|---|---|---|
| 68 | $(H_3C)_2CH-$ | $CH_3$ | $CH_3$ | $CH_2$ | H | 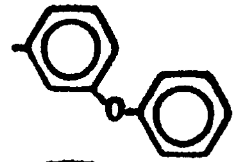 | |
| 69 | 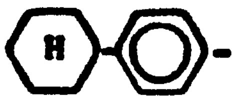 | $CH_3$ | $CH_3$ | $CH_2$ | H | 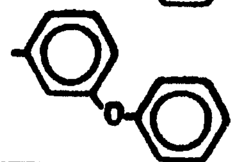 | |
| 70 | 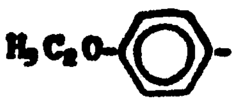 | $CH_3$ | $CH_3$ | O | | 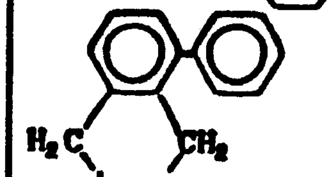 | |
| 71 | 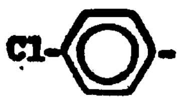 | $CH_3$ | $CH_3$ | O | H | 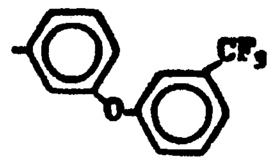 | |
| 72 | 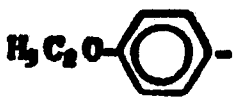 | $CH_3$ | $CH_3$ | O | H | 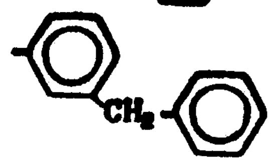 | |
| 73 | 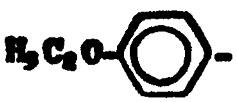 | $CH_3$ | $CH_3$ | $CH_2$ | H | 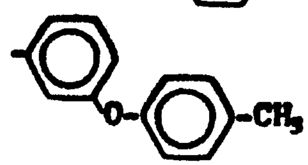 | |

| Verb. Nr. | $R^1$ | $R^2$ | $R^3$ | X | $R^4$ | $R^9$ | Physikalische Daten |
|---|---|---|---|---|---|---|---|
| 74 | 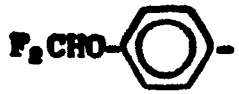 | $CH_3$ | $CH_3$ | $CH_2$ | H | 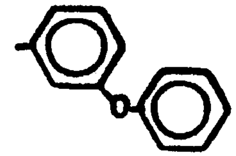 | $n_D^{25}$ = 1.5462 |
| 75 | 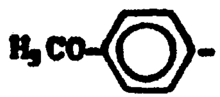 | $CH_3$ | $CH_3$ | $CH_2$ | H | 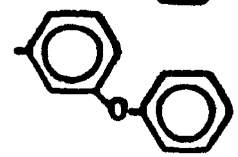 | $n_D^{24}$ = 1.5650 |
| 76 | 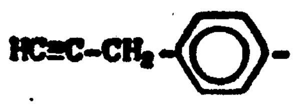 | $CH_3$ | $CH_3$ | $CH_2$ | H | 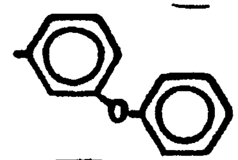 | |
| 77 | 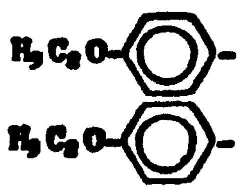 | $CH_3$ | $CH_3$ | $NCH_3$ | H | 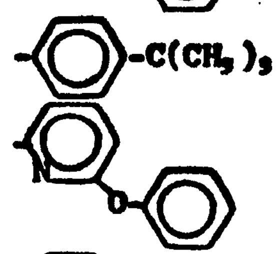 | |
| 78 | | $CH_3$ | $CH_3$ | $CH_2$ | H | | $n_D^{26}$ = 1.5620 |
| 79 | 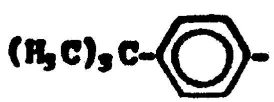 | $CH_3$ | $CH_3$ | $CH_2$ | H | 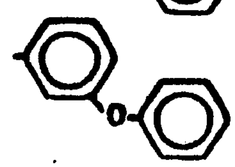 | $n_D^{24}$ = 1.5573 |

| Verb. Nr. | $R^1$ | $R^2$ | $R^3$ | X | $R^4$ | $R^5$ | Physikalische Daten |
|---|---|---|---|---|---|---|---|
| 80 | 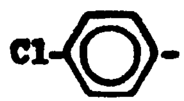 | $CH_3$ | $CH_3$ | $CH_2$ | H | 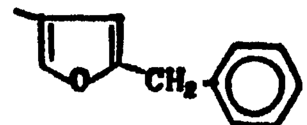 | |
| 81 | 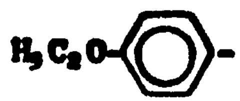 | $CH_3$ | $CH_3$ | $CH_2$ | H | 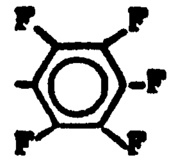 | $n_D^{23}$: 1,4938 |
| 82 | 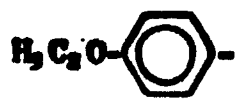 | $CH_3$ | $CH_3$ | O | H | 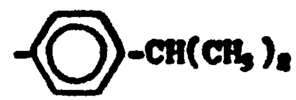 | |
| 83 | 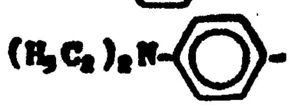 | $CH_3$ | $CH_3$ | $CH_2$ | H | 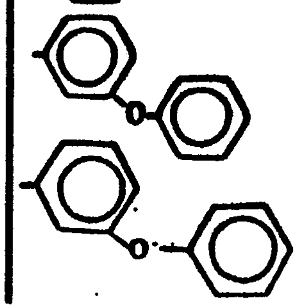 | |
| 84 | 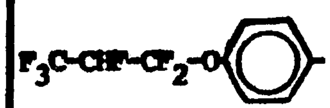 | $CH_3$ | $CH_3$ | $CH_2$ | H | | |

| Verb. Nr. | $R^1$ | $R^2$ | $R^3$ | X | $R^4$ | $R^5$ | Physikalische Daten |
|---|---|---|---|---|---|---|---|
| 85 | 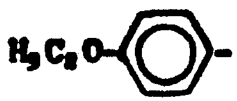 | $CH_3$ | $CH_3$ | O | H | 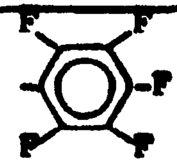 | |
| 86 | 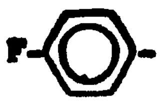 | $CH_3$ | $CH_3$ | O | H | 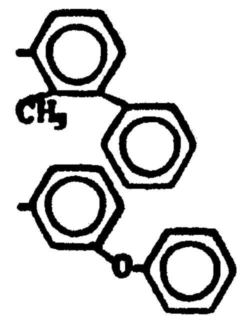 | |
| 87 | 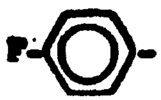 | $CH_3$ | $CH_3$ | $CH_2$ | H | | $n_D^{19} = 1.5623$ |
| 88 | 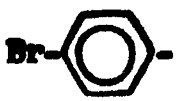 | $CH_3$ | $CH_3$ | $CH_2$ | H | 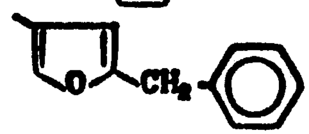 | |

| Verb. Nr. | $R^1$ | $R^2$ | $R^3$ | X | $R^6$ | $R^9$ | Physikalische Daten |
|---|---|---|---|---|---|---|---|
| 89 | 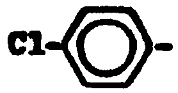 | $CH_3$ | $CH_3$ | $CH_2$ | H | 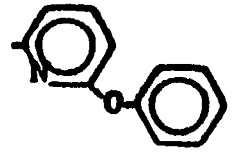 | $n_D^{26}$ = 1.5731 |
| 90 | 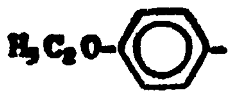 | $CH_3$ | $CH_3$ | $NC_2H_5$ | H | 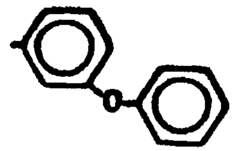 | $n_D^{25}$ = 1.5595 |
| 91 | 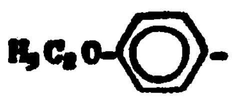 | $CH_3$ | $CH_3$ | $CH_2$ | H | 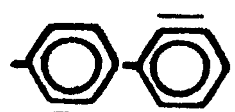 | |
| 92 | 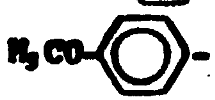 | $CH_3$ | $CH_3$ | $CH_2$ | H | 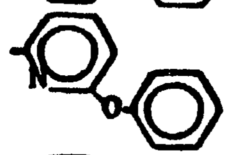 | |
| 93 | 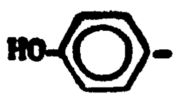 | $CH_3$ | $CH_3$ | $CH_2$ | H | 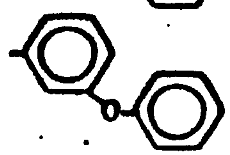 | $n_D^{22}$ = 1.5751 |

| Verb. Nr. | R¹ | R² | R³ | X | R⁴ | R⁵ | Physikalische Daten |
|---|---|---|---|---|---|---|---|
| 94 | $H_5C_2$- | $CH_3$ | $CH_3$ | $CH_2$ | H | 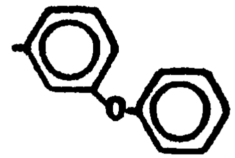 | |
| 95 | 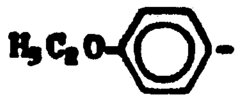 | $CH_3$ | $CH_3$ | $CH_2$ | H | 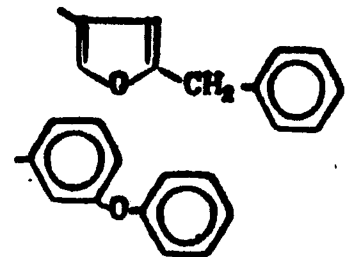 | |
| 96 | 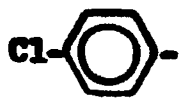 | $CH_3$ | $CH_3$ | $CH_2$ | H | | $n_D^{22}$ = 1.5778 |
| 97 | 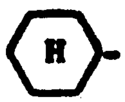 | $CH_3$ | $CH_3$ | $CH_2$ | H | 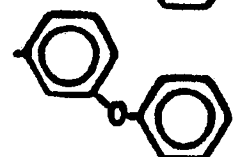 | |
| 98 | 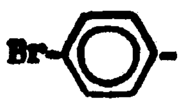 | $CH_3$ | $CH_3$ | $CH_2$ | H | 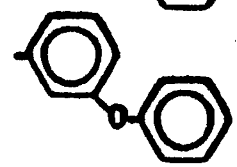 | $n_D^{20}$ = 1.5879 |

| Verb. Nr. | $R^1$ | $R^2$ | $R^3$ | X | $R^4$ | $R^5$ | Physikalische Daten |
|---|---|---|---|---|---|---|---|
| 99 | $H_3C(CH_2)_{17}$ | $CH_3$ | $CH_3$ | $CH_2$ | H | 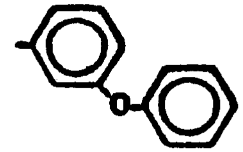 | |
| 100 | 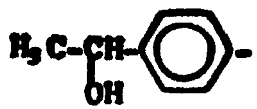 | $CH_3$ | $CH_3$ | $CH_2$ | H | 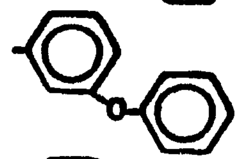 | $n_D^{22}$ = 1.5740 |
| 101 | 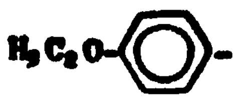 | $CH_3$ | $CH_3$ | S | H | 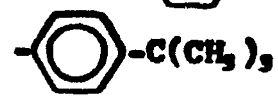 | |
| 102 | $(H_3C)_3C-CH_2-CH_2-$ | $CH_3$ | $CH_3$ | $CH_2$ | H | 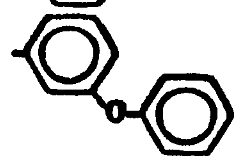 | |
| 103 | 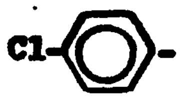 | $CH_3$ | $CH_3$ | O | $CH_3$ | 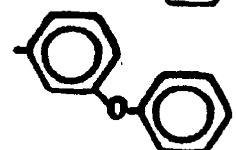 | |
| 104 | 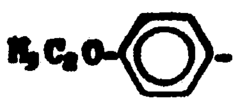 | $CH_3$ | $CH_3$ | O | $CH_3$ | 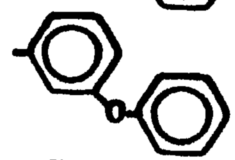 | |
| 105 | $H_3C(CH_2)_7$ | $CH_3$ | $CH_3$ | $CH_2$ | H | 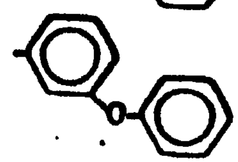 | $n_D^{32}$ = 1.5150 |

| Verb. Nr. | $R^1$ | $R^2$ | $R^3$ | X | $R^4$ | $R^5$ | Physikalische Daten |
|---|---|---|---|---|---|---|---|
| 106 | 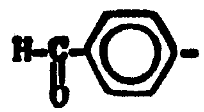 | $CH_3$ | $CH_3$ | $CH_2$ | H | 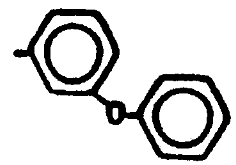 | $n_D^{23} = 1.5842$ |
| 107 | 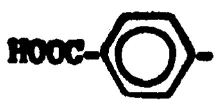 | $CH_3$ | $CH_3$ | $CH_2$ | H | 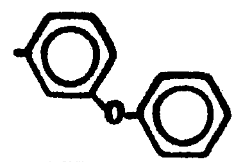 | |
| 108 | 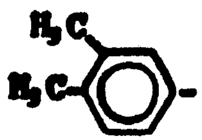 | $CH_3$ | $CH_3$ | $CH_2$ | H | 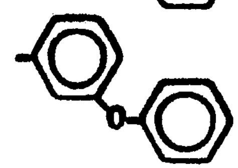 | |

| Verb. Nr. | $R^1$ | $R^2$ | $R^3$ | X | $R^4$ | $R^5$ | Physikalische Daten |
|---|---|---|---|---|---|---|---|
| 109 | 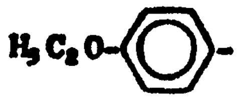 | $CH_3$ | $CH_3$ | O | $-C{\equiv}CH$ | 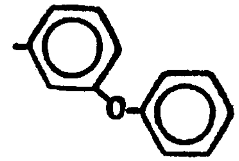 | |
| 110 | 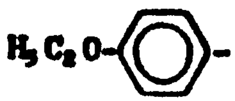 | $CH_3$ | $CH_3$ | $CH_2$ | CN | 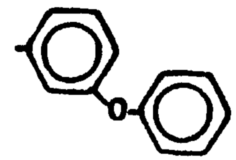 | |
| 111 | 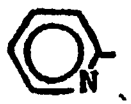 | $CH_3$ | $CH_3$ | $CH_2$ | H | 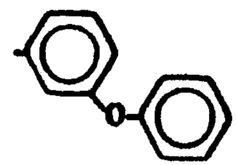 | |
| 112 | 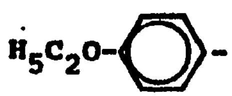 | $CH_3$ | $CH_3$ | $CH_2$ | H | 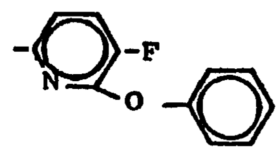 | |
| 113 | 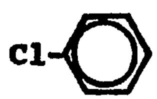 | $CH_3$ | $CH_3$ | $CH_2$ | H | " | |
| 114 | 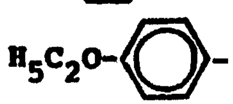 | $CH_3$ | $CH_3$ | $CH_2$ | F | 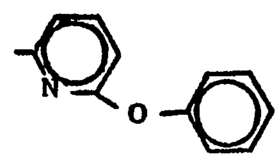 | |

| Verb. Nr. | $R^1$ | $R^2$ | $R^3$ | X | $R^4$ | $R^5$ | Physikalische Daten |
|---|---|---|---|---|---|---|---|
| 115 | 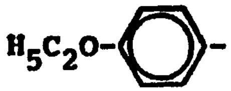 | $CH_3$ | $CH_3$ | $CH_2$ | F | 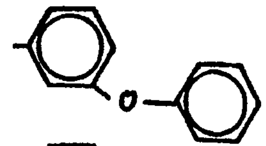 | |
| 116 | " | $CH_3$ | $CH_3$ | $CH_2$ | F | 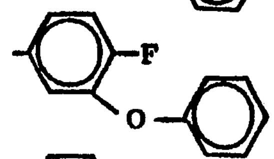 | |
| 117 | " | $CH_3$ | $CH_3$ | $CH_2$ | F | 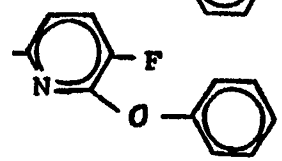 | |
| 118 | " | $CH_3$ | $CH_3$ | $CH_2$ | H | 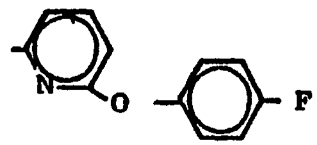 | |
| 119 | " | $CH_3$ | $CH_3$ | $CH_2$ | H | 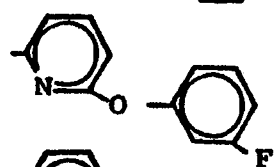 | |
| 120 | " | $CH_3$ | $CH_3$ | $CH_2$ | H | 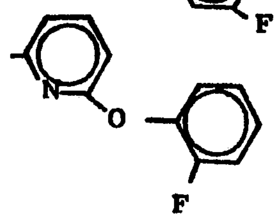 | |

C. Biologische Beispiele

Beispiel 1

Mit Kundebohnenblattlaus (Aphis craccivora) stark besetzte Ackerbohnen (Vicia faba) wurden mit wäßrigen Verdünnungen von Emulsionskonzentraten mit 1000 ppm Wirkstoffgehalt bis zum Stadium des beginnenden Abtropfens besprüht. Nach 3 Tagen betrug die Mortalität jeweils 100% bei den Präparaten mit den Wirkstoffen der Beispiele 5, 28, 44, 46, 47, 58, 60, 64, 74, 75, 78, 96 und 98.

Beispiel 2

Mit Weißer Fliege (Trialeurodes Vaporarium) stark besetzte Bohnenpflanzen (Phaseolus vulgaris) wurden mit wäßrigen Verdünnungen von Emulsionskonzentraten (1000 ppm Wirkstoffgehalt) bis zum beginnenden Abtropfen gespritzt. Nach Aufstellen der Pflanzen im Gewächshaus erfolgte nach 14 Tagen die mikroskopische Kontrolle, mit dem Ergebnis jeweils 100%iger Mortalität bei den Präparaten mit den Wirkstoffen der Beispiele 28, 46, 47, 58, 78 und 89.

Beispiel 3

Versuchsdurchführung: analog Beispiel 2
Versuchstier: Tetranychus urticae (Bohnenspinnmilbe)
Versuchspflanze: Phaseolus vulgaris (Buschbohne)
Aufwandmenge: 1000 ppm Wirkstoff in der Spritzbrühe
Die nach 8 Tagen ermittelte Wirksamkeit erbrachte für die Verbindung 28 100% Mortalität.

Beispiel 4

Mit Citrus-Schmierlaus (Pseudococcus citri) stark befallene Bohnenpflanzen (Phaseolus vulgaris) wurden mit wäßrigen Verdünnungen von Emulsionskonzentraten (jeweils 1000 ppm Wirkstoff in der Spritzbrühe) bis zum Stadium beginnenden Abtropfens besprüht.

Nach einer Standzeit von 7 Tagen im Gewächshaus bei 20–25°C erfolgte die Kontrolle.

100% Mortalität wurde für die Verbindungen gemäß Beispiel 5, 28, 44, 46, 47, 58, 60, 64, 74, 75, 78, 96 und 98 festgestellt.

Beispiel 5

Baumwollwanzen (Oncopeltus fasciatus) wurden mit wäßrigen Verdünnungen von Emulsionskonzentraten (jeweils 1000 ppm Wirkstoff in der Spritzbrühe) der Wirkstoffe aus Beispiel 5, 28, 44, 46, 47, 58, 60, 64, 74, 75, 78, 96 und 98 behandelt.

Anschließend wurden die Wanzen in mit luftdurchlässigen Deckeln versehenen Behältern bei Zimmertemperatur aufgestellt.

5 Tage nach der Behandlung wurde die Mortalität festgestellt und betrug in jedem Einzelfall 100%.

Beispiel 6

Die Bodeninnenseiten von mit künstlichem Nährmedium beschichteten Petrischalen wurden nach dem Erstarren des Futterbreis mit jeweils 3 ml einer 2000 ppm an Wirkstoff enthaltenden, wäßrigen Emulsion besprüht. Nach Abtrocknen des Spitzbelages und Einsetzen von 10 Larven des gemeinen Baumwollwurmes (Prodenia litura) wurden die Schalen 7 Tage bei 21°C aufbewahrt und dann der Wirkungsgrad der jeweiligen Verbindung (ausgedrückt in % Mortalität) bestimmt. Die Verbindungen 5, 28, 44, 46, 47, 58, 60, 74, 75, 78, 87, 89, 96 und 98 ergaben in diesem Test eine Wirksamkeit von jeweils 100%.

Beispiel 7

Blätter der Bohne (Phaseolus vulgaris) wurden mit einer wäßrigen Emulsion der Verbindung aus Beispiel 68 in einer Konzentration von 1000 ppm (bezogen auf Wirkstoff) behandelt und zu gleich behandelten Larven des Mexikanischen Bohnenkäfers (Epilachna varivestis) in Beobachtungskäfige gestellt. Eine Auswertung nach 48 Stunden ergab eine 100% Abtötung der Versuchstiere. Als gleichermaßen wirksam erwiesen sich die Verbindungen gemäß Beispiel 28, 44, 47 und 60.

Beispiel 8

Auf die Innenseite des Deckels und des Bodens einer Petrischale wurden mittels einer Pipette 1 ml aus Beispiel 68 als Wirkstoff in Aceton mit einer Konzentration von 1000 ppm gleichmäßig aufgetragen und bis zur vollständigen Verdunstung des Lösungsmittels die Schale offen belassen. Danach wurden je 10

Stubenfliegen (Musca domestica) in die Petrischalen gesetzt, die Schalen mit dem Deckel verschlossen und nach 3 Stunden eine 100% Abtötung der Versuchstiere festgestellt. Ebenso wirksam erwiesen sich die Verbindungen gemäß Beispiel 5, 28, 44, 47, 60 und 75.

Beispiel 9

Mit Hilfe einer Pipette wurde auf die Innenseite des Deckels und des Bodens einer Petrischale jeweils 1 ml einer Wirkstofflösung in Aceton mit einer Konzentration von 2000 ppm gleichmäßig aufgetragen. Nach vollständigem Verdunsten des Lösungsmittels wurden je Petrischale 10 Larven (L4) der deutschen Schabe (Blatella germanica) eingesetzt und die Schalen mit den Deckeln verschlossen. Nach 72 h wurde die Wirkung (ausgedrückt in % Mortalität) festgestellt. Die Verbindungen 1, 3, 5, 25, 28, 44, 46, 47, 58, 60, 64, 74, 75, 87, 96 und 98 ergaben in diesem Test eine Wirksamkeit von jeweils 100%.

**Patentansprüche für die Vertragsstaaten: BE, CH, DE, FR, GB, GR, IT, LI, NL**

1. Verbindungen der Formel I, ihre optischen Isomeren und deren Gemische,

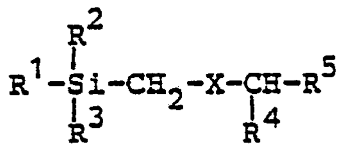 (I),

worin
X = $CH_2$, O, S, $NR^6$,
$R^1$ ($C_2$–$C_{12}$)Alkyl, das durch Halogen oder ($C_1$–$C_4$)Alkoxy substituiert sein kann, Cyclohexyl, das ein- oder zweifach durch ($C_1$–$C_4$)Alkyl, Halogen oder ($C_1$–$C_4$)Alkoxy substituiert sein kann, ($C_4$–$C_8$)Alkenyl, das ein- oder mehrfach durch Halogen und/oder ein- oder zweifach durch ($C_1$–$C_4$)Alkoxy substituiert sein kann, einen Phenyl- oder Naphthylrest der Formeln (A) oder (B)

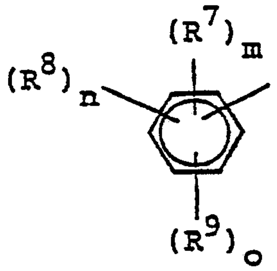 (A)

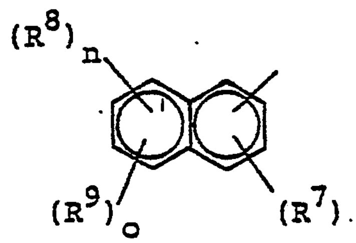 (B),

worin m, n, o die Werte 0 bis 4 in Formel (A) und 0 bis 3 in Formel (B) besitzen mit der Maßgabe, daß $0 \leq m+n+o \leq 4$ ist, und $R^7$, $R^8$, $R^9$ unabhängig voneinander ($C_1$–$C_4$)Alkyl, das durch Hydroxy substituiert sein kann, Tri($C_1$–$C_4$)alkylsilyl, Halogen, Nitro, Cyano, ($C_2$–$C_6$)Alkenyl, ($C_2$–$C_6$)-Alkinyl, Amino, ($C_3$–$C_7$)Cycloalkyl, Phenyl, Phenoxy, ($C_1$–$C_5$)Alkoxy, ($C_2$–$C_4$)-Alkenyloxy, ($C_2$–$C_4$)Alkinyloxy, Hydroxycarbonyl, ($C_1$–$C_4$)-Alkylthio, ($C_3$–$C_7$)Cycloalkyloxy, ($C_1$–$C_6$)Alkylcarbonyl, ($C_1$–$C_4$)Alkoxycarbonyl, ($C_2$–$C_4$)Alkenyloxycarbonyl, ($C_3$–$C_5$)Alkinyloxycarbonyl, ($C_1$–$C_4$)-Halogenalkyl, ($C_1$–$C_4$)-Alkoxy($C_1$–$C_4$)-alkyl, ($C_1$–$C_3$)Halogenalkoxy, ($C_1$–$C_3$)Halogenalkylthio, Halogen($C_1$–$C_4$)alkoxy($C_1$–$C_4$)alkyl, ($C_1$–$C_4$)-Alkylthio($C_1$–$C_4$)alkyl, ($C_1$–$C_4$)Alkoxy($C_1$–$C_4$)alkoxy, Halogen-($C_1$–$C_4$)alkoxy($C_1$–$C_4$)alkoxy, ($C_2$–$C_4$)-Alkenyloxy($C_1$–$C_4$)-alkoxy, Halogen($C_2$–$C_4$)alkenyloxy, ($C_1$–$C_4$)Alkoxy($C_1$–$C_4$)-alkylthio, ($C_1$–$C_4$)-Alkylthio($C_1$–$C_4$)alkoxy, ($C_1$–$C_4$)Alkylthio($C_1$–$C_4$)alkylthio, Halogen($C_1$–$C_4$)alkoxycarbonyl, Halogen-($C_2$–$C_4$)alkenyloxycarbonyl, Di($C_1$–$C_6$alkyl)amino oder zwei der Reste $R^7$, $R^8$, $R^9$ bilden, wenn sie orthoständig zueinanderstehen, einen Methylendioxy-, Ethylendioxy- oder ($C_3$–$C_5$)Alkylenrest,
$R^2$, $R^3$ = unabhängig voneinander ($C_1$–$C_3$)Alkyl, ($C_2$–$C_8$)Alkenyl, Phenyl oder $R^2$ und $R^3$ eine Alkylenkette, die – zusammen mit dem Siliciumatom – einen unsubstituierten oder ($C_1$–$C_4$)alkyl-substituierten Heterocyclus mit vier bis sechs Ringgliedern ergibt,
$R^4$ = –H, –CN, $-CCl_3$, –C≡CH, ($C_1$–$C_4$)Alkyl, F,

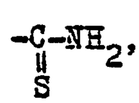,

$R^5$ einen Phenylrest der Formel (C)

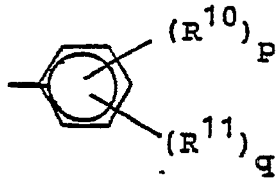

(C)

worin $R^{10}$ und $R^{11}$ – unabhängig voneinander – H, Halogen, $(C_1–C_4)$Alkyl, $(C_1–C_4)$Alkoxy, $(C_1–C_4)$-Halogenalkyl, Phenyl, N-Pyrrolyl oder eine Gruppe der allgemeinen Formel (D)

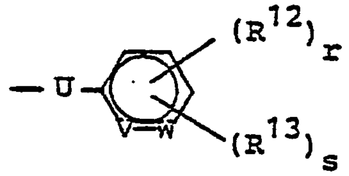

(D)

worin $R^{12}$ und $R^{13}$ – unabhängig voneinander – wiederum H, Halogen, $(C_1–C_4)$Alkyl, $(C_1–C_4)$Alkoxy und $(C_1–C_4)$Halogenalkyl bedeuten können,
U für $CH_2$, CO, O oder S; V, W für CH oder N, wobei nicht beide Reste V, W im selben Molekül N bedeuten dürfen,
p, q = eine ganze Zahl von 0 bis 5 mit der Bedingung, daß die Summe p + q eine Zahl von 1 bis 5 bedeuten muß,
r, s = 0, 1 oder 2, mit der Bedingung, daß sie Summe von r+s = 0, 1 oder 2 sein muß, und der Bedingung, daß, falls $R^{10}$ oder $R^{11}$ der Gruppierung (D) entspricht, p, q = 0 oder 1 und p+q = 1 oder 2 bedeuten muß,
einen Pyridylrest der Formel (E)

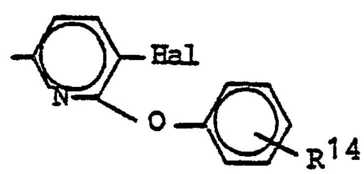

(E)

worin $R^{14}$ = Halogen außer J, $(C_1–C_4)$Alkyl, $(C_1–C_4)$Alkoxy oder $(C_1–C_4)$Halogenalkyl und Hal = Halogen oder H bedeutet,
einen Thienyl- oder Furylrest der Formel (F)

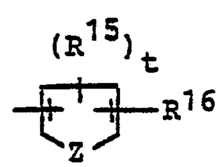

(F)

worin Z = O, S,
$R^{15}$ = H, Halogen, $(C_1–C_4)$Alkyl, $(C_1–C_4)$Alkoxy, $(C_1–C_4)$Halogenalkyl, CN oder $NO_2$ und
$R^{16}$ = gegebenenfalls substituiertes Benzyl, Propargyl, Allyl
bedeutet,
oder
$R^4$ und $R^5$ – zusammen mit dem sie verbrückenden Kohlenstoffatom – einen Indanyl-, Cyclopentenoyl- oder Cyclopentenyl-Rest
und
$R^6$ = H, $(C_1–C_3)$Alkyl oder Phenyl
bedeuten, wobei Verbindungen der Formel I, worin
X = O,
$R^1$ = Phenyl, das durch $(C_1–C_5)$Alkyl, $(C_1–C_5)$Alkoxy, $(C_1–C_5)$Alkylthio, $(C_1–C_5)$Alkylendioxy, Halogen, Nitro oder $(C_1–C_5)$Halogenalkoxy substituiert sein kann,
$R^2$, $R^3$ = unabhängig voneinander $(C_1–C_3)$Alkyl,
$R^4$ = H und
$R^5$ = (4-Fluoro-3-phenoxy)phenyl; Pyridyl oder Phenyl, die in 3-Stellung durch einen Phenoxyrest, der durch $(C_1–C_5)$Alkyl, $(C_1–C_5)$Alkoxy, $(C_1–C_5)$Alkylthio, $(C_1–C_5)$Alkylendioxy, Halogen, Nitro oder $(C_1–C_5)$Halogenalkoxy substituiert sein kann, substituiert sind, bedeuten, ausgenommen sind.

2. Verbindungen der Formel I von Anspruch 1, dadurch gekennzeichnet, daß $R^2$, $R^3$ $(C_1-C_3)$Alkyl oder zusammen eine Alkylenkette, die mit dem benachbarten Siliciumatom einen vier- bis sechsgliedrigen Ring ergibt, und $R^4$ H, Cyano oder $(C_1-C_4)$Alkyl bedeuten.

3. Verbindungen der Formel I von Anspruch 1 oder 2, dadurch gekennzeichnet, daß $R^1$ = einen Phenylrest der Formel (A) mit $R^7$, $R^8$, $R^9$ = Halogen, $(C_1-C_4)$Alkyl, $(C_2-C_6)$Alkenyl, $(C_3-C_7)$Cycloalkyl, $(C_1-C_5)$Alkoxy, $(C_2-C_4)$Alkenyloxy, $(C_1-C_4)$Halogenalkyl oder $(C_1-C_3)$Halogenalkoxy, $R^4$ = Wasserstoff und $R^5$ = einen Rest der Formel C bedeutet, worin $(R^{10})_p$ für H oder 4-Fluor steht und $(R^{11})_q$ in 3-Stellung des Phenylrestes orientiert ist und einen Rest der Formel

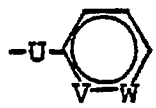

bedeutet.

4. Verfahren zur Herstellung der Verbindungen der Formel I, dadurch gekennzeichnet, daß man

a) für Verbindungen mit X = $CH_2$ ein Silan der allgemeinen Formel (II),

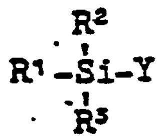

worin Y eine nucleofuge Abgangsgruppe wie beispielsweise Halogen oder Sulfonat bedeutet, mit einem metallorganischen Reagenz der allgemeinen Formel (III),

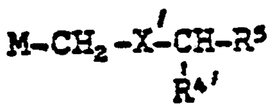 (III)

worin M einem Alkalimetall- oder Erdalkalimetall-Äquivalent, X' einer Methylengruppe und $R^{4'}$ H, CN, F oder $(C_1-C_4)$Alkyl entspricht, oder

b) ein Silan der allgemeinen Formel (IV) oder (V)

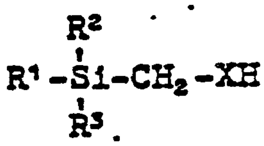 (IV)

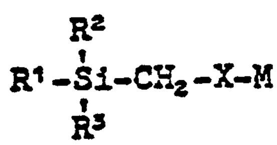 (V)

mit einem Alkylierungsmittel der allgemeinen Formel VI,

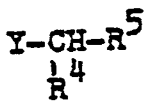 (VI)

gegebenenfalls in Gegenwart einer Base, oder

c) ein Silan der allgemeinen Formel (VII)

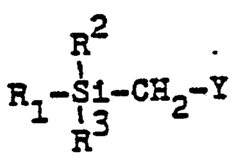 (VII)

mit einer XH-aciden Verbindung des Typs (VIII)

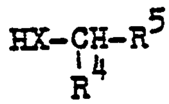 (VIII)

in Gegenwart einer Base oder mit einer metallorganischen Verbindung des Typs IX

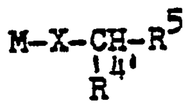 (IX)

oder

d) für Verbindungen mit X = $CH_2$ ein Silan der allgemeinen Formel (X)

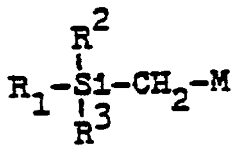 (X)

mit einer Verbindung des Typs (XI)

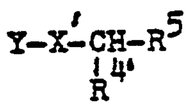 (XI)

oder

e) für Verbindungen mit X = $CH_2$ ein Silan der allgemeinen Formel (XII)

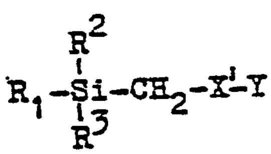 (XII)

mit einer metallorganischen Verbindung der allgemeinen Formel (XIII)

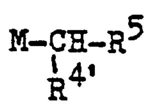 (XIII)

oder

f) ein Silan der allgemeinen Formel (XIV)

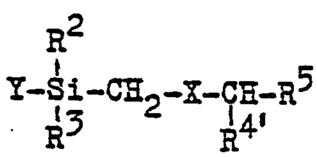 (XIV)

mit einem metallorganischen Reagenz des Typs (XV)

$R^{1'}$–M (XV)

wobei $R^{1'}$ die Bedeutung von $R^1$ hat mit Ausnahme von Nitro, Cyano, Amino und carbonylhaltigen Resten

oder

g) ein Silan der allgemeinen Formel (XVI)

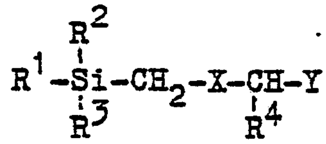 (XVI)

umgesetzt,
mit einem metallorganischen Reagenz des Typs (XVII)

$M-R^5$ (XVII)

oder
h) für Verbindungen mit $X = CH_2$ ein Silan der allgemeinen Formel (XXX)

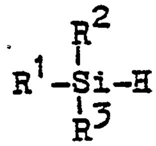 (XXX)

mit einem Olefin der allgemeinen Formel (XXXI)

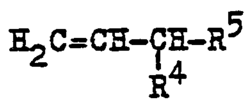

in Gegenwart einer Komplexbindung eines Elementes der VIII. Nebengruppe des Periodensystems als Katalysator oder
i) für Verbindungen mit $X \neq CH_2$ ein Silan der allgemeinen Formel (XXXII)

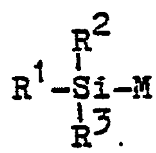 (XXXII)

mit einem Alkylierungsmittel der allgemeinen Formel (XXXIII)

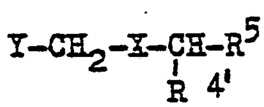 (XXXIII)

umsetzt.

5. Schädlingsbekämpfungsmittel, dadurch gekennzeichnet, daß sie eine Verbindung der Formel I von Anspruch 1 enthalten.

6. Insektizide Mittel, dadurch gekennzeichnet, daß sie eine Verbindung der Formel I von Ansprüchen 1, 2 oder 3 enthalten.

7. Akarizide Mittel, dadurch gekennzeichnet, daß sie eine Verbindung der Formel I von Ansprüchen 1, 2 oder 3 enthalten.

8. Nematozide Mittel, dadurch gekennzeichnet, daß sie eine Verbindung der Formel I von Ansprüchen 1, 2 oder 3 enthalten.

9. Verwendung von Verbindungen der Formel I von Ansprüchen 1, 2 oder 3 als Schädlingsbekämpfungsmittel.

10. Verfahren zur Bekämpfung von Schadinsekten, Akariden oder Nematoden, dadurch gekennzeichnet, daß man auf diese, die von ihnen befallenen Flächen, Pflanzen oder Substrate eine wirksame Menge einer Verbindung der Formel I appliziert.

11. Verbindungen der Formel XIV von Anspruch 4.

12. Verbindungen der Formel XXXI von Anspruch 4, worin $R^4 = H$, $R^5$ einen Rest der Formeln

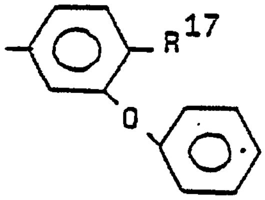, 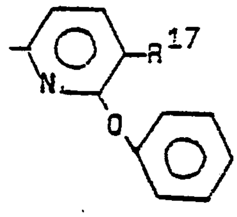 oder 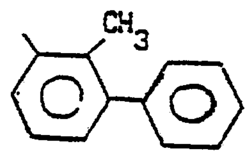

und $R^{17}$ = H oder Halogen, insbesondere H oder Fluor bedeutet.

**Patentansprüche für den Vertragsstaat: ES**

1. Verfahren zur Herstellung von Verbindungen der Formel I, ihre optischen Isomeren und deren Gemische,

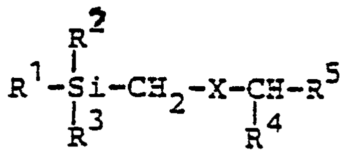 (I),

worin
X = $CH_2$, O, S, $NR^6$,
$R^1$ ($C_2$–$C_{12}$)Alkyl, das durch Halogen oder ($C_1$–$C_4$)Alkoxy substituiert sein kann, Cyclohexyl, das ein- oder zweifach durch ($C_1$–$C_4$)Alkyl, Halogen oder ($C_1$–$C_4$)Alkoxy substituiert sein kann, ($C_4$–$C_8$)Alkenyl, das ein- oder mehrfach durch Halogen und/oder ein- oder zweifach durch ($C_1$–$C_4$)Alkoxy substituiert sein kann, einen Phenyl- oder Naphthylrest der Formeln (A) oder (B)

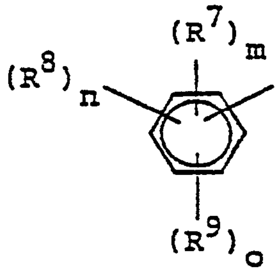 (A) 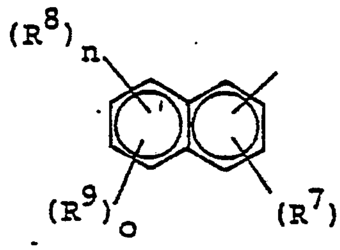 (B),

worin m, n, o die Werte 0 bis 4 in Formel (A) und 0 bis 3 in Formel (B) besitzen mit der Maßgabe, daß O ≤ m+n+o ≤ 4 ist, und $R^7$, $R^8$, $R^9$ unabhängig voneinander ($C_1$–$C_4$)Alkyl, das durch Hydroxy substituiert sein kann, Tri($C_1$–$C_4$)alkylsilyl, Halogen, Nitro, Cyano, ($C_2$–$C_6$)Alkenyl, ($C_2$–$C_6$)-Alkinyl, Amino, ($C_3$–$C_7$)Cycloalkyl, Phenyl, Phenoxy, ($C_1$–$C_5$)Alkoxy, ($C_2$–$C_4$)-Alkenyloxy, ($C_2$–$C_4$)Alkinyloxy, Hydroxycarbonyl, ($C_1$–$C_4$)-Alkylthio, ($C_3$–$C_7$)Cycloalkyloxy, ($C_1$–$C_6$)Alkylcarbonyl, ($C_1$–$C_4$)Alkoxycarbonyl, ($C_2$–$C_4$)Alkenyloxycarbonyl, ($C_3$–$C_5$)Alkinyloxycarbonyl, ($C_1$–$C_4$)-Halogenalkyl, ($C_1$–$C_4$)Alkoxy($C_1$–$C_4$)-alkyl, ($C_1$–$C_3$)Halogenalkoxy, ($C_1$–$C_3$)Halogenalkylthio, Halogen($C_1$–$C_4$)alkoxy($C_1$–$C_4$)alkyl, ($C_1$–$C_4$)-Alkylthio($C_1$–$C_4$)alkyl, ($C_1$–$C_4$)Alkoxy($C_1$–$C_4$)alkoxy, Halogen($C_1$–$C_4$)alkoxy($C_1$–$C_4$)alkoxy, ($C_2$–$C_4$)-Alkenyloxy($C_1$–$C_4$)alkoxy, Halogen($C_2$–$C_4$)alkenyloxy, ($C_1$–$C_4$)Alkoxy($C_1$–$C_4$)alkylthio, ($C_1$–$C_4$)Alkylthio($C_1$–$C_4$)alkoxy, ($C_1$–$C_4$)Alkylthio($C_1$–$C_4$)alkylthio, Halogen($C_1$–$C_4$)alkoxycarbonyl, Halogen($C_2$–$C_4$)alkenyloxycarbonyl, Di($C_1$–$C_6$alkyl)amino oder zwei der Reste $R^7$, $R^8$, $R^9$ bilden, wenn sie orthoständig zueinanderstehen, einen Methylendioxy-, Ethylendioxy- oder ($C_3$–$C_5$)Alkylenrest,
$R^2$, $R^3$ = unabhängig voneinander ($C_1$–$C_3$)Alkyl, ($C_2$–$C_8$)Alkenyl, Phenyl oder $R^2$ und $R^3$ eine Alkylenkette, die – zusammen mit dem Siliciumatom – einen unsubstituierten oder ($C_1$–$C_4$)alkyl-substituierten Heterocyclus mit vier bis sechs Ringgliedern ergibt,
$R^4$ = –H, –CN, $-CCl_3$, –C≡CH, ($C_1$–$C_4$)Alkyl, F,

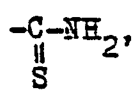,

$R^5$ einen Phenylrest der Formel

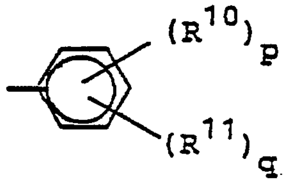

(C)

worin $R^{10}$ und $R^{11}$ – unabhängig voneinander – H, Halogen, $(C_1–C_4)$Alkyl, $(C_1–C_4)$Alkoxy, $(C_1–C_4)$Halogenalkyl, Phenyl, N-Pyrrolyl oder eine Gruppe der allgemeinen Formel (D)

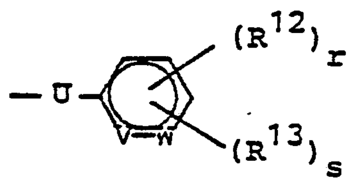

(D)

worin $R^{12}$ und $R^{13}$ – unabhängig voneinander – wiederum H, Halogen, $(C_1–C_4)$Alkyl, $(C_1–C_4)$Alkoxy und $(C_1–C_4)$Halogenalkyl bedeuten können,
U für $CH_2$, CO, O oder S; V, W für CH oder N, wobei nicht beide Reste V, W im selben Molekül N bedeuten dürfen,
p, q = eine ganze Zahl von 0 bis 5 mit der Bedingung, daß die Summe p + q eine Zahl von 1 bis 5 bedeuten muß,
r, s = 0, 1 oder 2, mit der Bedingung, daß die Summe von r+s = 0, 1 oder 2 sein muß, und der Bedingung, daß, falls $R^{10}$ oder $R^{11}$ der Gruppierung (D) entspricht, p, q = 0 oder 1 und p+q = 1 oder 2 bedeuten muß,
einen Pyridylrest der Formel (E)

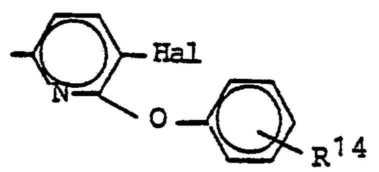

(E)

worin $R^{14}$ = Halogen außer J, $(C_1–C_4)$Alkyl, $(C_1–C_4)$Alkoxy oder $(C_1–C_4)$Halogenalkyl und Hal = Halogen oder H bedeutet,
einen Thienyl- oder Furylrest der Formel (F)

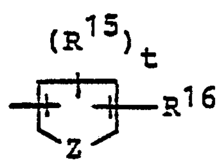

(F)

worin Z = O, S,
$R^{15}$ = H, Halogen, $(C_1–C_4)$Alkyl, $(C_1–C_4)$Alkoxy, $(C_1–C_4)$Halogenalkyl, CN oder $NO_2$ und
$R^{16}$ = gegebenenfalls substituiertes Benzyl, Propargyl, Allyl bedeutet oder
$R^4$ und $R^5$ – zusammen mit dem sie verbrückenden Kohlenstoffatom – einen Indanyl-, Cyclopentenoyl- oder Cyclopentenyl-Rest und
$R^6$ = H, $(C_1–C_3)$Alkyl oder Phenyl bedeuten, wobei Verbindungen der Formel I, worin
X = O,
$R^1$ = Phenyl, das durch $(C_1–C_5)$Alkyl, $(C_1–C_5)$Alkoxy, $(C_1–C_5)$Alkylthio, $(C_1–C_5)$Alkylendioxy, Halogen, Nitro oder $(C_1–C_5)$Halogenalkoxy substituiert sein kann,
$R^2$, $R^3$ = unabhängig voneinander $(C_1–C_3)$Alkyl,
$R^4$ = H und
$R^5$ = (4-Fluoro-3-phenoxy)phenyl; Pyridyl oder Phenyl, die in 3-Stellung durch einen Phenoxyrest, der durch $(C_1–C_5)$Alkyl, $(C_1–C_5)$Alkoxy, $(C_1–C_5)$Alkylthio, $(C_1–C_5)$Alkylendioxy, Halogen, Nitro oder $(C_1–C_5)$Halogenalkoxy substituiert sein kann, substituiert sind, bedeuten, ausgenommen sind, dadurch gekennzeichnet, daß man

a) für Verbindungen mit X = $CH_2$ ein Silan der allgemeinen Formel (II),

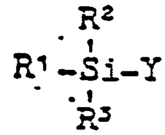

worin Y eine nucleofuge Abgangsgruppe wie beispielsweise Halogen oder Sulfonat bedeutet, mit einem metallorganischen Reagenz der allgemeinen Formel (III),

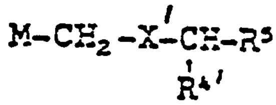 (III)

worin M einem Alkalimetall- oder Erdalkalimetall-Äquivalent, X' einer Methylengruppe und R4' H, CN, F oder $(C_1–C_4)$Alkyl entspricht, oder
b) ein Silan der allgemeinen Formel (IV) oder (V)

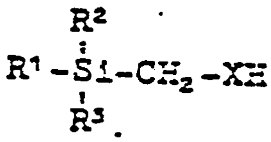 (IV)

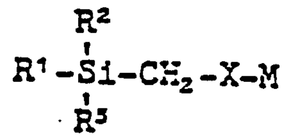 (V)

mit einem Alkylierungsmittel der allgemeinen Formel VI

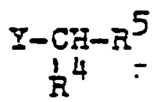 (VI)

gegebenenfalls in Gegenwart einer Base, oder
c) ein Silan der allgemeinen Formel (VII)

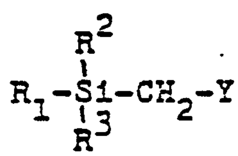 (VII)

mit einer XH-aciden Verbindung des Typs (VIII)

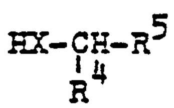 (VIII)

in Gegenwart einer Base oder mit einer metallorganischen Verbindung des Typs IX

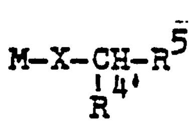 (IX)

oder
d) für Verbindungen mit X = $CH_2$ ein Silan der allgemeinen Formel (X)

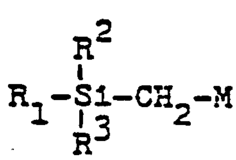 (X)

mit einer Verbindung des Typs (XI)

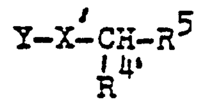

(XI)

oder

e) für Verbindungen mit X = $CH_2$ ein Silan der allgemeinen Formel (XII)

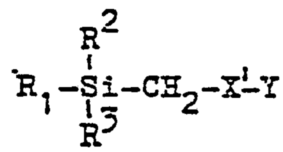

(XII)

mit einer metallorganischen Verbindung der allgemeinen Formel (XIII)

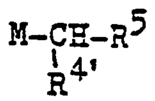

(XIII)

oder

f) ein Silan der allgemeinen Formel (XIV)

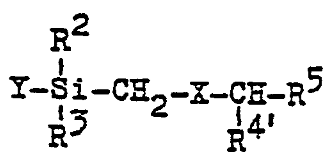

(XIV)

mit einem metallorganischen Reagenz des Typs (XV)

$R^{1'}-M$ (XV)

wobei $R^{1'}$ die Bedeutung von $R^1$ hat mit Ausnahme von Nitro, Cyano, Amino und carbonylhaltigen Resten oder

g) ein Silan der allgemeinen Formel (XVI)

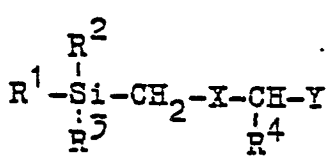

(XVI)

umgesetzt,

mit einem metallorganischen Reagenz des Typs (XVII)

$M-R^5$ (XVII)

oder

h) für Verbindungen mit X = $CH_2$ ein Silan der allgemeinen Formel (XXX)

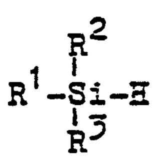

(XXX)

mit einem Olefin der allgemeinen Formel (XXXI)

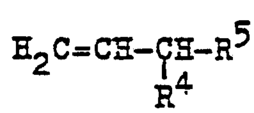

in Gegenwart einer Komplexbindung eines Elementes der VIII. Nebengruppe des Periodensystems als Katalysator oder

i) für Verbindungen mit $X \neq CH_2$ ein Silan der allgemeinen Formel (XXXII)

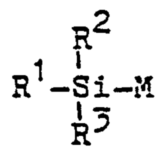

(XXXII)

mit einem Alkylierungsmittel der allgemeinen Formel (XXXIII)

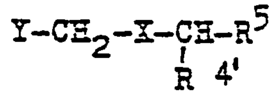

(XXXIII)

umsetzt.

2. Verfahren gemäß Anspruch 1, dadurch gekennzeichnet, daß
$R^2$, $R^3$ $(C_1\text{–}C_3)$Alkyl oder zusammen eine Alkylenkette, die mit dem benachbarten Siliciumatom einen vier- bis sechsgliedrigen Ring ergibt, und
$R^4$ H, Cyano oder $(C_1\text{–}C_4)$Alkyl bedeuten.

3. Verfahren gemäß Anspruch 1 oder 2, dadurch gekennzeichnet, daß $R^1$ = einen Phenylrest der Formel (A) mit $R^7$, $R^8$, $R^9$ = Halogen, $(C_1\text{–}C_4)$Alkyl, $(C_2\text{–}C_6)$Alkenyl, $(C_3\text{–}C_7)$Cycloalkyl, $(C_1\text{–}C_5)$Alkoxy, $(C_2\text{–}C_4)$Alkenyloxy, $(C_1\text{–}C_4)$Halogenalkyl oder $(C_1\text{–}C_3)$Halogenalkoxy, $R^4$ = Wasserstoff und $R^5$ = einen Rest der Formel C bedeutet, worin $(R^{10})_p$ für H oder 4-Fluor steht und $(R^{11})_q$ in 3-Stellung des Phenylrestes orientiert ist und einen Rest der Formel

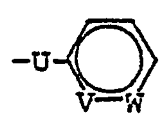

bedeutet.

4. Verfahren zur Bekämpfung von Schadinsekten, Akariden oder Nematoden, dadurch gekennzeichnet, daß man auf diese, die von ihnen befallenen Flächen, Pflanzen oder Substrate eine wirksame Menge einer Verbindung der Formel I appliziert.

**Patentansprüche für den Vertragsstaat: AT**

1. Verfahren zur Herstellung von Verbindungen der Formel I, ihre optischen Isomeren und deren Gemische,

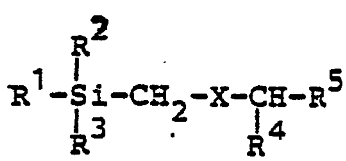

(I),

worin
$X = CH_2$, O, S, $NR^6$,
$R^1$ $(C_2\text{–}C_{12})$Alkyl, das durch Halogen oder $(C_1\text{–}C_4)$Alkoxy substituiert sein kann, Cyclohexyl, das ein- oder zweifach durch $(C_1\text{–}C_4)$Alkyl, Halogen oder $(C_1\text{–}C_4)$Alkoxy substituiert sein kann, $(C_4\text{–}C_8)$-Alkenyl, das ein- oder mehrfach durch Halogen und/oder ein- oder zweifach durch $(C_1\text{–}C_4)$Alkoxy substituiert sein kann, einen Phenyl- oder Naphthylrest der Formeln (A) oder (B)

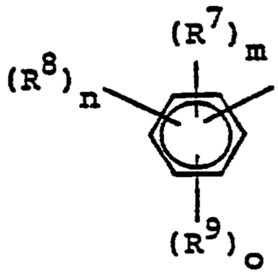

(A)

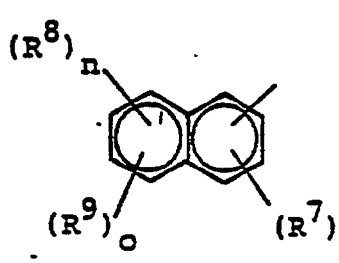

(B),

worin m, n, o die Werte 0 bis 4 in Formel (A) und 0 bis 3 in Formel (B) besitzen mit der Maßgabe, daß O ≤

m+n+o ≤ 4 ist, und $R^7$, $R^8$, $R^9$ unabhängig voneinander ($C_1$–$C_4$)Alkyl, das durch Hydroxy substituiert sein kann, Tri($C_1$–$C_4$)alkylsilyl, Halogen, Nitro, Cyano, ($C_2$–$C_6$)Alkenyl, ($C_2$–$C_6$)-Alkinyl, Amino, ($C_3$–$C_7$)Cycloalkyl, Phenyl, Phenoxy, ($C_1$–$C_5$)Alkoxy, ($C_2$–$C_4$)-Alkenyloxy, ($C_2$–$C_4$)Alkinyloxy, Hydroxycarbonyl, ($C_1$–$C_4$)-Alkylthio, ($C_3$–$C_7$)Cycloalkyloxy, ($C_1$–$C_6$)Alkylcarbonyl, ($C_1$–$C_4$)Alkoxycarbonyl, ($C_2$–$C_4$)Alkenyloxycarbonyl, ($C_3$–$C_5$)Alkinyloxycarbonyl, ($C_1$–$C_4$)-Halogenalkyl, ($C_1$–$C_4$)-Alkoxy($C_1$–$C_4$)-alkyl, ($C_1$–$C_3$)Halogenalkoxy, ($C_1$–$C_3$)Halogenalkylthio, Halogen($C_1$–$C_4$)alkoxy($C_1$–$C_4$)alkyl, ($C_1$–$C_4$)-Alkylthio($C_1$–$C_4$)alkyl, ($C_1$–$C_4$)Alkoxy($C_1$–$C_4$)alkoxy, -Halogen($C_1$–$C_4$)alkoxy($C_1$–$C_4$)alkoxy, ($C_2$–$C_4$)Alkenyloxy($C_1$–$C_4$)alkoxy, Halogen($C_2$–$C_4$)alkenyloxy, ($C_1$–$C_4$)Alkoxy($C_1$–$C_4$)alkylthio, ($C_1$–$C_4$)Alkylthio($C_1$–$C_4$)alkoxy, ($C_1$–$C_4$)Alkylthio($C_1$–$C_4$)alkylthio, Halogen($C_1$–$C_4$)alkoxycarbonyl, Halogen($C_2$–$C_4$)alkenyloxycarbonyl, Di($C_1$–$C_6$alkyl)amino oder zwei der Reste $R^7$, $R^8$, $R^9$ bilden, wenn sie orthoständig zueinanderstehen, einen Methylendioxy-, Ethylendioxy- oder ($C_3$–$C_5$)Alkylenrest,
$R^2$, $R^3$ = unabhängig voneinander ($C_1$–$C_3$)Alkyl, ($C_2$–$C_6$)Alkenyl, Phenyl oder $R^2$ und $R^3$ eine Alkylenkette, die – zusammen mit dem Siliciumatom – einen unsubstituierten oder ($C_1$–$C_4$)alkyl-substituierten Heterocyclus mit vier bis sechs Ringgliedern ergibt,
$R^4$ = –H, –CN, –$CCl_3$, –C≡CH, ($C_1$–$C_4$)Alkyl, F,

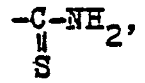

$R^5$ einen Phenylrest der Formel (C)

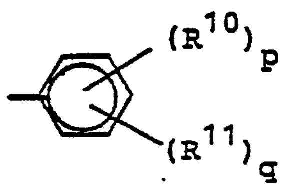

(C)

worin $R^{10}$ und $R^{11}$ – unabhängig voneinander – H, Halogen, ($C_1$–$C_4$)Alkyl, ($C_1$–$C_4$)Alkoxy, ($C_1$–$C_4$)-Halogenalkyl, Phenyl, N-Pyrrolyl oder eine Gruppe der allgemeinen Formel (D)

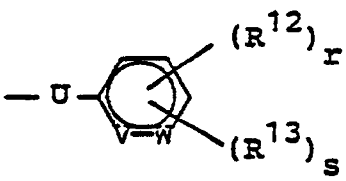

(D)

worin $R^{12}$ und $R^{13}$ – unabhängig voneinander – wiederum H, Halogen, ($C_1$–$C_4$)Alkyl, ($C_1$–$C_4$)Alkoxy und ($C_1$–$C_4$)Halogenalkyl bedeuten können,
U für $CH_2$, CO, O oder S; V, W für CH oder N; wobei nicht beide Reste V, W im selben Molekül N bedeuten dürfen,
p, q = eine ganze Zahl von 0 bis 5 mit der Bedingung, daß die Summe p+q eine Zahl von 1 bis 5 bedeuten muß,
r, s = 0, 1 oder 2, mit der Bedingung, daß die Summe von r+s = 0, 1 oder 2 sein muß, und der Bedingung, daß, falls $R^{10}$ oder $R^{11}$ der Gruppierung (D) entspricht,
p, q = 0 oder 1 und p+q = 1 oder 2 bedeuten muß, einen Pyridylrest der Formel (E)

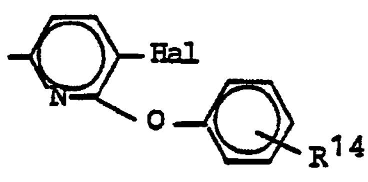

(E)

worin $R^{14}$ = Halogen außer J, ($C_1$–$C_4$)Alkyl, ($C_1$–$C_4$)Alkoxy oder ($C_1$–$C_4$)Halogenalkyl und Hal = Halogen oder H bedeutet, einen Thienyl- oder Furylrest der Formel (F)

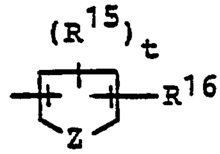

(F)

worin Z = O, S,
$R^{15}$ = H, Halogen, $(C_1–C_4)$Alkyl, $(C_1–C_4)$Alkoxy, $(C_1–C_4)$Halogenalkyl, CN oder $NO_2$ und
$R^{16}$ = gegebenenfalls substituiertes Benzyl, Propargyl, Allyl,
bedeutet, oder
$R^4$ und $R^5$ – zusammen mit dem sie verbrückenden Kohlenstoffatom – einen Indanyl-, Cyclopentenoyl- oder Cyclopentenyl-Rest und
$R^6$ = H, $(C_1–C_3)$Alkyl oder Phenyl bedeuten, wobei Verbindungen der Formel I, worin
X = O,
$R^1$ = Phenyl, das durch $(C_1–C_5)$Alkyl, $(C_1–C_5)$Alkoxy, $(C_1–C_5)$Alkylthio, $(C_1–C_5)$Alkylendioxy, Halogen, Nitro oder $(C_1–C_5)$Halogenalkoxy substituiert sein kann,
$R^2$, $R^3$ = unabhängig voneinander $(C_1–C_3)$Alkyl,
$R^4$ = H und
$R^5$ = (4-Fluoro-3-phenoxy)phenyl; Pyridyl oder Phenyl, die in 3-Stellung durch einen Phenoxyrest, der durch $(C_1–C_5)$Alkyl, $(C_1–C_5)$Alkoxy, $(C_1–C_5)$Alkylthio, $(C_1–C_5)$Alkylendioxy, Halogen, Nitro oder $(C_1–C_5)$Halogenalkoxy substituiert sein kann, substituiert sind, bedeuten, ausgenommen sind, dadurch gekennzeichnet, daß man

a) für Verbindungen mit X = $CH_2$ ein Silan der allgemeinen Formel (II),

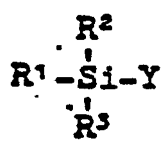

worin Y eine nucleofuge Abgangsgruppe wie beispielsweise Halogen oder Sulfonat bedeutet, mit einem metallorganischen Reagenz der allgemeinen Formel (III),

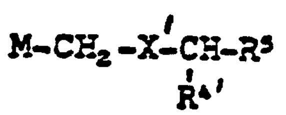

(III)

worin M einem Alkalimetall- oder Erdalkalimetall-Äquivalent, X′ einer Methylengruppe und $R^{4'}$ H, CN, F oder $(C_1–C_4)$Alkyl entspricht, oder

b) ein Silan der allgemeinen Formel (IV) oder (V)

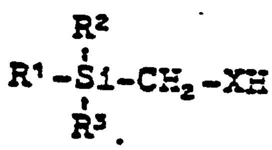

(IV)

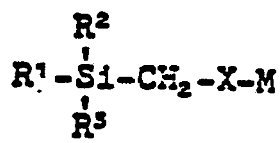

(V)

mit einem Alkylierungsmittel der allgemeinen Formel VI

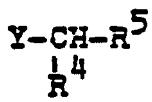

(VI)

gegebenenfalls in Gegenwart einer Base, oder

c) ein Silan der allgemeinen Formel (VII)

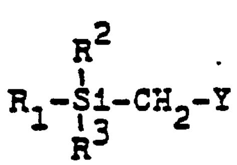

(VII)

mit einer XH-aciden Verbindung des Typs (VIII)

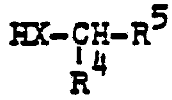 (VIII)

in Gegenwart einer Base oder mit einer metallorganischen Verbindung des Typs IX

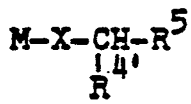 (IX)

oder

d) für Verbindungen mit X = $CH_2$ ein Silan der allgemeinen Formel (X)

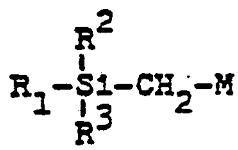 (X)

mit einer Verbindung des Typs (XI)

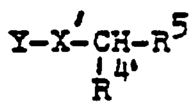 (XI)

oder

e) für Verbindungen mit X = $CH_2$ ein Silan der allgemeinen Formel (XII)

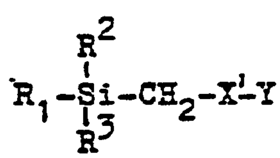 (XII)

mit einer metallorganischen Verbindung der allgemeinen Formel (XIII)

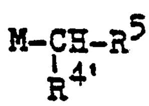 (XIII)

oder

f) ein Silan der allgemeinen Formel (XIV)

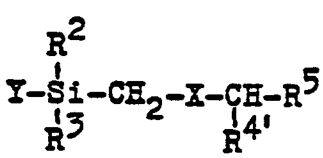 (XIV)

mit einem metallorganischen Reagenz des Typs (XV)

$R^{1'}$–M (XV)

wobei $R^{1'}$ die Bedeutung von $R^1$ hat mit Ausnahme von Nitro, Cyano, Amino und carbonylhaltigen Resten oder

g) ein Silan der allgemeinen Formel (XVI)

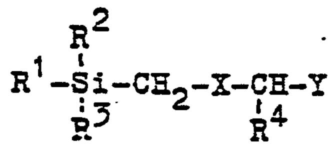

(XVI)

umgesetzt,
mit einem metallorganischen Reagenz des Typs (XVII)

$$M{-}R^5 \qquad (XVII)$$

oder
h) für Verbindungen mit $X \neq CH^2$ ein Silan der allgemeinen Formel (XXX)

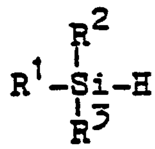

(XXX)

mit einem Olefin der allgemeinen Formel (XXXI)

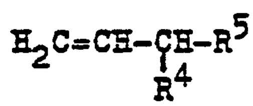

in Gegenwart einer Komplexbindung eines Elementes der VIII. Nebengruppe des Periodensystems als Katalysator oder
i) für Verbindungen mit $X \neq CH_2$ ein Silan der allgemeinen Formel (XXXII)

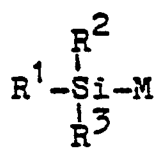

(XXXII)

mit einem Alkylierungsmittel der allgemeinen Formel (XXXIII)

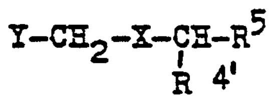

(XXXIII)

umsetzt.

2. Verfahren gemäß Anspruch 1, dadurch gekennzeichnet, daß $R^2$, $R^3$ $(C_1–C_3)$Alkyl oder zusammen eine Alkylenkette, die mit dem benachbarten Siliciumatom einen vier- bis sechsgliedrigen Ring ergibt, und $R^4$ H, Cyano oder $(C_1–C_4)$Alkyl bedeuten.

3. Verfahren gemäß Anspruch 1 oder 2, dadurch gekennzeichnet, daß $R^1$ = einen Phenylrest der Formel (A) mit $R^7$, $R^8$, $R^9$ = Halogen, $(C_1–C_4)$Alkyl, $(C_2–C_6)$Alkenyl, $(C_3–C_7)$Cycloalkyl, $(C_1–C_5)$Alkoxy, $(C_2–C_4)$Alkenyloxy, $(C_1–C_4)$Halogenalkyl oder $(C_1–C_3)$Halogenalkoxy, $R^4$ = Wasserstoff und $R^5$ = einen Rest der Formel C bedeutet, worin $(R^{10})_p$ für H oder 4-Fluor steht und $(R^{11})_q$ in 3-Stellung des Phenylrestes orientiert ist und einen Rest der Formel

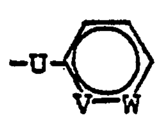

bedeutet.

4. Schädlingsbekämpfungsmittel, dadurch gekennzeichnet, daß sie eine Verbindung der Formel I von Anspruch 1 enthalten.

5. Insektizide Mittel, dadurch gekennzeichnet, daß sie eine Verbindung der Formel I von Ansprüchen 1, 2 oder 3 enthalten.

6. Akarizide Mittel, dadurch gekennzeichnet, daß sie eine Verbindung der Formel I von Ansprüchen 1, 2 oder 3 enthalten.

7. Nematozide Mittel, dadurch gekennzeichnet, daß sie eine Verbindung der Formel I von Ansprüchen 1, 2 oder 3 enthalten.

8. Verwendung von Verbindungen der Formel I von Ansprüchen 1, 2 oder 3 als Schädlingsbekämpfungsmittel.

9. Verfahren zur Bekämpfung von Schadinsekten, Akariden oder Nematoden, dadurch gekennzeichnet, daß man auf diese, die von ihnen befallenen Flächen, Pflanzen oder Substrate eine wirksame Menge einer Verbindung der Formel I appliziert.

**Claims for the Contracting States: BE, CH, DE, FR, GB, GR, IT, LI, NL**

1. A compound of the formula I, its optical isomers and their mixtures,

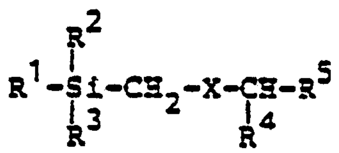

(I),

in which
X denotes $CH_2$, O, S, $NR^6$,
$R^1$ denotes $(C_2–C_{12})$alkyl which can be substituted by halogen or $(C_1–C_4)$alkoxy, cyclohexyl which can be monosubstituted or disubstituted by $(C_1–C_4)$alkyl, halogen or $(C_1–C_4)$alkoxy, $(C_4–C_8)$alkenyl which can be mono- or polysubstituted by halogen and/or mono- or disubstituted by $(C_1–C_4)$alkoxy, a phenyl or naphthyl radical of the formulae (A) or (B)

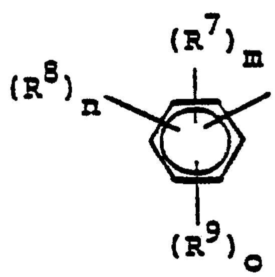

(A)

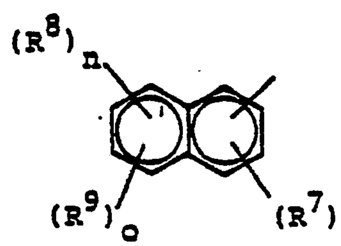

(B),

in which m, n and o have the values 0 to 4 in formula (A) and 0 to 3 in formula (B), with the proviso that O $\leq$ m+n+o $\leq$ 4, and $R^7$, $R^8$ and $R^9$, independently of one another, denote $(C_1–C_4)$alkyl which can be substituted by hydroxyl; tri$(C_1–C_4)$alkylsilyl, halogen, nitro, cyano, $(C_2–C_6)$alkenyl, $(C_2–C_6)$alkynyl, amino, $(C_3–C_7)$cycloalkyl, phenyl, phenoxy, $(C_1–C_5)$alkoxy, $(C_2–C_4)$alkenyloxy, $(C_2–C_4)$alkynyloxy, hydroxycarbonyl, $(C_1–C_4)$alkylthio, $(C_3–C_7)$cycloalkyloxy, $(C_1–C_8)$alkylcarbonyl, $(C_1–C_4)$alkoxycarbonyl, $(C_2–C_4)$alkenyloxycarbonyl, $(C_3–C_5)$alkynyloxycarbonyl, $(C_1–C_4)$haloalkyl, $(C_1–C_4)$alkoxy$(C_1–C_4)$alkyl, $(C_1–C_3)$haloalkoxy, $(C_1–C_3)$haloalkylthio, halo$(C_1–C_4)$alkoxy$(C_1–C_4)$alkyl, $(C_1–C_4)$alkylthio$(C_1–C_4)$alkyl, $(C_1–C_4)$alkoxy$(C_1–C_4)$alkoxy, halo$(C_1–C_4)$alkoxy$(C_1–C_4)$alkoxy, $(C_2–C_4)$alkenyloxy-$(C_1–C_4)$alkoxy, halo-$(C_2–C_4)$alkenyloxy [sic], $(C_1–C_4)$alkoxy$(C_1–C_4)$alkylthio, $(C_1–C_4)$alkylthio$(C_1–C_4)$alkoxy, $(C_1–C_4)$-alkylthio$(C_1–C_4)$alkylthio, halo$(C_1–C_4)$alkoxycarbonyl, halo$(C_2–C_4)$alkenyloxycarbonyl or di$(C_1–C_6$-alkyl)amino, or two of the radicals $R^7$, $R^8$ and $R^9$, if they are in the ortho positions to one another, form a methylenedioxy, ethylenedioxy or $(C_3–C_5)$alkylene radical,
$R^2$ and $R^3$, independently of one another, denote $(C_1–C_3)$alkyl, $(C_2–C_8)$alkenyl, or phenyl or $R^2$ and $R^3$ together denote an alkylene chain which – together with the silicon atom – produces an unsubstituted or $(C_1–C_4)$alkyl-substituted heterocycle having four to six ring members,
$R^4$ denotes –H, –CN, $–CCl_3$, –C≡CH, $(C_1–C_4)$alkyl, F or

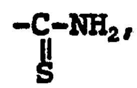

$R^5$ denotes a phenyl radical of the formula (C)

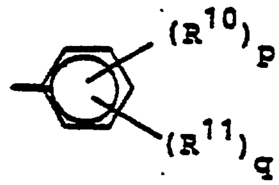

in which

$R^{10}$ and $R^{11}$ – independently of one another – may denote H, halogen, $(C_1–C_4)$alkyl, $(C_1–C_4)$alkoxy, $(C_1–C_4)$haloalkyl, phenyl, N-pyrrolyl or a group of the general formula (D)

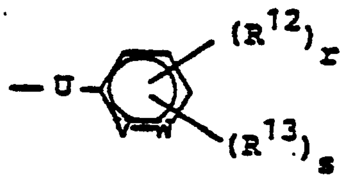

(D)

in which

$R^{12}$ and $R^{13}$ – independently of one another – may again denote H, halogen, $(C_1–C_4)$alkyl, $(C_1–C_4)$alkoxy or $(C_1–C_4)$haloalkyl,

U represents $CH_2$, CO, O or S; V and W represent CH or N, where both radicals V and W in the same molecule may not denote N,

p and q denote an integer from 0 to 5 with the condition that the sum p+q must be a number from 1 to 5,

r and s denote 0, 1 or 2 with the condition that the sum of r+s must be 0, 1 or 2 and with the condition that, if $R^{10}$ or $R^{11}$ corresponds to the group (D), p and q must denote 0 or 1 and p+q must denote 1 or 2, a pyridyl radical of the formula (E)

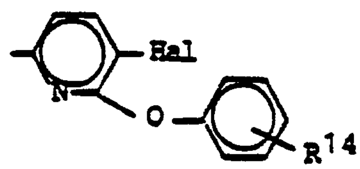

(E)

in which

$R^{14}$ denotes halogen apart from I, $(C_1–C_4)$alkyl, $(C_1–C_4)$alkoxy or $(C_1–C_4)$haloalkyl and Hal denotes halogen or H, a thienyl or furyl radical of the formula (F)

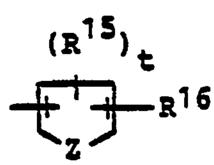

(F)

in which

Z is O or S,

$R^{15}$ denotes H, halogen, $(C_1–C_4)$alkyl, $(C_1–C_4)$alkoxy, $(C_1–C_4)$haloalkyl, CN or $NO_2$, and

$R^{16}$ denotes optionally substituted benzyl, propargyl or allyl, or

$R^4$ and $R^5$ – together with the carbon atom bridging them – denote an indanyl, cyclopentenoyl or cyclopentenyl radical, and

$R^6$ denotes H, $(C_1–C_3)$alkyl or phenyl,

where compounds of the formula I in which

X denotes O,

$R^1$ denotes phenyl, which can be substituted by $(C_1–C_5)$alkyl, $(C_1–C_5)$alkoxy, $(C_1–C_5)$alkylthio, $(C_1–C_5)$-alkylenedioxy, halogen, nitro or $(C_1–C_5)$haloalkoxy,

$R^2$ and $R^3$, independently of one another, denote $(C_1–C_3)$alkyl,

$R^4$ denotes H, and

$R^5$ denotes (4-fluoro-3-phenoxy)phenyl; pyridyl or phenyl which are substituted in the 3-position by a phenoxy radical, which can be substituted by $(C_1–C_5)$alkyl, $(C_1–C_5)$alkoxy, $(C_1–C_5)$alkylthio, $(C_1–C_5)$alkylenedioxy, halogen, nitro or $(C_1–C_5)$haloalkoxy, are excluded.

2. A compound of the formula I of claim 1, wherein

$R^2$ and $R^3$ denote $(C_1–C_3)$alkyl or, together, denote an alkylene chain which, together with the neighboring silicon atom, produces a four- to six-membered ring and

$R^4$ denotes H, cyano or $(C_1–C_4)$alkyl.

3. A compound of the formula I of claim 1 or 2, wherein $R^1$ denotes a phenyl radical of the formula (A) where $R^7$, $R^8$ and $R^9$ denote halogen, $(C_1–C_4)$alkyl, $(C_2–C_6)$alkenyl, $(C_3–C_7)$cycloalkyl, $(C_1–C_5)$alkoxy, $(C_2–C_4)$alkenyloxy, $(C_1–C_4)$haloalkyl or $(C_1–C_3)$haloalkoxy, $R^4$ denotes hydrogen and $R^5$ denotes a radical of the formula C in which $(R^{10})_p$ represents H or 4-fluoro and $(R^{11})_q$ is located in the 3-position of the phenyl radical and denotes a radical of the formula

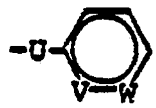

4. A process for the preparation of a compound of the formula I, which comprises reacting
a) for compounds where X = $CH_2$, a silane of the general formula (II),

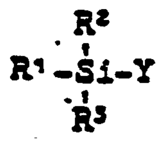

in which
Y denotes a nucleofugic leaving group such as, for example, halogen or sulfonate, with an organometallic reagent of the general formula (III),

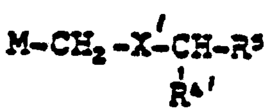
(III)

in which
M corresponds to an alkali metal or alkaline earth metal equivalent,
X′ corresponds to a methylene group and
$R^{4\prime}$ corresponds to H, CN, F or $(C_1–C_4)$alkyl, or
b) a silane of the general formula (IV) or (V)

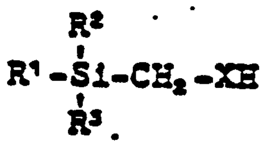
(IV)

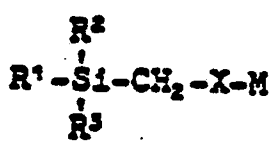
(V)

with an alkylating agent of the general formula VI,

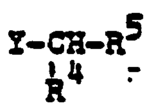
(VI)

if appropriate in the presence of a base, or
c) a silane of the general formula (VII)

(VII)

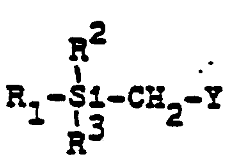

with an XH-acidic compound of the type (VIII)

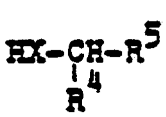
(VIII)

in the presence of a base or with an organometallic compound of the type IX

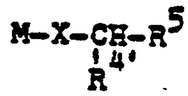

(IX)

or

d) for compounds where X = $CH_2$, a silane of the general formula (X)

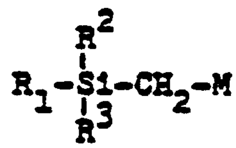

(X)

with a compound of the type (XI)

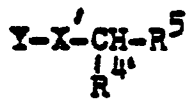

(XI)

or

e) for compounds where X = $CH_2$, a silane of the general formula (XII)

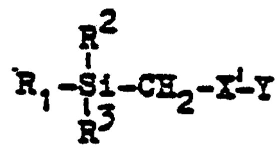

(XII)

with an organometallic compound of the general formula (XIII)

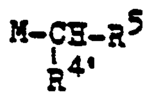

(XIII)

or

f) a silane of the general formula (XIV)

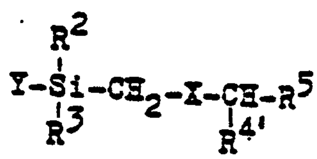

(XIV)

with an organometallic reagent of the type (XV)

$$R^{1'}-M \quad (XV)$$

in which

$R^{1'}$ has the meaning of $R^1$ with the exception of nitro, cyano, amino and carbonyl-containing radicals or

g) reacting a silane of the general formula (XVI)

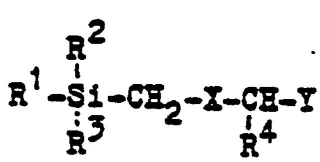

(XVI)

with an organometallic reagent of the type (XVII)

$$M-R^5 \quad (XVII)$$

or

h) for compounds where X = $CH_2$, a silane of the general formula (XXX)

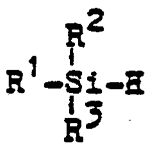

(XXX)

with an olefin of the general formula (XXXI)

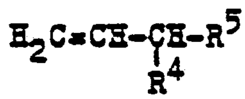

in the presence of a complex of an element of subgroup VIII of the periodic system as catalyst or
i) for compounds where X ≠ $CH_2$, a silane of the general formula (XXXII)

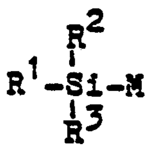

(XXXII)

with an alkylating agent of the general formula (XXXIII)

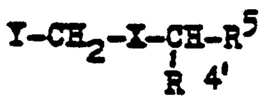

(XXXIII)

5. A pesticide which contains a compound of the formula I as claimed in claim 1.
6. An insecticide which contains a compound of the formula I as claimed in claims 1, 2 or 3.
7. An acaricide which contains a compound of the formula I as claimed in claims 1, 2 or 3.
8. A nematocide which contains a compound of the formula I as claimed in claims 1, 2 or 3.
9. The use of compounds of the formula I, as claimed in claims 1, 2 or 3, as pesticides.
10. A process for combating insect pests, acaricides or nematodes, which comprises applying an effective amount of a compound of the formula I to these and the surfaces, plants or substrates infested by them.
11. A compound of the formula XIV as claimed in claim 4.
12. A compound of the formula XXXI as claimed in claim 4 in which $R^4$ is H, $R^5$ is a radical of the formulae

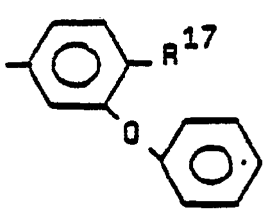

,

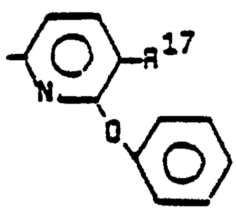

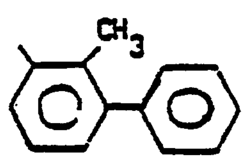

or

and $R^{17}$ denotes H or halogen, in particular H or fluorine.

**Claims for the Contracting State: ES**

1. A process for the preparation of a compound of the formula I, its optical isomers and their mixtures,

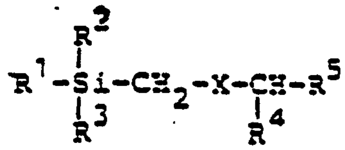 (I),

in which

X denotes $CH_2$, O, S, $NR^6$,

$R^1$ denotes $(C_2–C_{12})$alkyl which can be substituted by halogen or $(C_1–C_4)$alkoxy, cyclohexyl which can be monosubstituted or disubstituted by $(C_1–C_4)$alkyl, halogen or $(C_1–C_4)$alkoxy, $(C_4–C_8)$alkenyl which can be mono- or polysubstituted by halogen and/or mono- or disubstituted by $(C_1–C_4)$alkoxy, a phenyl or naphthyl radical of the formulae (A) or (B)

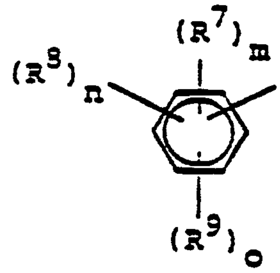 (A)

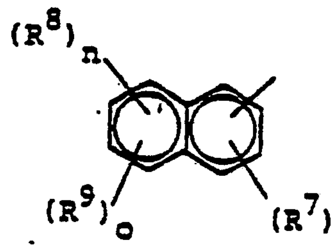 (B),

in which m, n and o have the values 0 to 4 in formula (A) and 0 to 3 in formula (B), with the proviso that $0 \le m+n+o \le 4$, and $R^7$, $R^8$ and $R^9$, independently of one another, denote $(C_1–C_4)$alkyl which can be substituted by hydroxyl; tri$(C_1–C_4)$alkylsilyl, halogen, nitro, cyano, $(C_2–C_6)$alkenyl, $(C_2–C_6)$alkynyl, amino, $(C_3–C_7)$cycloalkyl, phenyl, phenoxy, $(C_1–C_5)$alkoxy, $(C_2–C_4)$alkenyloxy, $(C_2–C_4)$alkynyloxy, hydroxycarbonyl, $(C_1–C_4)$alkylthio, $(C_3–C_7)$cycloalkyloxy, $(C_1–C_6)$alkylcarbonyl, $(C_1–C_4)$alkoxycarbonyl, $(C_2–C_4)$alkenyloxycarbonyl, $(C_3–C_5)$alkynyloxycarbonyl, $(C_1–C_4)$haloalkyl, $(C_1–C_4)$alkoxy$(C_1–C_4)$alkyl, $(C_1–C_3)$haloalkoxy, $(C_1–C_3)$haloalkylthio, halo$(C_1–C_4)$alkoxy$(C_1–C_4)$alkyl, $(C_1–C_4)$alkylthio$(C_1–C_4)$alkyl, $(C_1–C_4)$alkoxy$(C_1–C_4)$alkoxy, halo$(C_1–C_4)$alkoxy$(C_1–C_4)$alkoxy, $(C_2–C_4)$alkenyloxy $(C_1–C_4)$alkoxy, halo$(C_2–C_4)$alkenyloxy [sic], $(C_1–C_4)$alkoxy$(C_1–C_4)$alkylthio, $(C_1–C_4)$alkylthio$(C_1–C_4)$alkoxy, $(C_1–C_4)$alkylthio-$(C_1–C_4)$alkylthio, halo$(C_1–C_4)$alkoxycarbonyl, halo$(C_2–C_4)$alkenyloxycarbonyl or di$(C_1–C_6$alkyl)amino, or two of the radicals $R^7$, $R^8$ and $R^9$, if they are in the ortho positions to one another, form a methylenedioxy, ethylenedioxy or $(C_2–C_5)$alkylene radical,

$R^2$ and $R^3$, independently of one another, denote $(C_1–C_3)$alkyl, $(C_2–C_8)$alkenyl, or phenyl or $R^2$ and $R^3$ together denote an alkylene chain which – together with the silicon atom – produces an unsubstituted or $(C_1–C_4)$alkyl-substituted heterocycle having four to six ring members,

$R^4$ denotes –H, –CN, $–CCl_3$, –C≡CH, $(C_1–C_4)$alkyl, F or

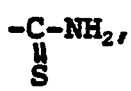,

$R^5$ denotes a phenyl radical of the formula (C)

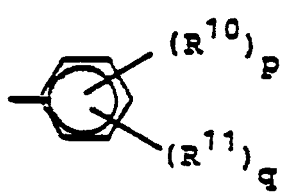 (C)

in which

$R^{10}$ and $R^{11}$ – independently of one another – may denote H, halogen, $(C_1–C_4)$alkyl, $(C_1–C_4)$alkoxy, $(C_1–C_4)$haloalkyl, phenyl, N-pyrrolyl or a group of the general formula (D)

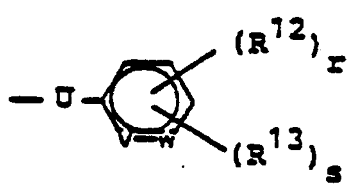 (D)

in which
$R^{12}$ and $R^{13}$ – independently of one another – may again denote H, halogen, $(C_1–C_4)$alkyl, $(C_1–C_4)$alkoxy or $(C_1–C_4)$haloalkyl,
U represents $CH_2$, CO, O or S; V and W represent CH or N, where both radicals V and W in the same molecule may not denote N,
p and q denote an integer from 0 to 5 with the condition that the sum p+q must be a number from 1 to 5,
r and s denote 0, 1 or 2 with the condition that the sum of r+s must be 0, 1 or 2 and with the condition that, if $R^{10}$ or $R^{11}$ corresponds to the group (D), p and q must denote 0 or 1 and p+q must denote 1 or 2, a pyridyl radical of the formula (E)

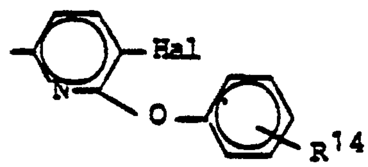

(E)

in which
$R^{14}$ denotes halogen apart from I, $(C_1–C_4)$alkyl, $(C_1–C_4)$alkoxy or $(C_1–C_4)$haloalkyl and Hal denotes halogen or H, a thienyl or furyl radical of the formula (F)

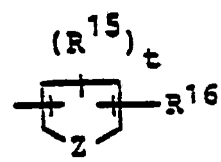

(F)

in which
Z is O or S,
$R^{15}$ denotes H, halogen, $(C_1–C_4)$alkyl, $(C_1–C_4)$alkoxy, $(C_1–C_4)$haloalkyl, CN or $NO_2$, and
$R^{16}$ denotes optionally substituted benzyl, propargyl or allyl, or
$R^4$ and $R^5$ – together with the carbon atom bridging them – denote an indanyl, cyclopentenoyl or cyclopentenyl radical, and
$R^6$ denotes H, $(C_1–C_3)$alkyl or phenyl, where compounds of the formula I in which
X denotes O,
$R^1$ denotes phenyl, which can be substituted by $(C_1–C_5)$alkyl, $(C_1–C_5)$alkoxy, $(C_1–C_5)$alkylthio, $(C_1–C_5)$-alkylenedioxy, halogen, nitro or $(C_1–C_5)$haloalkoxy,
$R^2$ and $R^3$, independently of one another, denote $(C_1–C_3)$alkyl,
$R^4$ denotes H, and
$R^5$ denotes (4-fluoro-3-phenoxy)phenyl; pyridyl or phenyl which are substituted in the 3-position by a phenoxy radical, which can be substituted by $(C_1–C_5)$alkyl, $(C_1–C_5)$alkoxy, $(C_1–C_5)$alkylthio, $(C_1–C_5)$-alkylenedioxy, halogen, nitro or $(C_1–C_5)$haloalkoxy, are excluded, which comprises reating

a) for compounds where X = $CH_2$, a silane of the general formula (II),

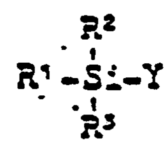

in which
Y denotes a nucleofugic leaving group such as, for example, halogen or sulfonate, with an organometallic reagent of the general formula (III),

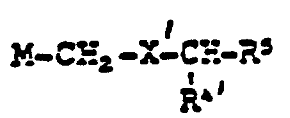

(III)

in which
M corresponds to an alkali metal or alkaline earth metal equivalent,
X′ corresponds to a methylene group, and
$R^{4\prime}$ corresponds to H, CN, F or $(C_1–C_4)$alkyl, or
b) a silane of the general formula (IV) or (V)

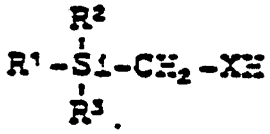 (IV)

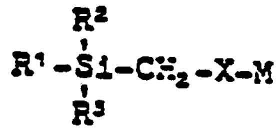 (V)

with an alkylating agent of the general formula VI,

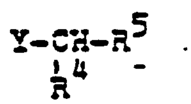 (VI)

if appropriate in the presence of a base, or

c) a silane of the general formula (VII)

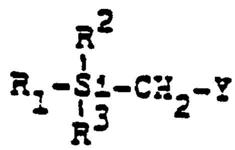 (VII)

with an XH-acidic compound of the type (VIII)

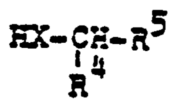 (VIII)

in the presence of a base, or with an organometallic compound of the type IX

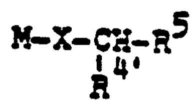 (IX)

or

d) for compounds where X = $CH_2$, a silane of the general formula (X)

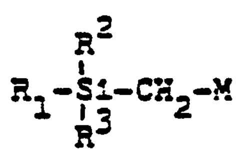 (X)

with a compound of the type (XI)

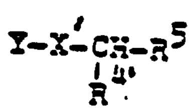 (XI)

or

e) for compounds where X = $CH_2$, a silane of the general formula (XII)

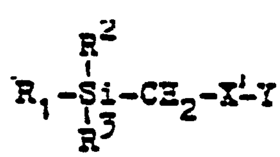 (XII)

with an organometallic compound of the general formula (XIII)

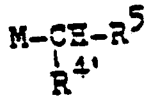

(XIII)

or

f) a silane of the general formula (XIV)

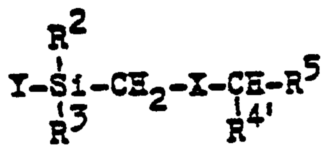

(XIV)

with an organometallic reagent of the type (XV)

$R^{1'}$–M (XV)

in which

$R^{1'}$ has the meaning of $R^1$ with the exception of nitro, cyano, amino and carbonyl-containing radicals or

g) reacting a silane of the general formula (XVI)

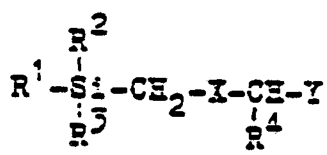

(XVI)

with an organometallic reagent of the type (XVII)

M–$R^5$ (XVII)

or

h) for compounds where X = $CH_2$, a silane of the general formula (XXX)

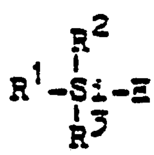

(XXX)

with an olefin of the general formula (XXXI)

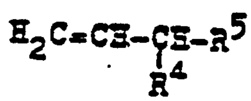

in the presence of a complex of an element of subgroup VIII of the periodic system as catalyst or

i) for compounds where X ≠ $CH_2$, a silane of the general formula (XXXII)

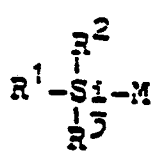

(XXXII)

with an alkylating agent of the general formula (XXXIII)

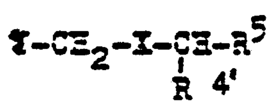

(XXXIII).

2. A process as claimed in claim 1, wherein $R^2$ and $R^3$ denote ($C_1$–$C_3$)alkyl or, together, denote an alkylene chain which, together with the neighboring silicon atom, produces a four- to six-membered ring and

$R^4$ denotes H, cyano or ($C_1$–$C_4$)alkyl.

3. A process as claimed in claim 1 or 2, wherein $R^1$ denotes a phenyl radical of the formula (A) where $R^7$, $R^8$ and $R^9$ denote halogen, ($C_1$–$C_4$)alkyl, ($C_2$–$C_6$)alkenyl, ($C_3$–$C_7$)cycloalkyl, ($C_1$–$C_5$)alkoxy, ($C_2$–$C_4$)alkenyloxy, ($C_1$–$C_4$)haloalkyl or ($C_1$–$C_3$)haloalkoxy, $R^4$ denotes hydrogen, and $R^5$ denotes a radical of the formula C, in which $(R^{10})_p$ represents H or 4-fluoro, and $(R^{11})_q$ is located in the 3-position of the phenyl radical and denotes a radical of the formula

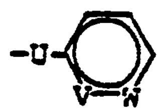

4. A process for combating insect pests, acaricides or nematodes, which comprises applying an effective amount of a compound of the formula I to these and the surfaces, plants or substrates infested by them.

**Claims for the Contracting State: AT**

1. A process for the preparation of a compound of the formula I, its optical isomers and their mixtures

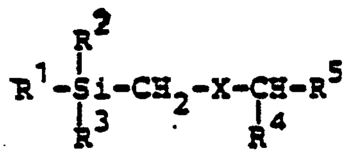

(I),

in which

X denotes $CH_2$, O, S, $NR^6$,

$R^1$ denotes ($C_2$–$C_{12}$)alkyl which can be substituted by halogen or ($C_1$–$C_4$)alkoxy, cyclohexyl which can be monosubstituted or disubstituted by ($C_1$–$C_4$)alkyl, halogen or ($C_1$–$C_4$)alkoxy, ($C_4$–$C_8$)alkenyl which can be mono- or polysubstituted by halogen and/or mono- or disubstituted by ($C_1$–$C_4$)alkoxy, a phenyl or naphthyl radical of the formulae (A) or (B)

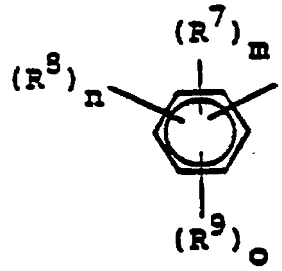

(A)

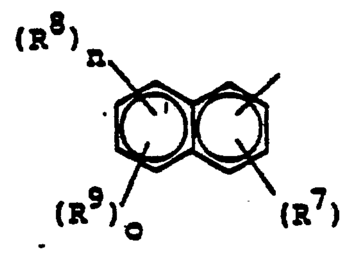

(B),

in which m, n and o have the values 0 to 4 in formula (A) and 0 to 3 in formula (B), with the proviso that $0 \leq m+n+o \leq 4$, and $R^7$, $R^8$ and $R^9$, independently of one another, denote ($C_1$–$C_4$)alkyl which can be substituted by hydroxyl; tri($C_1$–$C_4$)alkylsilyl, halogen, nitro, cyano, ($C_2$–$C_6$)alkenyl, ($C_2$–$C_6$)alkynyl, amino, ($C_3$–$C_7$)cycloalkyl, phenyl, phenoxy, ($C_1$–$C_5$)alkoxy, ($C_2$–$C_4$)alkenyloxy, ($C_2$–$C_4$)alkynyloxy, hydroxycarbonyl, ($C_1$–$C_4$)alkylthio, ($C_3$–$C_7$)cycloalkyloxy, ($C_1$–$C_6$)alkylcarbonyl, ($C_1$–$C_4$)alkoxycarbonyl, ($C_2$–$C_4$)alkenyloxycarbonyl, ($C_3$–$C_5$)alkynyloxycarbonyl, ($C_1$–$C_4$)haloalkyl, ($C_1$–$C_4$)alkoxy($C_1$–$C_4$)alkyl, ($C_1$–$C_3$)haloalkoxy, ($C_1$–$C_3$)haloalkylthio, halo($C_1$–$C_4$)alkoxy($C_1$–$C_4$)alkyl, ($C_1$–$C_4$)alkylthio($C_1$–$C_4$)alkyl, ($C_1$–$C_4$)alkoxy($C_1$–$C_4$)alkoxy, halo($C_1$–$C_4$)alkoxy($C_1$–$C_4$)alkoxy, ($C_2$–$C_4$)alkenyloxy($C_1$–$C_4$)alkoxy, halo($C_2$–$C_4$)alkenyloxy [sic], ($C_1$–$C_4$)alkoxy($C_1$–$C_4$)alkylthio, ($C_1$–$C_4$)alkylthio($C_1$–$C_4$)alkoxy, ($C_1$–$C_4$)alkylthio-($C_1$–$C_4$)alkylthio, halo($C_1$–$C_4$)alkoxycarbonyl, halo($C_2$–$C_4$)alkenyloxycarbonyl or di($C_1$–$C_6$alkyl)amino, or two of the radicals $R^7$, $R^8$ and $R^9$, if they are in the ortho positions to one another, form a methylenedioxy, ethylenedioxy or ($C_3$–$C_5$)alkylene radical,

$R^2$ and $R^3$, independently of one another, denote ($C_1$–$C_3$)alkyl, ($C_2$–$C_8$)alkenyl, or phenyl or $R^2$ and $R^3$ together denote an alkylene chain which – together with the silicon atom – produces an unsubstituted or ($C_1$–$C_4$)alkylsubstituted heterocycle having four to six ring members,

$R^4$ denotes –H, –CN, $-CCl_3$, –C≡CH, ($C_1$–$C_4$)alkyl, F or

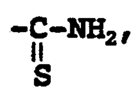

$R^5$ denotes a phenyl radical of the formula (C)

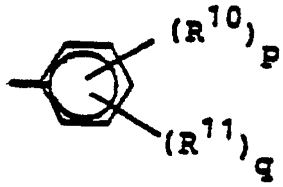

(C)

in which
$R^{10}$ and $R^{11}$ – independently of one another – may denote H, halogen, $(C_1–C_4)$alkyl, $(C_1–C_4)$alkoxy, $(C_1–C_4)$haloalkyl, phenyl, N-pyrrolyl or a group of the general formula (D)

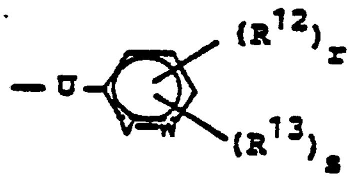

(D)

in which
$R^{12}$ and $R^{13}$ – independently of one another – may again denote H, halogen, $(C_1–C_4)$alkyl, $(C_1–C_4)$alkoxy or $(C_1–C_4)$haloalkyl,
U represents $CH_2$, CO, O or S; V and W represent CH or N, where both radicals V and W in the same molecule may not denote N,
p and q denote an integer from 0 to 5 with the condition that the sum p+q must be a number from 1 to 5,
r and s denote 0, 1 or 2 with the condition that the sum of r+s must be 0, 1 or 2 and with the condition that, if $R^{10}$ or $R^{11}$ corresponds to the group (D), p and q must denote 0 or 1 and p+q must denote 1 or 2, a pyridyl radical of the formula (E)

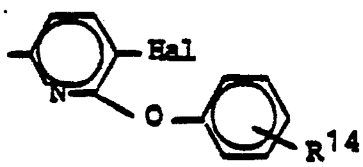

(E)

in which
$R^{14}$ denotes halogen apart from I, $(C_1–C_4)$alkyl, $(C_1–C_4)$alkoxy or $(C_1–C_4)$haloalkyl and Hal denotes halogen or H, a thienyl or furyl radical of the formula (F)

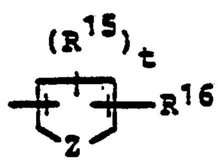

(F)

in which
Z is O or S,
$R^{15}$ denotes H, halogen, $(C_1–C_4)$alkyl, $(C_1–C_4)$alkoxy, $(C_1–C_4)$haloalkyl, CN or $NO_2$, and
$R^{16}$ denotes optionally substituted benzyl, propargyl or allyl, or
$R^4$ and $R^5$ – together with the carbon atom bridging them – denote an indanyl, cyclopentenoyl or cyclopentenyl radical, and
$R^6$ denotes H, $(C_1–C_3)$alkyl or phenyl,
where compounds of the formula I in which
X denotes O,
$R^1$ denotes phenyl, which can be substituted by $(C_1–C_5)$alkyl, $(C_1–C_5)$alkoxy, $(C_1–C_5)$alkylthio, $(C_1–C_5)$alkylenedioxy, halogen, nitro or $(C_1–C_5)$haloalkoxy,
$R^2$ and $R^3$, independently of one another, denote $(C_1–C_3)$alkyl,
$R^4$ denotes H, and
$R^5$ denotes (4-fluoro-3-phenoxy)phenyl; pyridyl or phenyl which are substituted in the 3-position by a phenoxy radical, which can be substituted by $(C_1–C_5)$alkyl, $(C_1–C_5)$alkoxy, $(C_1–C_5)$alkylthio, $(C_1–C_5)$alkylenedioxy, halogen, nitro or $(C_1–C_5)$haloalkoxy, are excluded, which comprises reacting

a) for compounds where X = $CH_2$, a silane of the general formula (II),

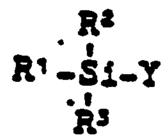

in which
Y denotes a nucleofugic leaving group such as, for example, halogen or sulfonate, with an organometallic reagent of the general formula (III),

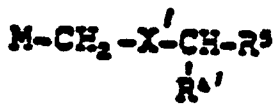
(III)

in which
M corresponds to an alkali metal or alkaline earth metal equivalent,
X′ corresponds to a methylene group, and
$R^{4\prime}$ corresponds to H, CN, F or $(C_1–C_4)$alkyl, or
b) a silane of the general formula (IV) or (V)

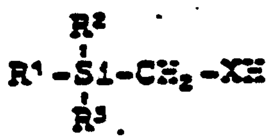
(IV)

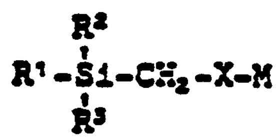
(V)

with an alkylating agent of the general formula VI,

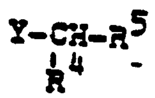
(VI)

if appropriate in the presence of a base, or
c) a silane of the general formula (VII)

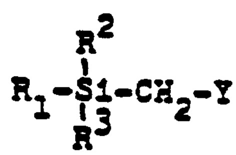
(VII)

with an XH-acidic compound of the type (VIII)

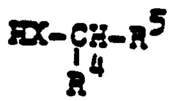
(VIII)

in the presence of a base, or with an organometallic compound of the type IX

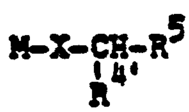
(IX)

or
d) for compounds where X = $CH_2$, a silane of the general formula (X)

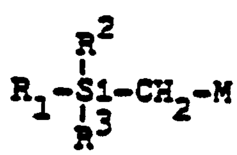
(X)

with a compound of the type (XI)

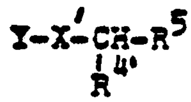 (XI)

or

e) for compounds where X = $CH_2$, a silane of the general formula (XII)

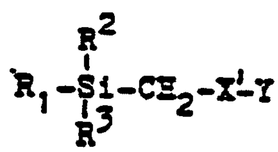 (XII)

with an organometallic compound of the general formula (XIII)

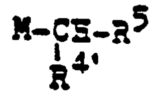 (XIII)

or

f) a silane of the general formula (XIV)

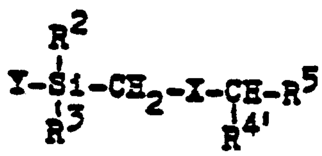 (XIV)

with an organometallic reagent of the type (XV)

$R^{1'}–M$ (XV)

in which

$R^{1'}$ has the meaning of $R^1$ with the exception of nitro, cyano, amino and carbonyl-containing radicals or

g) reacting a silane of the general formula (XVI)

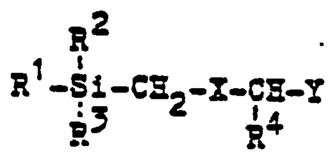 (XVI)

with an organometallic reagent of the type (XVII)

$M–R^5$ (XVII)

or

h) for compounds where X = $CH_2$, a silane of the general formula (XXX)

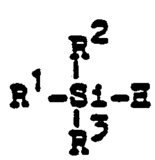 (XXX)

with an olefin of the general formula (XXXI)

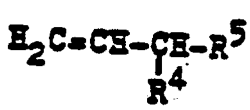

in the presence of a complex of an element of subgroup VIII of the periodic system as catalyst or

i) for compounds where X ≠ $CH_2$, a silane of the general formula (XXXII)

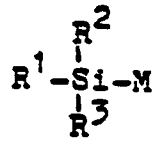

(XXXII)

with an alkylating agent of the general formula (XXXIII)

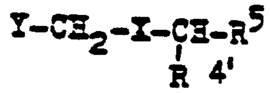

(XXXIII).

2. A process as claimed in claim 1, wherein $R^2$ and $R^3$ denote ($C_1$–$C_3$)alkyl or, together, denote an alkylene chain which, together with the neighboring silicon atom, produces a four- to six-membered ring and $R^4$ denotes H, cyano or ($C_1$–$C_4$)alkyl.

3. A process as claimed in claim 1 or 2, wherein $R^1$ denotes a phenyl radical of the formula (A) where $R^7$, $R^8$ and $R^9$ denote halogen, ($C_1$–$C_4$)alkyl, ($C_2$–$C_6$)alkenyl, ($C_3$–$C_7$)cycloalkyl, ($C_1$–$C_5$)alkoxy, ($C_2$–$C_4$)alkenyloxy, ($C_1$–$C_4$)haloalkyl or ($C_1$–$C_3$)haloalkoxy, $R^4$ denotes hydrogen, and $R^5$ denotes a radical of the formula C, in which $(R^{10})_p$ represents H or 4-fluoro, and $(R^{11})_q$ is located in the 3-position of the phenyl radical and denotes a radical of the formula

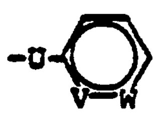

4. A pesticide which contains a compound of the formula I as claimed in claim 1.

5. An insecticide which contains a compound of the formula I as claimed in claims 1, 2 or 3.

6. An acaricide which contains a compound of the formula I as claimed in claims 1, 2 or 3.

7. A nematocide which contains a compound of the formula I as claimed in claims 1, 2 or 3.

8. The use of compounds of the formula I, as claimed in claims 1, 2 or 3, as pesticides.

9. A process for combating insect pests, acaricides or nematodes, which comprises applying an effective amount of a compound of the formula I to these and the surfaces, plants or substrates infested by them.

**Revendications pour les Etats Contractants: BE, CH, DE, FR, GB, GR, IT, LI, NL**

1. Composés de formule I, leurs isomères optiques et leurs mélanges,

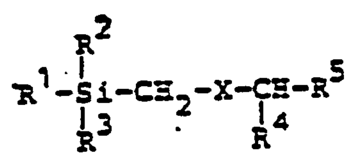

(I),

dans laquelle
X représente $CH_2$, O, S, $NR^6$,
$R^1$ représente un reste alkyle en $C_2$ à $C_{12}$ (qui peut être substitué par de l'halogène ou par un groupe alcoxy en $C_1$ à $C_4$), un reste cyclohexyle (qui peut être substitué une ou deux fois par un groupe alkyle en $C_1$ à $C_4$, par un halogène ou par un groupe alcoxy en $C_1$ à $C_4$), un reste alcényle en $C_4$ à $C_8$ (qui peut être substitué une ou plusieurs fois par de l'halogène et/ou une ou deux fois par un groupe alcoxy en $C_1$ à $C_4$), un reste phényle ou naphtyle répondant aux formules (A) ou (B) :

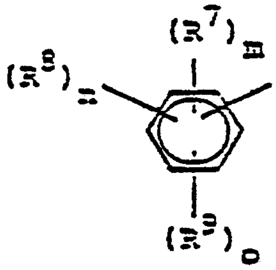 (A) · 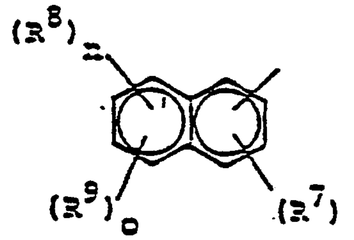 (B),

les nombres m, n, o valant 0 à 4 dans la formule (A) et 0 à 3 dans la formule (B), à la condition que O ≤ m+n+o≤4, et $R^7$, $R^8$ et $R^9$ représentent chacun, indépendamment l'un de l'autre, un groupe alkyle en $C_1$ à $C_4$ (pouvant être substitué par un groupe hydroxyle), un groupe trialkyl (en $C_1$ à $C_4$) silyle, un atome d'halogène, un groupe nitro, cyano, alcényle en $C_2$ à $C_6$, alcynyle en $C_2$ à $C_6$, amino, cycloalkyle en $C_3$ à $C_7$, phényle, phénoxy, alcoxy en $C_1$ à $C_5$, alcényloxy en $C_2$ à $C_4$, alcynyloxy en $C_2$ à $C_4$, hydroxycarbonyle, alkylthio (en $C_1$ à $C_4$), cycloalkyloxy (en $C_3$ à $C_7$), alkyl (en $C_1$ à $C_6$) carbonyle, alcoxy (en $C_1$ à $C_4$) carbonyle, alcényl (en $C_2$ à $C_4$) oxycarbonyle, alcynyl (en $C_3$ à $C_5$) oxycarbonyle, halogénoalkyle en $C_1$ à $C_4$, alcoxy (en $C_1$ à $C_4$) alkyle (en $C_1$ à $C_4$), halogénoalcoxy en $C_1$ à $C_3$, halogénoalkylthio en $C_1$ à $C_3$, halogénoalcoxy (en $C_1$ à $C_4$) alkyle (en $C_1$ à $C_4$), alkyl (en $C_1$ à $C_4$) thio alkyle (en $C_1$ à $C_4$), alcoxy (en $C_1$ à $C_4$) alcoxy (en $C_1$ à $C_4$); halogénoalcoxy (en $C_1$ à $C_4$) alcoxy (en $C_1$ à $C_4$), alcényl (en $C_2$ à $C_4$) oxyalcoxy (en $C_1$ à $C_4$), halogénoalcényloxy en $C_2$ à $C_4$, alcoxy (en $C_1$ à $C_4$) alkyl (en $C_1$ à $C_4$) thio, alkyl (en $C_1$ à $C_4$) thio alcoxy (en $C_1$ à $C_4$), alkyl (en $C_1$ à $C_4$) thio alkyl (en $C_1$ à $C_4$) thio, halogéno alcoxy (en $C_1$ à $C_4$) carbonyle, halogéno alcényl (en $C_2$ à $C_4$) oxycarbonyle, di(alkyl en $C_1$ à $C_6$) amino, ou bien deux des restes $R^7$, $R^8$ et $R^9$ forment, quand ils sont en ortho l'un par rapport à l'autre, un reste méthylènedioxy, éthylènedioxy ou alkylène (en $C_3$ à $C_5$),

$R^2$ et $R^3$ représentent, indépendamment l'un de l'autre, chacun un reste alkyle en $C_1$ à $C_3$, alcényle en $C_2$ à $C_8$, phényle, ou bien $R^2$ et $R^3$ forment une chaîne alkylène qui, avec l'atome de silicium, donne un hétérocycle comportant 4 à 6 chaînons (tétragonal à hexagonal), non substitué ou substitué par un groupe alkyle en $C_1$ à $C_4$,

$R^4$ représente -H, -CN, $-CCl_3$, -C=CH, un reste alkyle en $C_1$ à $C_4$, F,

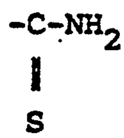

$R^5$ représente un reste phényle de formule (C)

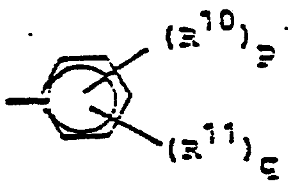 (C)

dans laquelle $R^{10}$ et $R^{11}$ peuvent représenter, indépendamment l'un de l'autre, un atome d'hydrogène ou d'halogène, un groupe alkyle en $C_1$ à $C_4$, alcoxy en $C_1$ à $C_4$, halogénoalkyle en $C_1$ à $C_4$, phényle, N-pyrrolyle ou un groupe de formule générale (D)

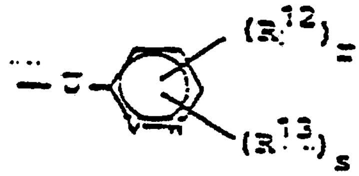 (D)

dans laquelle $R^{12}$ et $R^{13}$ peuvent représenter, indépendamment l'un de l'autre, à nouveau un atome d'hydrogène ou d'halogène, un groupe alkyle en $C_1$ à $C_4$, alcoxy en $C_1$ à $C_4$ et halogénoalkyle en $C_1$ à $C_4$, U représente $CH_2$, CO, O ou S ; V et W représentent chacun CH ou N, les deux restes V et W ne devant pas représenter N dans la même molécule,

p et q sont chacun un nombre entier valant 0 à 5, à la condition que la somme (p+q) soit un nombre valant 1 à 5, r et s valent 0, 1 ou 2, à la condition que la somme (r+s) vale 0, 1 ou 2, et à la condition que, si $R^{10}$ ou $R^{11}$ représente le groupement (D), p et q doivent valoir chacun 0 ou 1 et la somme (p+q) doit valoir 1 ou 2, un reste pyridyle de formule (E)

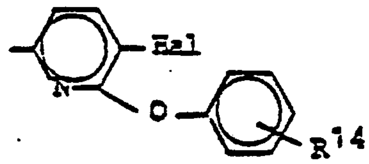

(E)

dans laquelle $R^{14}$ représente un atome d'halogène autre que I, un groupe alkyle en $C_1$ à $C_4$, un groupe alcoxy en $C_1$ à $C_4$ ou halogéno-alkyle en $C_1$ à $C_4$, et Hal représente un atome d'halogène ou d'hydrogène, un reste thiényle ou furyle de formule (F)

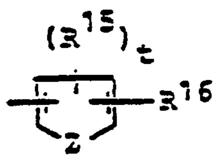

(F)

dans laquelle Z représente O ou S,
$R^{15}$ représente un atome d'hydrogène ou d'halogène, un groupe alkyle en $C_1$ à $C_4$, alcoxy en $C_1$ à $C_4$, halogénoalkyle en $C_1$ à $C_4$, CN ou $NO_2$, et
$R^{16}$ représente un groupe benzyle, propargyle, allyle éventuellement substitués, ou bien $R^4$ et $R^5$, avec l'atome de carbone qui les relie, forment un reste indanyle, cyclopentenoyle ou cyclopentényle, et
$R^6$ représente un atome d'hydrogène, un groupe alkyle en $C_1$ à $C_3$ ou phényle,
à l'exclusion des composés de formule (I), dans laquelle X représente O,
$R^1$ représente un groupe phényle (pouvant être substitué par un groupe alkyle en $C_1$ à $C_5$), alcoxy en $C_1$ à $C_5$, alkylthio en $C_1$ à $C_5$, alkylènedioxy en $C_1$ à $C_5$, halogéno, nitro ou halogéno-alcoxy en $C_1$ à $C_5$,
$R^2$ et $R^3$ représentent, indépendamment l'un de l'autre, un groupe alkyle en $C_1$ à $C_3$,
$R^4$ représente un atome d'hydrogène, et
$R^5$ représente un reste (fluoro-4 phénoxy-3) phényle; pyridyle ou phényle, qui sont substitués en position 3 par un reste phénoxy (qui peut être substitué par un groupe alkyle en $C_1$ à $C_5$, alcoxy en $C_1$ à $C_5$, alkylthio en $C_1$ à $C_5$, alkylènedioxy en $C_1$ à $C_5$, halogéno, nitro ou halogéno-alcoxy en $C_1$ à $C_5$).

2. Composés de formule I de la revendication 1, caractérisés en ce que
$R^2$ et $R^3$ représentent chacun un reste alkyle en $C_1$ à $C_3$ ou ils forment une chaîne alkylène qui, avec l'atome de silicium voisin, donne un noyau comportant 4 à 6 chaînons (tétragonal à hexagonal), et
$R^4$ représente un atome d'hydrogène, un reste cyano ou un reste alkyle en $C_1$ à $C_4$.

3. Composés de formule I selon la revendication 1 ou 2, caractérisés en ce que $R^1$ représente un reste phényle de formule (A) dans lequel $R^7$, $R^8$ et $R^9$ représentent chacun un atome d'halogène, un groupe alkyle en $C_1$ à $C_4$, alcényle en $C_2$ à $C_5$, cycloalkyle en $C_3$ à $C_7$, alcoxy en $C_1$ à $C_5$, alcényloxy en $C_2$ à $C_4$, halogénoalkyle en $C_1$ à $C_4$ ou halogénoalcoxy en $C_1$ à $C_3$ ;
$R^4$ représente un atome d'hydrogène et $R^5$ représente un reste de formule (C), dans lequel $(R^{10})p$ représente H ou un atome de fluor en position 4, et $(R^{11})q$ est situé en position 3 du reste phényle et représente un reste de formule:

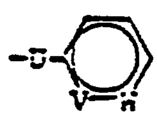

4. Procédé pour préparer les composés de formule I, procédé caractérisé en ce que
a) pour obtenir des composés dans lesquels X représente $CH_2$, on fait réagir un silane de formule générale (II)

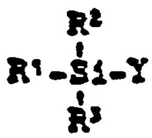

(II)

(dans laquelle Y représente un groupe partant nucléofuge, comme par exemple un atome d'halogène ou un groupe sulfonate) avec un réactif organométallique de formule générale (III)

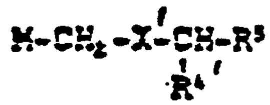 (III)

(dans laquelle M représente un équivalent de métal alcalin ou de métal alcalino-terreux, X' représente un groupe méthylène, et R4', représente H, CN, F ou un groupe alkyle en $C_1$ à $C_4$), ou bien

b) on fait réagir un silane de formule générale (IV) ou (V)

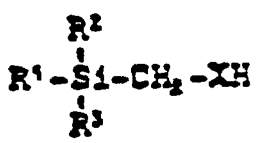 (IV) 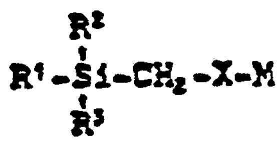 (V)

avec un agent d'alkylation de formule générale (VI)

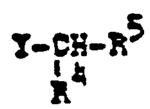 (VI)

en opérant éventuellement en présence d'une base, ou

c) on fait réagir un silane de formule générale (VII)

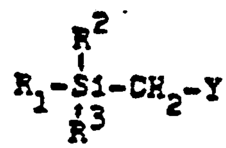 (VII)

avec un composé acide X-H de type (VIII)

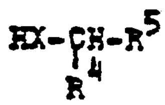 (VIII)

en présence d'une base, ou avec un composé organométallique de type (IX)

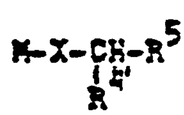 (IX)

ou

d) pour obtenir des composés dans lesquels X représente $CH_2$, on fait réagir un silane de formule générale (X)

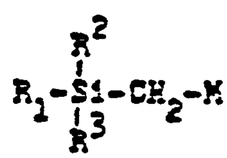 (X)

avec un composé du type (XI)

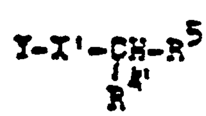 (XI)

ou bien

e) pour obtenir des composés dans lesquels X représente $CH_2$, on fait réagir un silane de formule générale (XII)

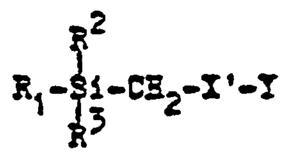

(XII)

avec un composé organométallique de formule générale (XIII)

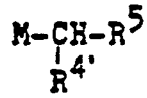

(XIII)

ou bien

f) on fait réagir un silane de formule générale (XIV)

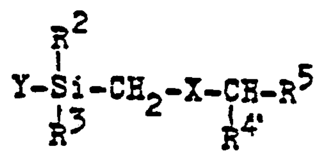

(XIV)

avec un réactif organométallique du type (XV)

$R^{1'}$-M (VX)

(dans lequel $R^{1'}$ a le sens de $R^1$, à l'exclusion des restes nitro, cyano, amino et des restes contenant un groupe carbonyle),

ou bien

g) on fait réagir un silane de formule générale (XVI)

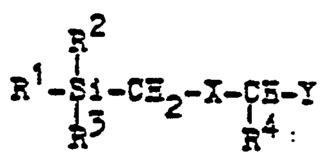

(XVI)

avec un réactif organométallique de type (XVII)

M-$R^5$ (XVII)

ou bien

h) pour obtenir des composés dans lesquels X représente $CH_2$, on fait réagir un silane de formule générale (XXX)

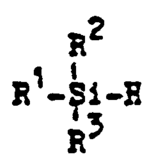

(XXX)

avec une oléfine de formule générale (XXXI)

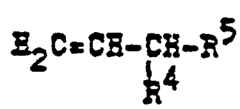

en présence d'un composé complexe d'un élément du sous-groupe VIII du système ou Tableau Périodique, à titre de catalyseur,

ou

i) pour obtenir des composés dans lesquels X est différent de $CH_2$, on fait réagir un silane de formule générale (XXXII)

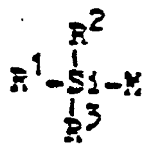

( XXXII )

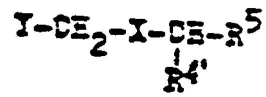

( XXXIII )

avec un agent d'alkylation de formule générale (XXXIII).

5. Produits phytosanitaires pour lutter contre les parasites, ces produits étant caractérisés en ce qu'ils contiennent un composé de formule (I) selon la revendication 1.

6. Produits insecticides, caractérisés en ce qu'ils contiennent un composé de formule I selon les revendications 1, 2 ou 3.

7. Produits acaricides, caractérisés en ce qu'ils contiennent un composé de formule (I) selon les revendications 1, 2 ou 3.

8. Produits nématocides, caractérisés en ce qu'ils contiennent un composé de formule (I) selon les revendications 1, 2 ou 3.

9. Utilisation de composés de formule (I) selon les revendications 1, 2 ou 3, comme produits phytosanitaires ou comme pesticides pour lutter contre les parasites.

10. Procédé pour combattre les insectes nuisibles, les acariens ou les nématodes, caractérisé en ce qu'on applique sur ces animaux, sur les surfaces, les plantes ou les substrats attaqué(e)s par ces animaux, une quantité efficace d'un composé de formule (I).

11. Composés de formule XIV selon la revendication 4.

12. Composés de formule XXXI selon la revendication 4, dans laquelle $R^4$ représente H, $R^5$ représente un reste répondant aux formules

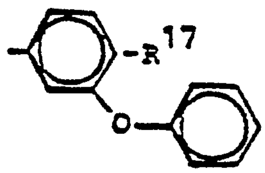

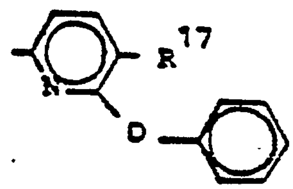

ou

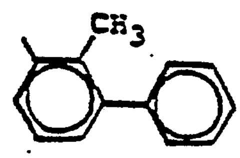

et $R^{17}$ représente un atome de H ou d'halogène, en particulier H ou le fluor.

**Revendications pour l'Etat Contractant: ES**

1. Procédé pour préparer des composés de formule I, leurs isomères optiques et leurs mélanges,

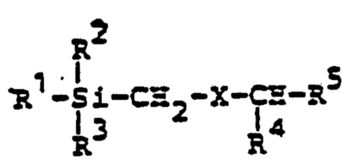

(I),

dans laquelle
X représente $CH_2$, O, S, $NR^6$,
$R^1$ représente un reste alkyle en $C_2$ à $C_{12}$ (qui peut être substitué par de l'halogène ou par un groupe alcoxy en $C_1$ à $C_4$), un reste cyclohexyle (qui peut être substitué une ou deux fois par un groupe alkyle en $C_1$ à $C_4$, par un halogène ou par un groupe alcoxy en $C_1$ à $C_4$), un reste alcényle en $C_4$ à $C_8$ (qui peut être substitué une ou plusieurs fois par de l'halogène et/ou une ou deux fois par un groupe alcoxy en $C_1$ à $C_4$), un reste phényle ou naphtyle répondant aux formules (A) ou (B):

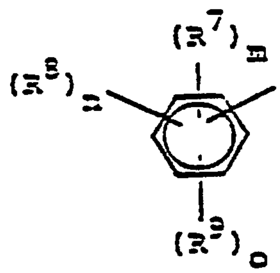 (A)

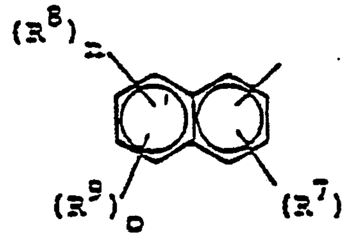 (B),

les nombres m, n, o valant 0 à 4 dans la formule (A) et 0 à 3 dans la formule (B), à la condition que $0 \leq m+n+o \leq 4$, et $R^7$, $R^8$ et $R^9$ représentent chacun, indépendamment l'un de l'autre, un groupe alkyle en $C_1$ à $C_4$ (pouvant être substitué par un groupe hydroxyle), un groupe trialkyl (en $C_1$ à $C_4$) silyle, un atome d'halogène, un groupe nitro, cyano, alcényle en $C_2$ à $C_6$, alcynyle en $C_2$ à $C_6$, amino, cycloalkyle en $C_3$ à $C_7$, phényle, phénoxy, alcoxy en $C_1$ à $C_5$, alcényloxy en $C_2$ à $C_4$, alcynyloxy en $C_2$ à $C_4$, hydroxycarbonyle, alkylthio (en $C_1$ à $C_4$), cycloalkyloxy (en $C_3$ à $C_7$), alkyl (en $C_1$ à $C_6$) carbonyle, alcoxy (en $C_1$ à $C_4$) carbonyle, alcényl (en $C_2$ à $C_4$) oxycarbonyle, alcynyl (en $C_3$ à $C_5$) oxycarbonyle, halogénoalkyle en $C_1$ à $C_4$, alcoxy (en $C_1$ à $C_4$) alkyle (en $C_1$ à $C_4$), halogénoalcoxy en $C_1$ à $C_3$, halogénoalkylthio en $C_1$ à $C_3$, halogénoalcoxy (en $C_1$ à $C_4$) alkyle (en $C_1$ à $C_4$), alkyl (en $C_1$ à $C_4$) thio alkyle (en $C_1$ à $C_4$), alcoxy (en $C_1$ à $C_4$) alcoxy (en $C_1$ à $C_4$); halogénoalcoxy (en $C_1$ à $C_4$) alcoxy (en $C_1$ à $C_4$), alcényl (en $C_2$ à $C_4$) oxyalcoxy (en $C_1$ à $C_4$), halogénoalcényloxy en $C_2$ à $C_4$, alcoxy (en $C_1$ à $C_4$) alkyl (en $C_1$ à $C_4$) thio, alkyl (en $C_1$ à $C_4$) thio alcoxy (en $C_1$ à $C_4$), alkyl (en $C_1$ à $C_4$) thio alkyl (en $C_1$ à $C_4$) thio, halogéno alcoxy (en $C_1$ à $C_4$) carbonyle, halogéno alcényl (en $C_2$ à $C_4$) oxycarbonyle, di(alkyl en $C_1$ à $C_6$) amino, ou bien deux des restes $R^7$, $R^8$ et $R^9$ forment, quand ils sont en ortho l'un par rapport à l'autre, un reste méthylènedioxy, éthylènedioxy ou alkylène (en $C_3$ à $C_5$),

$R^2$ et $R^3$ représentent, indépendamment l'un de l'autre, chacun un reste alkyle en $C_1$ à $C_3$, alcényle en $C_2$ à $C_8$, phényle, ou bien $R^2$ et $R^3$ forment une chaîne alkylène qui, avec l'atome de silicium, donne un hétérocycle comportant 4 à 6 chaînons (tétragonal à hexagonal), non substitué ou substitué par un groupe alkyle en $C_1$ à $C_4$,

$R^4$ représente –H, –CN, $-CCl_3$, –C≡CH, un reste alkyle en $C_1$ à $C_4$, F,

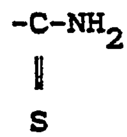

$R^5$ représente un reste phényle de formule (C)

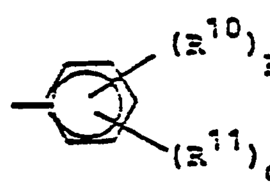 (C)

dans laquelle $R^{10}$ et $R^{11}$ peuvent représenter, indépendamment l'un de l'autre, un atome d'hydrogène ou d'halogène, un groupe alkyle en $C_1$ à $C_4$, alcoxy en $C_1$ à $C_4$, halogénoalkyle en $C_1$ à $C_4$, phényle, N-pyrrolyle ou un groupe de formule générale (D)

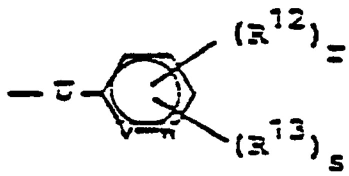 (D)

dans laquelle $R^{12}$ et $R^{13}$ peuvent représenter, indépendamment l'un de l'autre, à nouveau un atome d'hydrogène ou d'halogène, un groupe alkyle en $C_1$ à $C_4$, alcoxy en $C_1$ à $C_4$ et halogénoalkyle en $C_1$ à $C_4$, U représente $CH_2$, CO, O ou S; V et W représentent chacun CH ou N, les deux restes V et W ne devant pas représenter N dans la même molécule,

p et q sont chacun un nombre entier valant 0 à 5, à la condition que la somme (p+q) soit un nombre valant 1

à 5, r et s valent 0, 1 ou 2, à la condition que la somme (r+s) vale 0, 1 ou 2, et à la condition que, si $R^{10}$ ou $R^{11}$ représente le groupement (D), p et q doivent valoir chacun 0 ou 1 et la somme (p+q) doit valoir 1 ou 2, un reste pyridyle de formule (E)

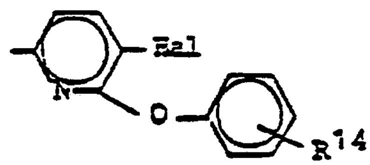 (E)

dans laquelle $R^{14}$ représente un atome d'halogène autre que I, un groupe alkyle en $C_1$ à $C_4$, un groupe alcoxy en $C_1$ à $C_4$ ou halogéno-alkyle en $C_1$ à $C_4$, et Hal représente un atome d'halogène ou d'hydrogène, un reste thiényle ou furyle de formule (F)

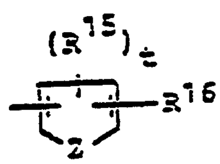 (F)

dans laquelle Z représente O ou S,
$R^{15}$ représente un atome d'hydrogène ou d'halogène, un groupe alkyle en $C_1$ à $C_4$, alcoxy en $C_1$ à $C_4$, halogéno-alkyle en $C_1$ à $C_4$, CN ou $NO_2$, et
$R^{16}$ représente un groupe benzyle, propargyle, allyle éventuellement substitués, ou bien $R^4$ et $R^5$, avec l'atome de carbone qui les relie, forment un reste indanyle, cyclopentenoyle ou cyclopentényle, et
$R^6$ représente un atome d'hydrogène, un groupe alkyle en $C_1$ à $C_3$ ou phényle,
à l'exclusion des composés de formule (I), dans laquelle X représente O,
$R^1$ représente un groupe phényle (pouvant être substitué par un groupe alkyle en $C_1$ à $C_5$), alcoxy en $C_1$ à $C_5$, alkylthio en $C_1$ à $C_5$, alkylènedioxy en $C_1$ à $C_5$, halogéno, nitro ou halogéno-alcoxy en $C_1$ à $C_5$,
$R^2$ et $R^3$ représentent, indépendamment l'un de l'autre, un groupe alkyle en $C_1$ à $C_3$,
$R^4$ représente un atome d'hydrogène, et
$R^5$ représente un reste (fluoro-4 phénoxy-3) phényle; pyridyle ou phényle, qui sont substitués en position 3 par un reste phénoxy (qui peut être substitué par un groupe alkyle en $C_1$ à $C_5$, alcoxy en $C_1$ à $C_5$, alkylthio en $C_1$ à $C_5$, alkylènedioxy en $C_1$ à $C_5$, halogéno, nitro ou halogéno-alcoxy en $C_1$ à $C_5$),
procédé caractérisé en ce que

a) pour obtenir des composés dans lesquels X représente $CH_2$, on fait réagir un silane de formule générale (II)

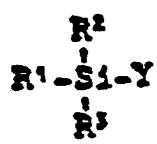 (II) ,

(dans laquelle Y représente un groupe partant nucléofuge, comme par exemple un atome d'halogène ou un groupe sulfonate) avec un réactif organométallique de formule générale (III)

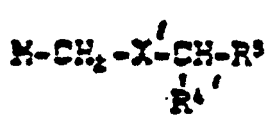 (III)

(dans laquelle M représente un équivalent de métal alcalin ou de métal alcalino-terreux, X' représente un groupe méthylène, et $R^{4'}$ représente H, CN, F ou un groupe alkyle en $C_1$ à $C_4$), ou bien

b) on fait réagir un silane de formule générale (IV) ou (V)

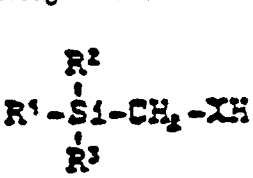 (IV) 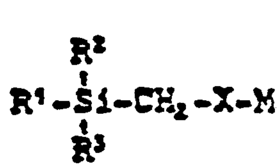 (V)

avec un agent d'alkylation de formule générale (VI)

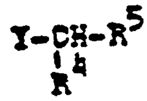

(VI)

en opérant éventuellement en présence d'une base, ou

c) on fait réagir un silane de formule générale (VII)

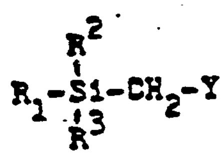

(VII)

avec un composé acide X–H de type (VIII)

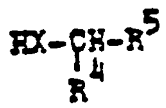

(VIII)

en présence d'une base, ou avec un composé organométallique de type (IX)

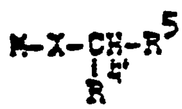

(IX)

ou

d) pour obtenir des composés dans lesquels X représente $CH_2$, on fait réagir un silane de formule générale (X)

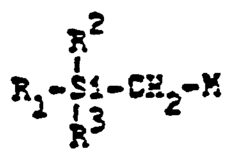

(X)

avec un composé du type (XI)

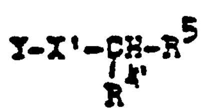

(XI)

ou bien

e) pour obtenir des composés dans lesquels X représente $CH_2$, on fait réagir un silane de formule générale (XII)

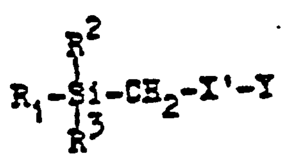

(XII)

avec un composé organométallique de formule générale (XIII)

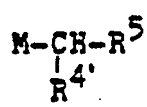

(XIII)

ou bien

f) on fait réagir un silane de formule générale (XIV)

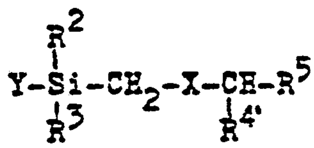 (XIV)

avec un réactif organométallique du type (XV)

$R^{1'}$–M (XV)

(dans lequel $R^{1'}$ a le sens de $R^1$, à l'exclusion des restes nitro, cyano, amino et des restes contenant un groupe carbonyle), ou bien

g) on fait réagir un silane de formule générale (XVI)

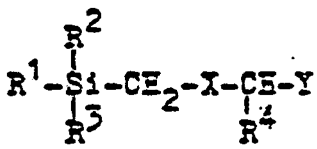 (XVI)

avec un réactif organométallique de type (XVII)

M–$R^5$ (XVII)

ou bien

h) pour obtenir des composés dans lesquels X représente $CH_2$, on fait réagir un silane de formule générale (XXX)

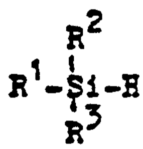 (XXX)

avec une oléfine de formule générale (XXXI)

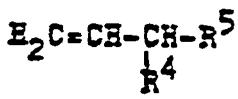 ( XXXI )

en présence d'un composé complexe d'un élément du sous-groupe VIII du système ou Tableau Périodique, à titre de catalyseur, ou

i) pour obtenir des composés dans lesquels X est différent de $CH_2$, on fait réagir un silane de formule générale (XXXII)

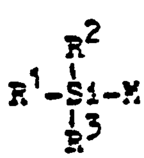 (XXXII)

avec un agent d'alkylation de formule générale (XXXIII).

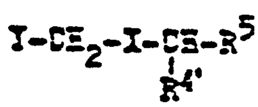 (XXXIII)

2. Procédé selon la revendication 1, caractérisé en ce que $R^2$ et $R^3$ représentent chacun un groupe alkyle en $C_1$ à $C_3$ ou bien ils forment ensemble une chaîne alkylène qui donne, avec l'atome de silicium voisin, un noyau tétragonal à hexagonal (4 à 6 chaînons), et

$R^4$ représente un atome d'hydrogène, un groupe cyano ou un groupe alkyle en $C_1$ à $C_4$.

3. Procédé selon la revendication 1 ou 2, caractérisé en ce que $R^1$ représente un reste phényle de formule (A), dans laquelle $R^7$, $R^8$ et $R^9$ représentent chacun un atome d'halogène, un groupe alkyle en $C_1$ à $C_4$, alcényle en $C_2$ à $C_6$, cycloalkyle en $C_3$ à $C_7$, alcoxy en $C_1$ à $C_5$ alcényloxy en $C_2$ à $C_4$, halogénoalkyle en $C_1$ à $C_4$ ou halogénoalcoxy en $C_1$ à $C_3$; $R^4$ représente un atome d'hydrogène et $R^5$ représente un reste de formule (C), dans laquelle $(R^{10})p$ représente H ou un atome de fluor fixé en position 4, et $(R^{11})q$ est fixé en position 3 du reste phényle, et représente un reste de formule:

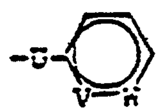

4. Procédé pour combattre des insectes nuisibles, des acariens ou des nématodes, caractérisé en ce qu'on applique sur ces animaux, sur les surfaces, les plantes ou les substrats qu'ils attaquent, une quantité efficace d'un composé de formule I.

**Revendications pour l'Etat Contractant: AT**

1. Procédé pour préparer des composés de formule I, leurs isomères optiques et leurs mélanges,

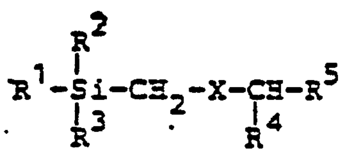

(I),

dans laquelle
X représente $CH_2$, O, S, $NR^6$,
$R^1$ représente un reste alkyle en $C_2$ à $C_{12}$ (qui peut être substitué par de l'halogène ou par un groupe alcoxy en $C_1$ à $C_4$), un reste cyclohexyle (qui peut être substitué une ou deux fois par un groupe alkyle en $C_1$ à $C_4$, par un halogène ou par un groupe alcoxy en $C_1$ à $C_4$), un reste alcényle en $C_4$ à $C_8$ (qui peut être substitué une ou plusieurs fois par de l'halogène et/ou une ou deux fois par un groupe alcoxy en $C_1$ à $C_4$), un reste phényle ou naphtyle répondant aux formules (A) ou (B):

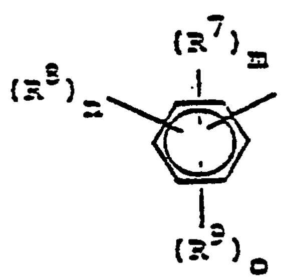

(A)

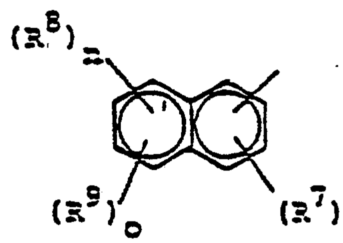

(B),

les nombres m, n, o valant 0 à 4 dans la formule (A) et 0 à 3 dans la formule (B), à la condition que $O \leq m+n+o \leq 4$, et $R^7$, $R^8$ et $R^9$ représentent chacun, indépendamment l'un de l'autre, un groupe alkyle en $C_1$ à $C_4$ (pouvant être substitué par un groupe hydroxyle), un groupe trialkyl (en $C_1$ à $C_4$) silyle, un atome d'halogène, un groupe nitro, cyano, alcényle en $C_2$ à $C_6$, alcynyle en $C_2$ à $C_6$, amino, cycloalkyle en $C_3$ à $C_7$, phényle, phénoxy, alcoxy en $C_1$ à $C_5$, alcényloxy en $C_2$ à $C_4$, alcynyloxy en $C_2$ à $C_4$, hydroxycarbonyle, alkylthio (en $C_1$ à $C_4$), cycloalkyloxy (en $C_3$ à $C_7$), alkyl (en $C_1$ à $C_6$) carbonyle, alcoxy (en $C_1$ à $C_4$) carbonyle, alcényl (en $C_2$ à $C_4$) oxycarbonyle, alcynyl (en $C_3$ à $C_5$) oxycarbonyle, halogénoalkyle en $C_1$ à $C_4$, alcoxy (en $C_1$ à $C_4$) alkyle (en $C_1$ à $C_4$), halogénoalcoxy en $C_1$ à $C_3$, halogénoalkylthio en $C_1$ à $C_3$, halogénoalcoxy (en $C_1$ à $C_4$) alkyle (en $C_1$ à $C_4$), alkyl (en $C_1$ à $C_4$) thio alkyle (en $C_1$ à $C_4$), alcoxy (en $C_1$ à $C_4$) alcoxy (en $C_1$ à $C_4$); halogénoalcoxy (en $C_1$ à $C_4$) alcoxy (en $C_1$ à $C_4$), alcényl (en $C_2$ à $C_4$) oxyalcoxy (en $C_1$ à $C_4$), halogénoalcényloxy en $C_2$ à $C_4$, alcoxy (en $C_1$ à $C_4$) alkyl (en $C_1$ à $C_4$) thio, alkyl (en $C_1$ à $C_4$) thio alcoxy (en $C_1$ à $C_4$), alkyl (en $C_1$ à $C_4$) thio alkyl (en $C_1$ à $C_4$) thio, halogéno alcoxy (en $C_1$ à $C_4$) carbonyle, halogéno alcényl (en $C_2$ à $C_4$) oxycarbonyle, di(alkyl en $C_1$ à $C_6$) amino, ou bien deux des restes $R^7$, $R^8$ et $R^9$ forment, quand ils sont en ortho l'un par rapport à l'autre, un reste méthylènedioxy, éthylènedioxy ou alkylène (en $C_3$ à $C_5$),
$R^2$ et $R^3$ représentent, indépendamment l'un de l'autre, chacun un reste alkyle en $C_1$ à $C_3$, alcényle en $C_2$ à $C_8$, phényle, ou bien $R^2$ et $R^3$ forment une chaîne alkylène qui, avec l'atome de silicium, donne un hétérocycle comportant 4 à 6 chaînons (tétragonal à hexagonal), non substitué ou substitué par un groupe alkyle en $C_1$ à $C_4$,

$R^4$ représente $-H$, $-CN$, $-CCl_3$, $-C{\equiv}CH$, un reste alkyle en $C_1$ à $C_4$, F

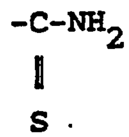

$R^5$ représente un reste phényle de formule (C)

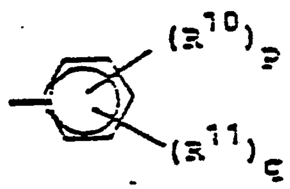

(C)

dans laquelle $R^{10}$ et $R^{11}$ peuvent représenter, indépendamment l'un de l'autre, un atome d'hydrogène ou d'halogène, un groupe alkyle en $C_1$ à $C_4$, alcoxy en $C_1$ à $C_4$, halogénoalkyle en $C_1$ à $C_4$, phényle, N-pyrrolyle ou un groupe de formule générale (D)

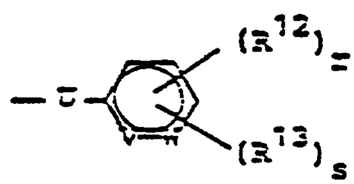

(D)

dans laquelle $R^{12}$ et $R^{13}$ peuvent représenter, indépendamment l'un de l'autre, à nouveau un atome d'hydrogène ou d'halogène, un groupe alkyle en $C_1$ à $C_4$, alcoxy en $C_1$ à $C_4$ et halogénoalkyle en $C_1$ à $C_4$, U représente $CH_2$, CO, O ou S; V et W représentent chacun CH ou N, les deux restes V et W ne devant pas représenter N dans la même molécule,
p et q sont chacun un nombre entier valant 0 à 5, à la condition que la somme (p+q) soit un nombre valant 1 à 5, r et s valent 0, 1 ou 2, à la condition que la somme (r+s) vale 0, 1 ou 2, et à la condition que, si $R^{10}$ ou $R^{11}$ représente le groupement (D), p et q doivent valoir chacun 0 ou 1 et la somme (p+q) doit valoir 1 ou 2,
un reste pyridyle de formule (E)

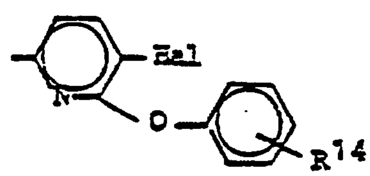

(E)

dans laquelle $R^{14}$ représente un atome d'halogène autre que I, un groupe alkyle en $C_1$ à $C_4$, un groupe alcoxy en $C_1$ à $C_4$ ou halogéno-alkyle en $C_1$ à $C_4$, et Hal représente un atome d'halogène ou d'hydrogène,
un reste thiényle ou furyle de formule (F)

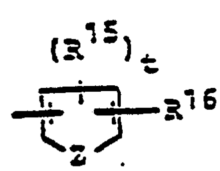

(F)

dans laquelle Z représente O ou S,
$R^{15}$ représente un atome d'hydrogène ou d'halogène, un groupe alkyle en $C_1$ à $C_4$, alcoxy en $C_1$ à $C_4$, halogéno-alkyle en $C_1$ à $C_4$, CN ou $NO_2$, et
$R^{16}$ représente un groupe benzyle, propargyle, allyle éventuellement substitués, ou bien $R^4$ et $R^5$, avec l'atome de carbone qui les relie, forment un reste indanyle, cyclopentenoyle ou cyclopenténylé, et
$R^6$ représente un atome d'hydrogène, un groupe alkyle en $C_1$ à $C_3$ ou phényle,
(à l'exclusion des composés de formule (I), dans laquelle X représente O,

$R^1$ représente un groupe phényle (pouvant être substitué par un groupe alkyle en $C_1$ à $C_5$), alcoxy en $C_1$ à $C_5$, alkylthio en $C_1$ à $C_5$, alkylènedioxy en $C_1$ à $C_5$, halogéno, nitro ou halogéno-alcoxy en $C_1$ à $C_5$,
$R^2$ et $R^3$ représentent, indépendamment l'un de l'autre, un groupe alkyle en $C_1$ à $C_3$,
$R^4$ représente un atome d'hydrogène, et
$R^5$ représente un reste (fluoro-4 phénoxy-3) phényle; pyridyle ou phényle, qui sont substitués en position 3 par un reste phénoxy (qui peut être substitué par un groupe alkyle en $C_1$ à $C_5$, alcoxy en $C_1$ à $C_5$, alkylthio en $C_1$ à $C_5$, alkylènedioxy en $C_1$ à $C_5$, halogéno, nitro ou halogéno-alcoxy en $C_1$ à $C_5$),
procédé caractérisé en ce que

a) pour obtenir des composés dans lesquels X représente $CH_2$, on fait réagir un silane de formule générale (II)

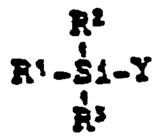 (II)

(dans laquelle Y représente un groupe partant nucléofuge, comme par exemple un atome d'halogène ou un groupe sulfonate) avec un réactif organométallique de formule générale (III)

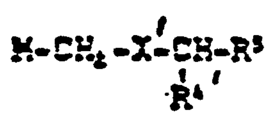 (III)

(dans laquelle M représente un équivalent de métal alcalin ou de métal alcalino-terreux,
X' représente un groupe méthylène, et $R^{4'}$, représente H, CN, F ou un groupe alkyle en $C_1$ à $C_4$), ou bien

b) on fait réagir un silane de formule générale (IV) ou (V)

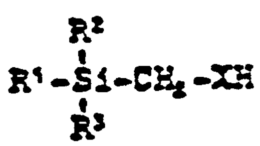 (IV) 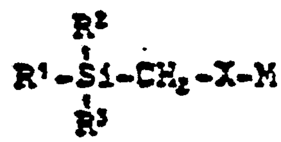 (V)

avec un agent d'alkylation de formule générale (VI)

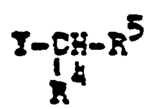 (VI)

en opérant éventuellement en présence d'une base, ou

c) on fait réagir un silane de formule générale (VII)

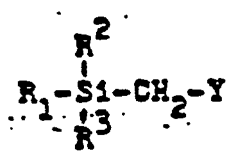 (VII)

avec un composé acide X–H de type (VIII)

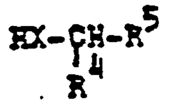 (VIII)

en présence d'une base, ou avec un composé organométallique de type (IX)

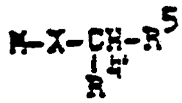 (IX)

ou

d) pour obtenir des composés dans lesquels X représente $CH_2$, on fait réagir un silane de formule générale (X)

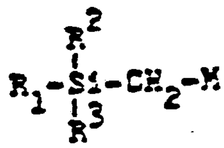 (X)

avec un composé du type (XI)

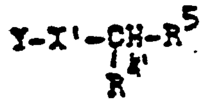 (XI)

ou bien

e) pour obtenir des composés dans lesquels X représente $CH_2$, on fait réagir un silane de formule générale (XII)

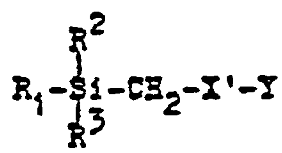 (XII)

avec un composé organométallique de formule générale (XIII)

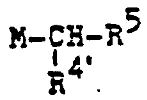 (XIII)

ou bien

f) on fait réagir un silane de formule générale (XIV)

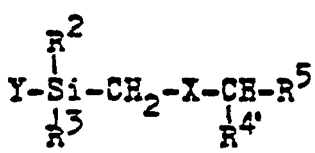 (XIV)

avec un réactif organométallique du type (XV)

$R^{1'}$–M (XV)

(dans lequel $R^{1'}$ a le sens de $R^1$, à l'exclusion des restes nitro, cyano, amino et des restes contenant un groupe carbonyle), ou bien

g) on fait réagir un silane de formule générale (XVI)

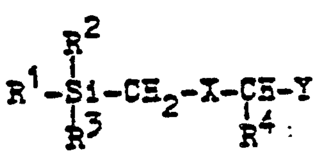 (XVI)

avec un réactif organométallique de type (XVII)

M–$R^5$ (XVII)

ou bien

h) pour obtenir des composés dans lesquels X représente $CH_2$, on fait réagir un silane de formule générale (XXX)

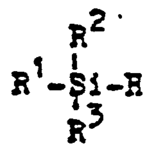

(XXX)

avec une oléfine de formule générale (XXXI)

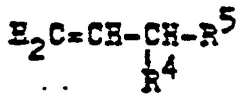

( XXXI )

en présence d'un composé complexe d'un élément du sous-groupe VIII du système ou Tableau Périodique, à titre de catalyseur, ou

i) pour obtenir des composés dans lesquels X est différent de $CH_2$, on fait réagir un silane de formule générale (XXXII)

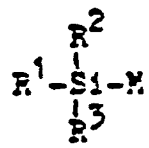

(XXXII)

avec un agent d'alkylation de formule générale (XXXIII).

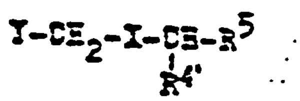

(XXXIII)

2. Procédé selon la revendication 1, caractérisé en ce que $R^2$ et $R^3$ représentent chacun un groupe alkyle en $C_1$ à $C_3$ ou bien ils forment ensemble une chaîne alkylène qui donne, avec l'atome de silicium voisin, un noyau tétragonal à hexagonal (4 à 6 chaînons), et
$R^4$ représente un atome d'hydrogène, un groupe cyano ou un groupe alkyle en $C_1$ à $C_4$.

3. Procédé selon la revendication 1 ou 2, caractérisé en ce que $R^1$ représente un reste phényle de formule (A), dans laquelle $R^7$, $R^8$ et $R^9$ représentent chacun un atome d'halogène, un groupe alkyle en $C_1$ à $C_4$, alcényle en $C_2$ à $C_6$, cycloalkyle en $C_3$ à $C_7$, alcoxy en $C_1$ à $C_5$ alcényloxy en $C_2$ à $C_4$, halogénoalkyle en $C_1$ à $C_4$ ou halogénoalcoxy en $C_1$ à $C_3$; $R^4$ représente un atome d'hydrogène et $R^5$ représente un reste de formule (C), dans laquelle $(R^{10})_p$ représente H ou un atome de fluor fixé en position 4, et $(R^{11})_q$ est fixé en position 3 du reste phényle, et représente un reste de formule

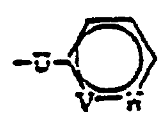

4. Pesticides, produits phytosanitaires ou produits pour lutter contre les parasites, caractérisés en ce qu'ils contiennent un composé de formule I selon la revendication 1.

5. Produits insecticides, caractérisés en ce qu'ils contiennent un composé de formule I selon les revendications 1, 2 ou 3.

6. Produits acaricides, caractérisés en ce qu'ils contiennent un composé de formule I selon les revendications 1, 2 ou 3.

7. Produits nématocides, caractérisés en ce qu'ils contiennent un composé de formule I selon les revendications 1, 2 ou 3.

8. Utilisation de composés de formule I selon les revendications 1, 2 ou 3, comme produits phytosanitaires, pesticides ou produits pour lutter contre les parasites.

9. Procédé pour combattre des insectes nuisibles, des acariens ou des nématodes, caractérisé en ce qu'on applique sur ces animaux, sur les surfaces, les plantes ou les substrats que ces animaux attaquent, une quantité efficace d'un composé de formule I.